# EUROPEAN PATENT APPLICATION

(11) **EP 4 491 649 A1**
(43) Date of publication of application: **15.01.2025**
(21) Application number: 23306175.3
(22) Date of filing: 10.07.2023
(51) Int. Cl.: C08G 18/58, C08G 18/81, C08L 75/16

(54) **DUAL CURABLE OLIGOMERS**

(71) Applicant: ARKEMA FRANCE, 92700 Colombes (FR)
(72) Inventor: The designation of the inventor has not yet been filed
(74) Representative: Arkema Patent

(57) **Abstract**

The present invention relates to dual curable oligomers that include a segment a) comprising at least one ethylenic unsaturation, a segment b) comprising at least one epoxy group, and a segment c) comprising at least one urethane bond, wherein segments a) and b) are connected to one another by segment c). The invention also relates to curable composition comprising such dual curable oligomers and their use as adhesives, inks, masks for printing, coloring systems, 3D printing resins, sealants, coatings, among other potential applications.

## Description

### FIELD OF THE INVENTION

This invention relates to dual curable oligomers that include at least one segment comprising an unsaturation and at least one segment comprising an epoxy group, wherein both segments are linked by a urethane bond. The invention also relates to curable composition comprising such dual curable oligomers and their use as adhesives, inks, masks for printing, coloring systems, 3D printing resins, sealants, coatings, among other potential applications.

### BACKGROUND

Dual curable systems are valuable to produce fast photocuring of materials, allowing to pre-fix the material dimension shape, reduce the risk of uncured components migration, and avoid flow out of selected area.

One of the dual curable systems described in the prior art is based on the combination of two distinct resins, i.e., epoxy resins with acrylate resins. Notably, CN 1159625 C (LIANZHI SCIENCE AND TECHNOLOGY Co Ltd) discloses formulations containing epoxy resins and acrylate resins as a mixture to achieve dual curable performance. These systems are, however, not satisfactory due to the poor interface between the photocured acrylate resin and the thermally cured epoxy, in addition to the lack of homogeneity of the cured macrostructure.

Other systems are based on the use of dual functional components containing both epoxy and acrylate functional groups. EP 3548541 B1 (3M Innovative Properties Company) describes dual functional monomers comprising both epoxy and alkylene groups which provides access to both thiol-epoxy and thiol-ene polymer-forming reactions. The monomers may be prepared by alkylation of a polyol (or polyamine) with an α-halo ω-olefin, such as an allyl halide to provide the ene groups, and alkylation by a glycidyl compound to provide the epoxy groups. Alternatively, the ene groups may be provided by reaction of a polyol with a compound having an isocyanate group and a terminal alkene group, and reaction of the remaining hydroxy groups of the polyol with an isocyanate compound having epoxy groups. This document offers a way to prepare multi-functional photocurable monomers. However, it is based on components which are not commercially available, which reduces its practical and industrial feasibility.

US 3,873,638 (Minnesota Mining and Manufacturing Company) describes a heat-hardenable, tacky adhesive. According to certain embodiments, the adhesive is based on a dual curing system comprising both unsaturated and epoxy groups. Such dual curing system is prepared by reacting adjusted molar ratios of methacrylic acid and bisphenol-A diglycidyl ether (containing two epoxy functional groups), in the presence of a combination of triphenyl stibine and triphenylphosphine (TPP) as catalysts. However, the presence of remaining TPP in the formulation leads to problems with shelf-life stability due to premature curing reactions. This negatively impacts the storage of the dual curable resin, as the remaining TPP acts as an effective catalyst, causing undesired gelation, and even crosslinking during processing, packaging, and shipping.

One of the objects of the present invention is to provide a dual curable oligomer which may be efficiently cured when exposed to radiation and/or heat, and presents improved performance in terms of shelf-life stability. Another object of the present invention is to provide a process for preparing such dual curable oligomer based on components which are commercially and industrially available. Another object of the present invention is to provide a curable composition which, when cured, presents mechanical properties which are well-suited to withstand environmental stresses such as high temperature and vibrations.

### BRIEF SUMMARY

In a first aspect, the present invention provides a dual curable oligomer, comprising:
a) a segment comprising at least one ethylenic unsaturation;
b) a segment comprising at least one epoxy group;
c) a segment comprising at least one urethane bond;
wherein segments a) and b) are connected to one another by segment c).

The segment a) may have the structure of Formula (A1) or (A2): 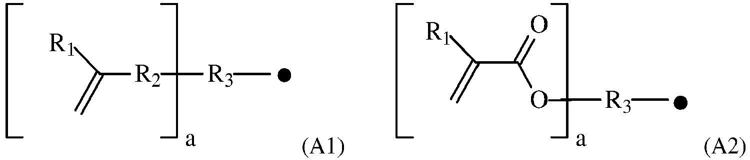 wherein:
- a is at least 1;
- each R₁ is independently H or CH₃;
- each R₂ is independently selected from direct bond, *-C(=O)-O-, *-C(=O)-NH-, -O- and ^{∗}-CH₂-O-, the * representing the point of attachment to the carbon-carbon double bond;
- R₃ is a (a+1)valent linker; and
- the symbol • represents the point of attachment to segment c).

The segment b) may have the structure of Formula (B1): 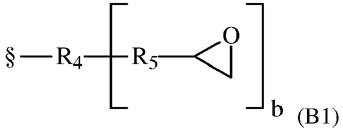 wherein:
- b is at least 1;
- R₄ is a (b+1)valent linker;
- each R₅ is independently selected from direct bond, -O-CH₂-# and -C(=O)-O-CH₂-#, preferably -O-CH₂-#;
- the symbol # represents the point of attachment to the epoxide ring; and
- the symbol § represents the point of attachment to segment c).

The segment c) may have the structure of Formula (C1): 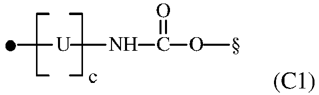 wherein:
- c is 0 or 1;
- U corresponds to Formula (U1) or (U2): 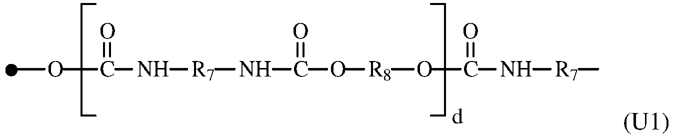 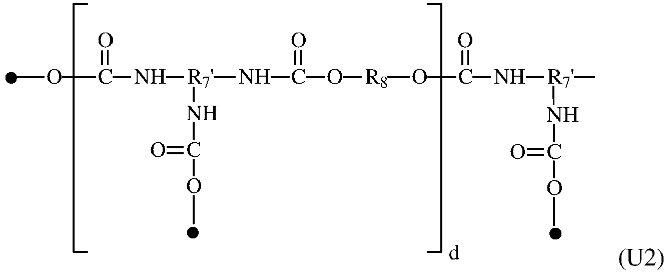 wherein:
- each R₇ is independently the residue of a diisocyanate;
- each R₇' is independently the residue of a triisocyanate;
- each R₈ is independently the residue of a diol;
- each d is independently 0 or an integer from 1 to 10;
- the symbol • represents a point of attachment to a segment a);
- the symbol § represents the point of attachment to segment b).

In a second aspect, the present invention provides a method for preparing the dual curable oligomer described herein, comprising the step of:
- reacting an ethylenically unsaturated monoisocyanate component and an epoxy monoalcohol component; or
- reacting an ethylenically unsaturated monoalcohol component, a polyisocyanate component, an epoxy monoalcohol component and optionally a diol component.

In a third aspect, the present invention provides a curable composition comprising at least one dual curable oligomer described herein.

In a fourth aspect, the present invention provides the use of the curable composition of the present invention as an adhesive, an ink, a mask for printing, a coloring system, a 3D printing resin, a sealant or a coating.

In a fifth aspect, the present invention provides a method of making a cured composition, comprising curing the curable composition of the invention, for example by exposing the curable composition to UV/EB radiation and heat.

In a sixth aspect, the present invention a cured composition obtained by curing the curable composition of the invention.

### DETAILED DESCRIPTION

In the present application:
- the expression "comprised between ... and ..." should be understood as including the limits;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

### Definitions

The term « residue » as used herein means the group of atoms left in a product after removal of the functional group(s) that react(s) with another compound to form linkages. For example, the residue of a diol having structure HO-R₈-OH would be understood to be R₈.

The term « C1-C6 » as used herein refers to the number of carbon atoms comprised in a specific group or linker. For example, a C1-C6 alkyl is an alkyl comprising from 1 to 6 carbon atoms.

The term « aliphatic compound, group or linker » as used herein means a non-aromatic compound, group or linker. Compounds, groups or linkers comprising a non-aromatic ring (i.e. a cycloaliphatic ring) are encompassed by the term aliphatic compound, group or linker. It may be linear or branched, saturated or unsaturated, cyclic or acyclic. It may be substituted by one or more groups, for example selected from alkyl, hydroxyl, halogen (Br, Cl, I), isocyanate, carbonyl (=O), amine, carboxylic acid, -C(=O)-OR', -C(=O)-O-C(=O)-R', each R' being independently a C1-C6 alkyl. It may comprise one or more bonds selected from ether, ester, amide, urethane, urea, carbonate, organosiloxane, and mixtures thereof.

The term « aromatic compound, group or linker » as used herein means a compound, group or linker comprising at least one aromatic ring (i.e. a ring respecting Hückel's aromaticity rule, such as a phenyl), in particular one, two or three, preferably one or two, aromatic rings. Araliphatic compounds, groups or linkers, i.e. comprising both an aromatic moiety and a non-aromatic moiety, are encompassed by the term aromatic compound, group or linker. It may be substituted by one or more groups as defined for the term « aliphatic compound, group or linker ». It may comprise one or more bonds as defined for the term « aliphatic compound, group or linker ».

The term « acyclic compound, group or linker » as used herein means a compound, group or linker that does not comprise any rings.

The term « cyclic compound, group or linker » as used herein means a compound, group or linker that comprises at least one aromatic or non-aromatic ring.

The term « saturated compound, group or linker » as used herein means a compound, group or linker that does not comprise any double or triple carbon-carbon bonds.

The term « unsaturated compound, group or linker » as used herein means a compound, group or linker that comprises one or more double or triple carbon-carbon bonds, in particular one or more double carbon-carbon bonds.

The term « hydrocarbon group or linker » as used herein means a group or linker comprising carbon and hydrogen atoms. Unless mentioned otherwise, a hydrocarbon linker may not comprise atoms other than carbon and hydrogen.

The term « linker » as used herein means a plurivalent group comprising at least one carbon atom and/or at least one heteroatom such as O, N or S. A linker may connect at least two moieties of a compound together, in particular 2 to 6 moieties of a compound together. For example, a linker that connects two moieties of a compound together is referred to as a divalent linker, a linker that connects three moieties of a compound together is referred to as a trivalent linker, etc....

The term « polyether linker » as used herein means a linker comprising one or more ether bonds.

The term « polyester linker » as used herein means a linker comprising one or more ester bonds.

The term « polycarbonate linker » as used herein means a linker comprising one or more carbonate bonds.

The term « polyorganosiloxane linker » as used herein means a linker comprising one or more organosiloxane bonds.

The term « polycaprolactone linker » as used herein means a linker comprising one or more units derived from the ring-opening of ε-caprolactone, i.e. one or more units of formula -O-(C=O)-(CH₂)₅-. A polycaprolactone linker is a specific example of a polyester linker.

The term « polydiene linker » as used herein means a linker derived from the polymerization of a polydiene, such as butadiene or isoprene. A polydiene linker also encompasses fully or partially hydrogenated polydiene linkers obtained by the hydrogenation of a polydiene linker.

The term « isocyanurate linker » as used herein means a linker comprising an isocyanurate moiety, i.e. a moiety according to the following formula:

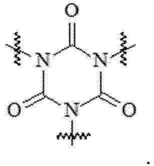

The term « (hetero)hydrocarbyl group » as used herein refers to a hydrocarbon group, consisting of hydrogen and carbon, which may be saturated or unsaturated, such as (hetero)alkyl, (hetero)alkenyl, (hetero)alkynyl, (hetero)aryl or (hetero)cyclyl, optionally comprising one or several heteroatoms, such as O, N and S. The (hetero)hydrocarbyl group may contain functional groups such as urethane, ester, and amide. These functional groups may be in-chain or terminal. The (hetero)hydrocarbyl group may contain 1 to 100 carbon atoms, 1 to 50 carbon atoms, 1 to 30 carbon atoms or 1 to 20 carbon atoms.

The term « alkyl » as used herein means a monovalent saturated acyclic hydrocarbon group of formula -CₙH₂ₙ₊₁ wherein n is 1 to 100. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term « heteroatom-containing alkyl » as used herein means an alkyl comprising one or more heteroatoms independently selected from O, N or S. For example, they can include functional groups such as urethane, ester, amide, ether, thioether and alkyl-amines. The heteroatoms can be oxidized to form moieties such as, but not limited to, -C(O)-, -S(O)- and -S(O)₂-. The heteroatom portion can replace a hydrogen of the alkyl group to form a hydroxy, thio, or amino group. Alternatively, the heteroatom portion can be the connecting atom, or be inserted between two carbon atoms.

The term « cycloalkyl » as used herein means a monovalent saturated hydrocarbon group having 1 to 3 rings, including monocycloalkyl, bicycloalkyl and tricycloalkyl, having 3 to 20 carbons enabling to form a ring, preferably 3 to 10 carbons. Examples of cycloalkyl groups include cyclopropyl, cyclobutyl, cyclopentyl, cyclohexyl, cycloheptyl, cyclooctyl, cyclodecyl, cyclododecyl and isobornyl.

The term « heterocycloalkyl » as used herein means a cycloalkyl having at least one ring atom that is a heteroatom selected from O, N or S.

The term « alkenyl » as used herein means a monovalent acyclic hydrocarbon group comprising at least one carbon-carbon double bond. An alkenyl may be linear or branched. Examples of alkenyls include vinyl, propenyl, butenyl, 2-methylbutenyl.

The term « alkynyl » as used herein means a monovalent acyclic hydrocarbon group comprising at least one carbon-carbon triple bond. An alkynyl may be linear or branched. Examples of alkynyls include ethynyl, propynyl, butynyl, and 3-methylbutynyl.

The term « aryl » as used herein means an optionally substituted aromatic ring system having any suitable number of carbon ring atoms and any suitable number of rings. Aryl groups may include a saturated linear, branched aliphatic hydrocarbyl as well. Aryl groups can include any suitable number of carbon ring atoms, such as C6, C7, C8, C9, C10, C11, C12, C13, C14, C15 or C16, as well as C6-8, C6-12, or C6-20. The aryl may contain a single ring (i.e. phenyl) or more than one ring wherein at least one ring is aromatic. Aryl groups can be monocyclic, fused to form bicyclic (e.g., benzocyclohexyl) or tricyclic groups, or linked by a bond to form a biaryl group. Examples include phenyl, benzyl, naphtyl, biphenyl, phenanthrenyl and naphthacenyl. Araliphatic groups used herein typically comprise at least one aromatic moiety (for example one, two or three aromatic rings, optionally substituted) and at least one non-aromatic moiety (for example a C1-20 (hetero)alkyl group or a C1-20 (hetero)alkenyl group).

The term « heteroaryl » as used herein means an aryl having at least one ring atom that is a heteroatom selected from O, N or S.

The term « aralkyl » as used herein means an aryl substituted by an alkyl group. An example of an aralkyl group is tolyl.

The term « alkaryl » as used herein means an alkyl substituted by an aryl group. An example of an alkaryl group is benzyl (-CH₂-Phenyl).

The term « halogen » as used herein means an atom selected from Cl, Br, F and I.

The term « alkoxy » as used herein means a group of formula -O-alkyl, wherein the alkyl is as defined above.

The term « aryloxy » as used herein means a group of formula -O-aryl, wherein the aryl is as defined above.

The term « thioalkyl » as used herein means a group of formula -S-alkyl, wherein the alkyl is as defined above.

The term « thioaryl » as used herein means a group of formula -S-aryl, wherein the aryl is as defined above.

The term « aralkyloxy » as used herein means a group of formula -O-aralkyl, wherein the aralkyl is as defined above.

The term « alkaryloxy » as used herein means a group of formula -O-alkaryl, wherein the alkaryl is as defined above.

The term « alkylene » as used herein means a plurivalent linker derived from an alkane of formula CₘH₂ₘ+₂, wherein m is 1 to 100, by removing one hydrogen atom at each point of attachment of the linker. An alkylene may be divalent, trivalent, tetravalent or have even higher valencies.

The term « heteroatom-containing alkylene » as used herein means an alkylene comprising one or more heteroatoms independently selected from O, N or S. For example, they can include functional groups such as urethane, ester, amide, ether, thioether and alkyl-amines. The heteroatoms can be oxidized to form moieties such as, but not limited to, -C(O) -, -S(O) - and -S(O)₂-. The heteroatom portion can replace a hydrogen of the alkyl group to form a hydroxy, thio, or amino group. Alternatively, the heteroatom portion can be the connecting atom, or be inserted between two carbon atoms.

The term « oxyalkylene » as used herein means a group of formula -O-alkylene-.

The term « alkoxylated alkylene » as used herein means a group of formula -(alkylene-O)ₙ₃₉-alkylene-(O-alkylene)ₙ₄₀ wherein n₃₉ and n₄₀ are independently 0 to 100 with the proviso that at least one of n₃₉ and n₄₀ is not 0.

The term « cycloalkylene » as used herein means a plurivalent linker comprising a non-aromatic ring. Examples of cycloalkylene groups include cyclopentylene, cyclohexylene and cyclohexylenedimethylene (i.e -CH₂-Cy-CH₂, wherein Cy is a cyclohexylene).

The term « heterocycloalkylene » as used herein means a plurivalent linker comprising a non-aromatic ring having at least one ring atom that is a heteroatom selected from O, N or S.

The term « arylene » as used herein means a plurivalent linker comprising at least one aromatic ring.

The term « heteroarylene » as used herein means a plurivalent linker comprising an aromatic ring having at least one ring atom that is a heteroatom selected from O, N or S.

The term « alkylamino » as used herein means an alkyl substituted by at least one amino group.

The term « alkylthiol » as used herein means an alkyl substituted by at least one thiol group.

The term « hydroxyalkyl » as used herein means an alkyl substituted by at least one hydroxy group.

The term « haloalkyl » as used herein means an alkyl substituted by at least one halogen.

The term « perfluoroalkyl » as used herein means an alkyl wherein all of the hydrogen atoms are replaced with fluorine atoms.

The term « polyol » as used herein means a compound comprising at least two hydroxyl groups.

The term « residue of a polyol » as used herein means the moiety that is obtained by removing the hydroxy groups of a polyol.

Alkyl, alkenyl, alkynyl, cycloalkyl, aryl groups can be substituted or unsubstituted. For example, they can be substituted with one or more groups selected from halo, hydroxy, amino, alkylamino, amido, acyl, nitro, cyano, sulfonyl, sulfonic and alkoxy.

The term « alkoxy » used herein refers to a cyclic or non-cyclic alkyl having carbon atoms linked by an oxygen bridge. Therefore, "alkoxy" includes the definitions of the alkyl and the cycloalkyl.

The term « hydroxy » used herein refers to -OH.

The term « NCO group » used herein refers to -N=C=O.

A blocked NCO group refers to a moiety that is capable of generating a NCO group *in situ,* for example by heating. A blocked NCO group may correspond to -NH-C(O)-R, wherein the R group (sometimes called blocking group) is a (hetero)hydrocarbyl group.

The term « amino » used herein refers to a moiety -NRR'-, wherein each R and R' group is H or alkyl. For example, amino may be -NH₂.

The term « carboxyl » used herein refers to -COOH.

The term « acyl » used herein refers to a moiety -C(O)R, wherein R is alkyl.

The term « direct bond » used herein means a covalent bond.

The term « ester bond » used herein means a -C(=O)-O- or -O-C(=O)- bond.

The term « ether bond » used herein means a -O- bond.

The term « organosiloxane bond » used herein means a -Si(R_{c1})₂-O- bond, wherein R_{c1} is an organic group, in particular an organic group selected from alkyl, alkoxy and aryl.

The term « carbonate bond » used herein means a -O-C(=O)-O- bond.

The term « urethane or carbamate bond » used herein means a -NH-C(=O)-O- or -O-C(=O)-NH-bond.

The term « polyisocyanate » used herein means a compound comprising at least two isocyanate groups.

The term « optionally substituted compound, group or linker » used herein means a compound, group or linker optionally substituted by one or more groups selected from halogen, alkyl, heteroatom-containing alkyl, cycloalkyl, heterocycloalkyl, aryl, heteroaryl, alkoxy, aryloxy, aralkyl, alkaryl, aralkyloxy, alkaryloxy, haloalkyl, -OH, -SH, hydroxyalkyl, thioalkyl, thioaryl, alkylthiol, amino, alkylamino, isocyanate, nitrile, oxo (=O), -C(=O)-R', -O-C(=O)-R', -C(=O)-OR', -C(=O)-N(R')₂, - NR'-C(=O)-R', -C(=O)-O-C(=O)-R' and -SO₂-N(R')₂, each R' being independently H or an optionally substituted group selected from alkyl, aryl and alkylaryl.

### Dual curable oligomer

The present invention relates to a dual curable oligomer. A dual curable oligomer is an oligomer that is capable of curing with two distinct curing mechanisms, for example by free radical polymerization and cationic polymerization. Such an oligomer comprises in its backbone at least two moieties which having distinct curing mechanisms, for example a moiety that cures by free radical polymerization and a moiety that cures by cationic polymerization.

The dual curable oligomer of the invention comprises a) a segment comprising at least one ethylenic unsaturation; b) a segment comprising at least one epoxy group; c) a segment comprising at least one urethane bond; wherein segments a) and b) are connected to one another by segment c). Based on these functionalities, the dual curable oligomer of the invention may be qualified as an ethylenically unsaturated epoxy-urethane oligomer, in particular a (meth)acrylated epoxy-urethane oligomer.

More precisely, the dual curable oligomer of the invention comprises the following functional groups in the same molecule:
- at least one ethylenic unsaturation, i.e., at least one polymerizable carbon-carbon double bond, in particular at least one carbon-carbon double bond capable of participating in a free radical polymerization wherein at least one of the carbon atoms of the double bond becomes covalently bonded to another atom, in particular a carbon atom, in a second molecule;
- at least one epoxy group, capable of participating in a cationic polymerization wherein at least one of the carbon atoms of the epoxide ring becomes covalently bonded to another atom, in particular a nitrogen atom or an oxygen atom, in a third molecule; and
- at least one urethane bond, i.e. at least one -NH-C(=O)-O- bond.

The dual curable oligomer of the present invention may be efficiently cured when exposed to actinic radiation (such as UV, near-UV, visible, infrared, near-infrared and/or electron beam radiation) and/or heat, optionally in the presence of a free radical initiator and/or a cationic initiator.

Such polymerization or curing reactions may result in the incorporation of the dual curable oligomer of the invention in a polymerized matrix or polymeric chain.

The dual curable oligomer of the present invention may be efficiently cured when exposed to radiation and/or heat and presents improved performance in terms of shelf-life stability. The cured composition obtained from the curable composition incorporating such oligomer presents mechanical properties well-suited to withstand environmental stresses such as high temperature and vibrations.

### Segment a)

The dual curable oligomer of the invention comprises a segment comprising at least one ethylenic unsaturation, also referred to as segment a). Segment a) is connected to segment c). Segment a) is distinct from segment b) and segment c). Accordingly, segment a) may not comprise any epoxy group unsaturation and segment a) may not comprise any urethane bond. The dual curable oligomer of the invention may comprise more than one segment a). When this is the case, each segment a) is connected to segment c).

The at least one ethylenic unsaturation (i.e., carbon-carbon double bond) of segment a) may be present as part of an α,β-unsaturated carbonyl moiety, e.g., an α,β-unsaturated ester moiety such as an acrylate functional group (-O-C(O)-CH=CH₂) or a methacrylate functional group (-O-C(O)-C(CH₃)=CH₂); an α,β-unsaturated amide moiety such as an acrylamide functional group (-NH-C(O)-CH=CH₂) or a methacrylamide functional group (-NH-C(O)-C(CH₃)=CH₂). A carbon-carbon double bond may also be present in segment a) in the form of a vinyl group (-CH=CH₂), a vinyl ether group (-O-CH=CH₂), an allyl group (-CH₂-CH=CH₂) or an allyl ether group (-O-CH₂-CH=CH₂).

In particular, segment a) may comprise at least one (meth)acrylate group, for example 1, 2, 3, 4, 5 or 6 (meth)acrylate groups. As used herein, the term (meth)acrylate group refers indifferently to an acrylate functional group or a methacrylate functional group. Segment a) may comprise a mixture of acrylate functional groups and methacrylate functional groups.

In particular, segment a) may have the structure of Formula (A1): 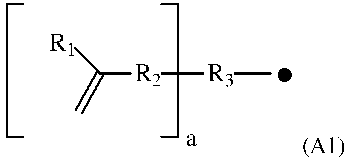 wherein:
- a is at least 1;
- each R₁ is independently H or CH₃;
- each R₂ is independently selected from direct bond, *-C(=O)-O-, *-C(=O)-NH-, -O- and ^{∗}-CH₂-O-, the * representing the point of attachment to the carbon-carbon double bond;
- R₃ is a (a+1)valent linker; and
- the symbol • represents the point of attachment to segment c).

More particularly, segment a) may have the structure of Formula (A2): 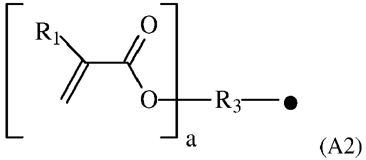 wherein a, R₁, R₃ and the symbol • are as defined above. In such embodiments, the dual curable oligomer comprises at least one acrylate functional group (-O-C(O)-CH=CH₂) and/or at least one methacrylate functional group (-O-C(O)-C(CH₃)=CH₂).

In the segment of Formula (A1) or (A2), a is at least 1. In other words, a ≥ 1. In particular, a may be equal to 1, 2, 3, 4, 5 or 6, preferably 1, 2 or 3. a may be an integer or a decimal number, as the dual curable oligomer may be a mixture of oligomers having distinct a numbers in various proportions.

In the segment of Formula (A1) or (A2), R₃ is a (a+1)valent linker. In particular, R₃ may be a (a+1)valent linker selected from an aliphatic, aromatic or araliphatic hydrocarbon linker, a polyether linker, a polyester linker, a polycarbonate linker, a polyorganosiloxane linker, a polydiene linker, an isocyanurate linker, and combinations thereof.

More particularly, R₃ may be a (a+1)valent linker selected from an alkylene, an alkoxylated alkylene, a polycaprolactone linker and combinations thereof.

In one embodiment, R₃ may be a divalent linker selected from one of the following Formulae (1) to (5):

-(CR₂₂R'₂₂)ₘ- (1)

-[(CR₂₃R'₂₃)ₙ-O]ₒ-(CR₂₃R'₂₃)ₙ- (2)

-[(CR₂₄R'₂₄)ₚ-O]_{q}-(CR₂₅R'₂₅)ᵣ-[O-(CR₂₆R'₂₆)_{p'}]_{q'}- (3)

-[(CR₂₇R'₂₇)ₛ-C(=O)O]ₜ-(CR₂₈R'₂₈)ᵤ-^{∗} (4)

-[(CR₂₉R'₂₉)ᵥ-O-C(=O)-(CR₃₀R'₃₀)_{w}-C(=O)-O]ₓ-(CR₂₉R'₂₉)ᵥ- (5)

wherein:
- R₂₂, R'₂₂, R₂₅, R'₂₅, R₂₉, R'₂₉, R₃₀ and R'₃₀ are independently H or alkyl;
- R₂₃, R'₂₃, R₂₄, R'₂₄, R₂₆, R'₂₆, R₂₇, R'₂₇, R₂₈ and R'₂₈ are independently H or methyl;
- m is 2 to 50;
- n, p and p' are independently 2 to 4;
- o is 1 to 20;
- q and q' are independently 0 to 20 with the proviso that at least one of q and q' is not 0;
- r is 2 to 20;
- s is 3 to 12;
- t is 1 to 20;
- u is 2 to 8;
- v is 2 to 20;
- w is 2 to 30;
- x is 1 to 20;
- the symbol * represents the point of attachment to the (meth)acrylate group.

In particular, R₃ may be a divalent linker selected from an alkylene such as 1,2-ethylene, 1,2- or 1,3-propylene, 1,2-, 1,3- or 1,4-butylene, 1,5-pentylene, 1,6-hexylene, 1,8-octylene, 1,9-nonylene, 1,10-decylene, 1,12-dodecylene, 1,18-octadecylene, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes; an esterified derivative of the aforementioned alkylenes; a residue of a di-, tri-, tetra- or polyoxyalkylene (without the OH groups) such as a residue of di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol); and a residue of a polyester polyol (without the OH groups).

In another embodiment, R₃ may be a trivalent linker according to one of the following Formulae (11), (12), (13), (19) and (20), or a tetravalent linker according to one of the following Formulae (14) and (15): 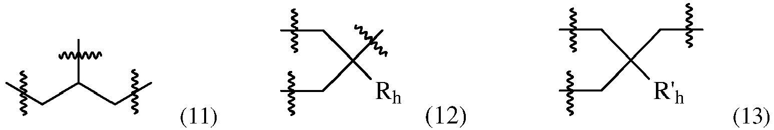 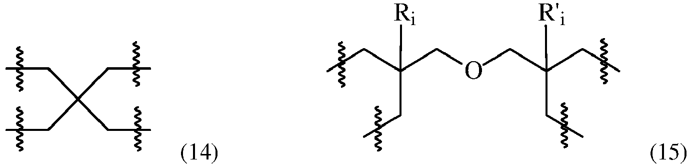 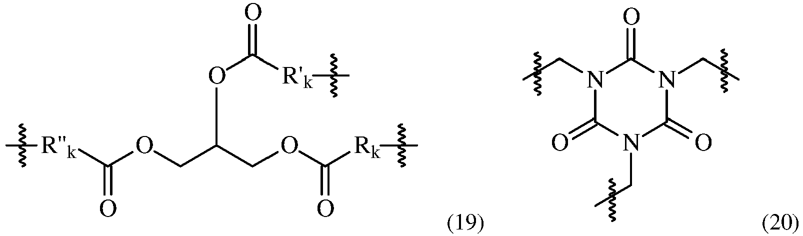 wherein:
each Rₕ, R'ₕ, Rᵢ and R'ᵢ is independently H or alkyl; and
Rₖ, R'ₖ and R"ₖ are independently alkylene.

In a preferred embodiment, segment a) corresponds one of the following structures (A3) to (A5): 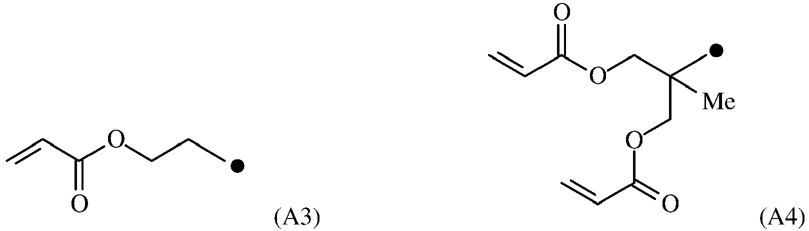 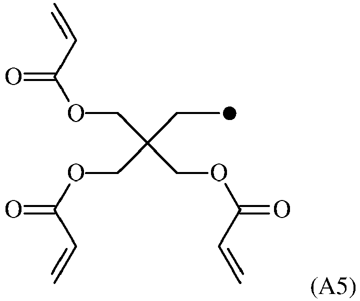 wherein the symbol • represents the point of attachment to segment c).

The total amount of segment a) in the dual curable oligomer of the invention may represent from 5 to 60 wt.%, in particular from 10 to 50 wt.%, more particularly from 15 to 40 wt.%, of the total weight of the dual curable oligomer.

### Segment b)

The dual curable oligomer of the invention comprises a segment comprising at least one epoxy group, also referred to as segment b). Segment b) is connected to segment c). Segment b) is distinct from segment a) and segment c). Accordingly, segment b) may not comprise any ethylenic unsaturation and segment b) may not comprise any urethane bond. The dual curable oligomer of the invention may comprise a single segment b).

The epoxy group of segment b) may be selected from a glycidyl ether group, a glycidyl ester group and an epoxy group which is not part of a glycidyl ether group or a glycidyl ester group. Segment b) may comprise a mixture of glycidyl ether groups and glycidyl ester groups.

As used herein, the term "glycidyl ether group" means a group of Formula (21):

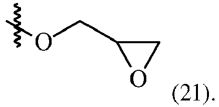

As used herein, the term "glycidyl ester group" means a group of Formula (22):

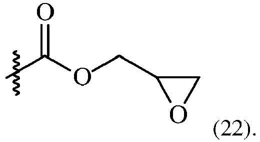

In particular, segment b) may have the structure of Formula (B1): 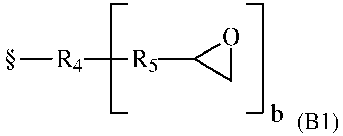 wherein:
- b is at least 1;
- R₄ is a (b+1)valent linker;
- each R₅ is independently selected from direct bond, -O-CH₂-# and -C(=O)-O-CH₂-#, preferably -O-CH₂-#;
- the symbol # represents the point of attachment to the epoxide ring;
- the symbol § represents the point of attachment to segment c).

In Formula (B1), b is at least 1. In particular, b may be 1, 2, 3 or 4, more particularly b is 2 or 3, even more particularly b is 2.

In Formula (B1), R₄ is a (b+1)valent linker. In particular, R₄ may be a (b+1)valent linker selected from the group consisting of alkylene, heteroatom-containing alkylene, cycloalkylene, heterocycloalkylene, arylene, heteroarylene, and combinations thereof. More particularly, R₄ may be a (b+1)valent linker selected from alkylene, heteroatom-containing alkylene, cycloalkylene, arylene and combinations thereof.

In Formula (B1), each R₅ is independently selected from direct bond, -O-CH₂-# and -C(=O)-O-CH₂-#. When R₅ is -O-CH₂-#, segment b) comprises a glycidyl ether group. When R₅ is -C(=O)-O-CH₂-#, segment b) comprises a glycidyl ester group. When R₅ is a direct bond, segment b) comprises an epoxy group which is not part of a glycidyl ether group or a glycidyl ester group. In particular, each R₅ may be -O-CH₂-#.

More particularly, segment b) may have the structure of Formulae (B2), (B3), (B4) or (B5): 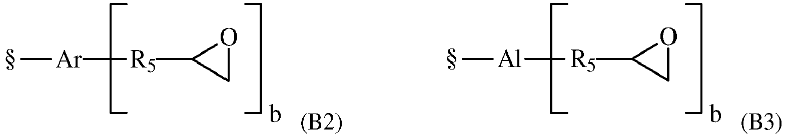 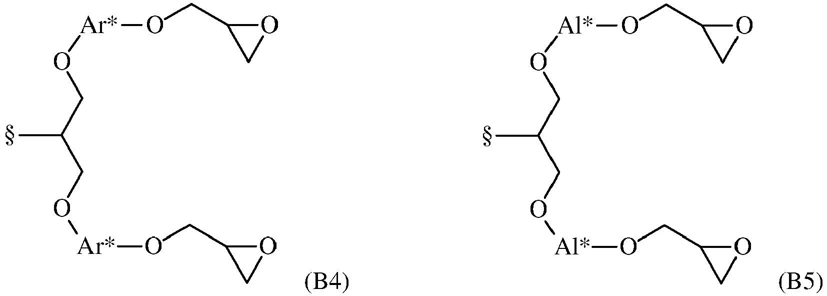 wherein:
- R₅, b and symbol § are as defined above;
- Ar is a (b+1)valent aromatic linker;
- Al is a (b+1)valent aliphatic linker;
- Ar^{∗} is a divalent aromatic linker;
- Al^{∗} is a divalent aliphatic linker.

In Formula (B2), Ar is an aromatic linker. In particular, Ar may comprise at least one arylene moiety, more particularly at least one optionally substituted phenylene moiety, even more particularly a phenylene moiety which is optionally substituted with one or more groups selected from alkyl, cycloalkyl, aryl and a halogen atom.

For example, Ar may correspond to one of the following Formulae (6) to (15): 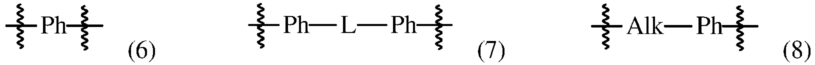 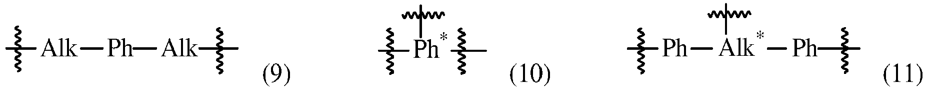 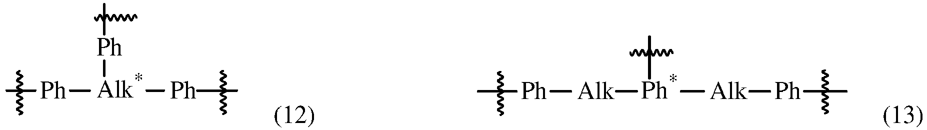 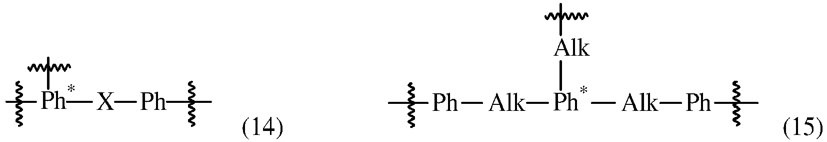 wherein:
- each Ph is independently an optionally substituted divalent phenylene, preferably a divalent phenylene which is optionally substituted with one or more groups selected from alkyl, cycloalkyl, aryl and a halogen atom;
- each Ph* is independently an optionally substituted trivalent phenylene, preferably a trivalent phenylene which is optionally substituted with one or more groups selected from alkyl, cycloalkyl, aryl and a halogen atom;
- each Alk is independently a divalent alkylene or heteroatom-containing alkylene;
- each Alk* is independently a trivalent alkylene or heteroatom-containing alkylene;
- L is selected from direct bond, -O-, -S-, -SO-, -SO₂-, -C(=O)-, C(=CCl₂)-, Alk, -CR'₁R'₂-, -C(=O)-O-Alk-O-C(=O)-, -CR'₃R'₄-Ph-CR'₅R'₆- and combinations thereof;
   wherein:
   - Alk and Ph are as defined above;
   - R'₁ and R'₂ are independently selected from H, alkyl, cycloalkyl, aryl, haloalkyl and perfluoroalkyl, or R'₁ and R'₂, with the carbon atoms to which they are attached, may form a ring;
   - R'₃, R'₄, R'₅ and R'₆ are independently selected from H, alkyl, cycloalkyl, aryl, haloalkyl and perfluoroalkyl.

In particular, Ar may be represented by one of the following Formulae (16) to (21): 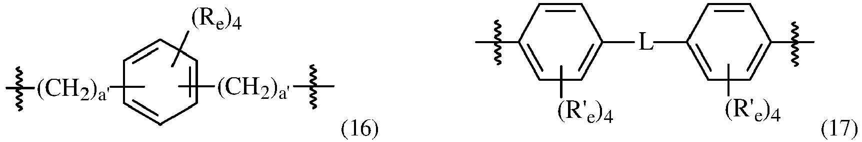 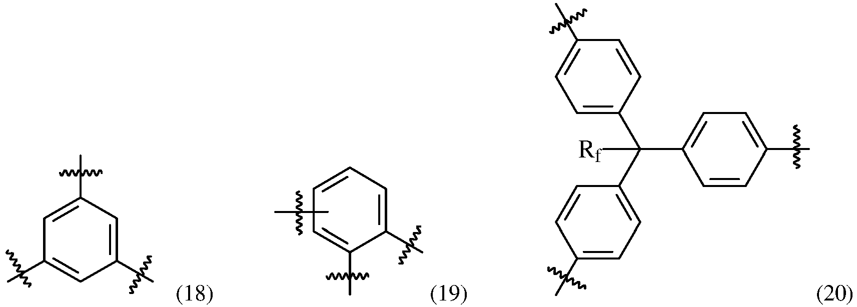 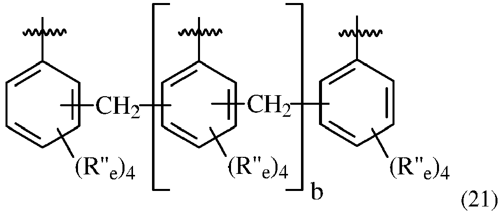 wherein :
- L is as defined above;
- Rₑ, R'ₑ and R"ₑ are independently selected from H, alkyl, cycloalkyl, aryl, alkaryl, aralkyl, alkoxy, -C(=O)O-Alkyl and a halogen atom;
- R_{f} is H or methyl;
- each a' and c' is independently 0 or 1;
- b' is 1 or 2.

In particular, Ar may be represented by one of Formulae (16) or (17) as defined above.

More particularly, Ar may correspond to the residue of an optionally substituted aromatic polyol Ar_{OH} (without the OH groups). The aromatic polyol may be optionally substituted with one or more groups selected from alkyl, cycloalkyl, aryl and a halogen atom. For example, Ar may be the residue of an optionally substituted aromatic polyol Aron comprising 1 to 3, preferably 1 or 2, aromatic rings. In particular, Ar may be selected from an optionally substituted aromatic diol, such as pyrocatechol, resorcinol, cardol, (hydroxymethyl)phenol, benzenedimethanol, a bisphenol (such as bisphenol A, bisphenol AP, bisphenol AF, bisphenol B, bisphenol BP, bisphenol C, bisphenol C2, bisphenol F, bisphenol G, bisphenol M, bisphenol S, bisphenol P, bisphenol PH, bisphenol TMC, bisphenol Z, dinitrobisphenol A or tetrabromobisphenol A) or a biphenyl diol; an optionally substituted aromatic triol, such as phloroglucinol, pyrogallol, tris(hydroxyphenyl)methane or tris(hydroxyphenyl)ethane; a condensation product of an optionally substituted aromatic alcohol and formaldehyde (also referred to as novolak); an alkoxylated derivative of the aforementioned polyols; and an esterified derivative of the aforementioned polyols.

In Formula (B3), Al is an aliphatic linker. In particular, Al may be an aliphatic linker selected from alkylene, heteroatom-containing alkylene, cycloalkylene, heterocycloalkylene, and combinations thereof.

For example, Al may be represented by one of the following Formulae (22) to (29): 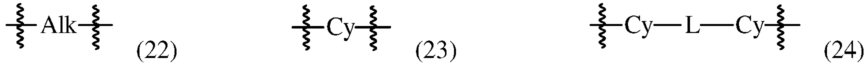 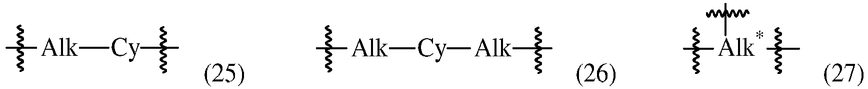 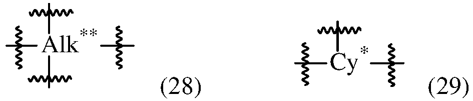 wherein
- L is as defined above for linker Ar;
- each Cy is independently an optionally substituted divalent cycloalkylene or heterocycloalkylene, preferably a divalent cycloalkylene or heterocycloalkylene which is optionally substituted with one or more groups selected from alkyl, cycloalkyl, aryl and a halogen atom;
- each Cy* is independently an optionally substituted trivalent cycloalkylene or heterocycloalkylene, preferably a trivalent cycloalkylene or heterocycloalkylene which is optionally substituted with one or more groups selected from alkyl, cycloalkyl, aryl and a halogen atom;
- each Alk is independently a divalent alkylene or heteroatom-containing alkylene;
- each Alk* is independently a trivalent alkylene or heteroatom-containing alkylene;
- each Alk** is independently a tetravalent alkylene or heteroatom-containing alkylene.

In particular, Al may be represented by one of Formulae (30) to (41): 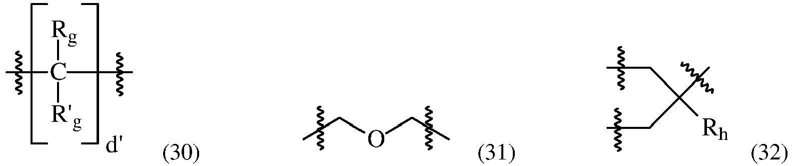 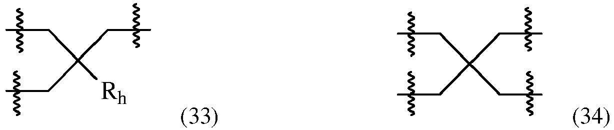 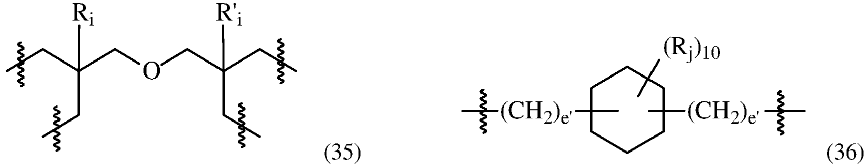 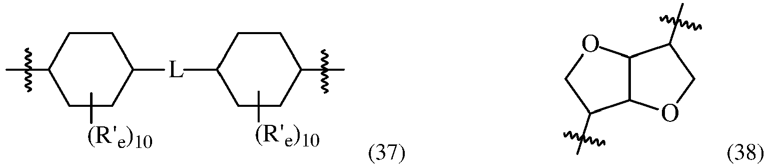 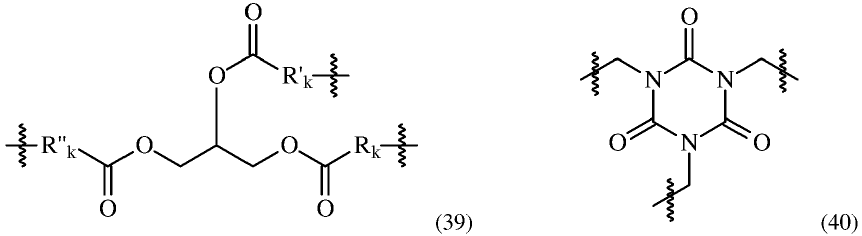 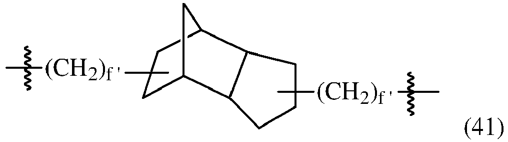 wherein
- L is as defined above for linker Ar;
- R'ₑ is as defined above for Formula (17);
- each R_{g}, R'_{g}, Rₕ, Rᵢ and R'ᵢ is independently H or alkyl;
- each Rⱼ is independently H, alkyl, cycloalkyl, aryl, alkaryl, aralkyl, alkoxy, -C(=O)O-Alkyl and a halogen atom;
- Rₖ, R'ₖ and R"k are independently alkylene;
- d' is 1 to 12;
- each e' and f' is independently 0 or 1.

More particularly, Al may correspond to the residue of an optionally substituted aliphatic polyol (without the OH groups). The aliphatic polyol may be optionally substituted with one or more groups selected from alkyl, cycloalkyl, and a halogen atom. For example, Al may be the residue of an optionally substituted aliphatic polyol Alon selected from an optionally substituted aliphatic diol, such as ethylene glycol, 1,2- or 1,3-propylene glycol, di-, tri- or tetra(1,2-propylene glycol), di-, tri- or tetra(1,3-propylene glycol), 1,2-, 1,3- or 1,4-butylene glycol, di-, tri- or tetra(1,4-butylene glycol), 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, neopentyl glycol, 2,2-diethyl-1,3-propanediol, 2-methyl-2-ethyl-1,3-propanediol, 3-methyl-1,5-pentanediol, 3,3-dimethyl-1,5-pentanediol, 2,4-diethyl-1,5-pentanediol, 3-butyl-3-ethyl-1,5-pentane diol, 2,2,4-trimethyl 1,5-pentanediol, cyclohexanediol, cyclohexane-1,4-dimethanol, norbornane dimethanol, tricyclodecanediol, tricyclodecane dimethanol, a hydrogenated bisphenol (such as hydrogenated bisphenol A, hydrogenated bisphenol AP, hydrogenated bisphenol AF, hydrogenated bisphenol B, hydrogenated bisphenol BP, hydrogenated bisphenol C, hydrogenated bisphenol C2, hydrogenated bisphenol F, hydrogenated bisphenol G, hydrogenated bisphenol M, hydrogenated bisphenol S, hydrogenated bisphenol P, hydrogenated bisphenol PH, hydrogenated bisphenol TMC, hydrogenated bisphenol Z, hydrogenated dinitrobisphenol A or hydrogenated tetrabromobisphenol A), a dianhydrohexitol (i.e. isosorbide, isomannide, isoidide) or a hydrogenated dimer fatty acid (i.e. a diol obtained by dimerizing one or more unsaturated fatty acids such as oleic acid or linoleic acid and then hydrogenating the resulting product to convert the carboxylic acid groups into hydroxyl groups, for example Pripol^{®} 2033 from Croda); an optionally substituted triol, such as trimethylolmethane, trimethylolethane, trimethylolpropane, glycerol, a hydroxylated vegetable oil or a tris(2-hydroxyalkyl)isocyanurate; an optionally substituted tetraol, such as di(trimethylolpropane) or pentaerythritol; an alkoxylated derivative of the aforementioned polyols; and an esterified derivative of the aforementioned polyols (for example a derivative obtained by ring-opening polymerization of ε-caprolactone initiated with one of the aforementioned polyols).

In Formula (B4), Ar* is an aromatic divalent linker. In particular, Ar* may comprise at least one arylene moiety, more particularly at least one optionally substituted phenylene moiety, even more particularly at least one phenylene moiety optionally substituted with one or more groups selected from alkyl, cycloalkyl, aryl and a halogen atom.

For example, Ar* may correspond to one of Formulae (6) to (9) as defined above. In particular, Ar* may be represented by one of Formulae (16) or (17) as defined above.

More particularly, Ar* may correspond to the residue of an optionally substituted aromatic diol (without the OH groups). The aromatic diol may be optionally substituted with one or more groups selected from alkyl, cycloalkyl, aryl and a halogen atom. For example Ar* may be the residue of an optionally substituted aromatic diol comprising 1 to 3, preferably 1 or 2, aromatic rings, such as an optionally substituted aromatic diol as defined above for Ar_{OH}.

In Formula (B5), Al^{∗} is an aliphatic divalent linker. In particular, Al^{∗} may be an aliphatic divalent linker selected from alkylene, heteroatom-containing alkylene, cycloalkylene, heterocycloalkylene, and combinations thereof.

For example, Al^{∗} may be represented by one of Formulae (22) to (26) as defined above. In particular, Al^{∗} may be represented by Formulae (1), (2), (3), (4), (5), (30), (31), (36), (37), (38) or (41) as defined above.

More particularly, Al^{∗} may correspond to the residue of an optionally substituted aliphatic diol (without the OH groups). The aliphatic diol may be optionally substituted with one or more groups selected from alkyl, cycloalkyl, and a halogen atom. For example, Al^{∗} may be the residue of an optionally substituted aliphatic diol, such as an optionally substituted aliphatic diol as defined above for Al_{OH}.

In a preferred embodiment, segment b) corresponds to Formulae (B6) or (B7), preferably (B7): 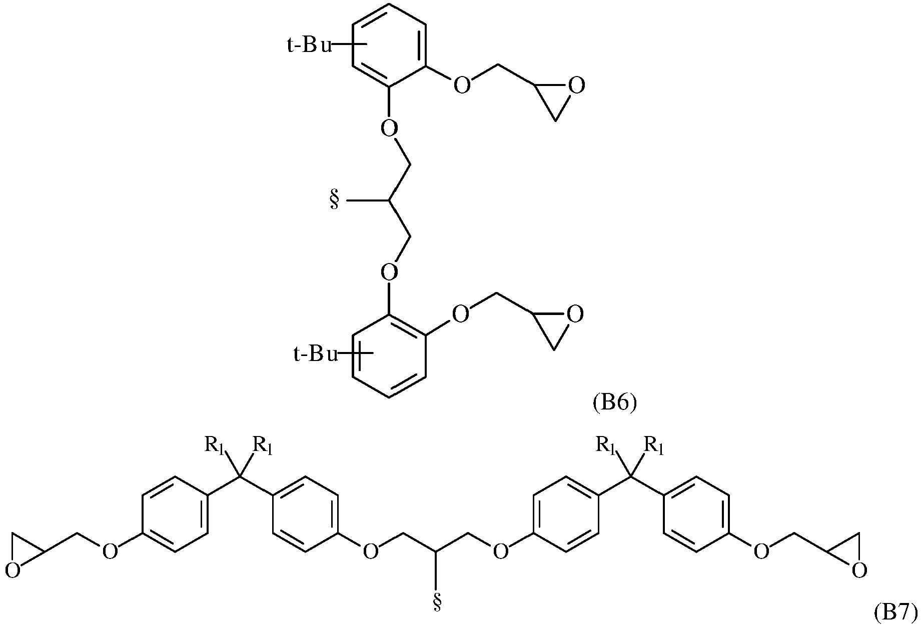 wherein:
- t-Bu is tert-butyl;
- R₁ is H or methyl;
- the symbol § represents the point of attachment to segment c).

The total amount of segment b) in the dual curable oligomer of the invention may represent from 20 to 90 wt.%, in particular from 30 to 85 wt.%, more particularly from 40 to 80 wt.%, of the total weight of the dual curable oligomer.

### Segment c)

The dual curable oligomer of the invention comprises a segment comprising at least one urethane bond, also referred to segment c). Segment c) is connected to segment a) and to segment b). Accordingly, segment c) is between segment a) and segment b). Segment c) is distinct from segment a) and segment b). Accordingly, segment c) may not comprise any ethylenic unsaturation and segment c) may not comprise any epoxy group. The dual curable oligomer of the invention may comprise a single segment c).

In particular, segment c) may have the structure of Formula (C1): 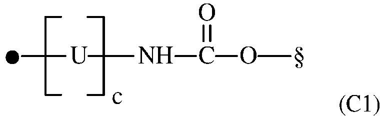 wherein:
- c is 0 or 1;
- U corresponds to Formula (U1) or (U2): 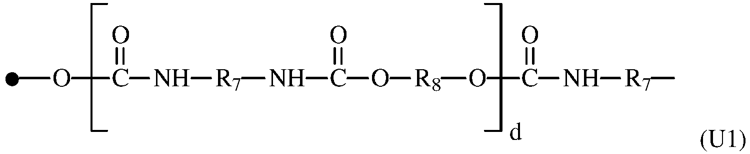 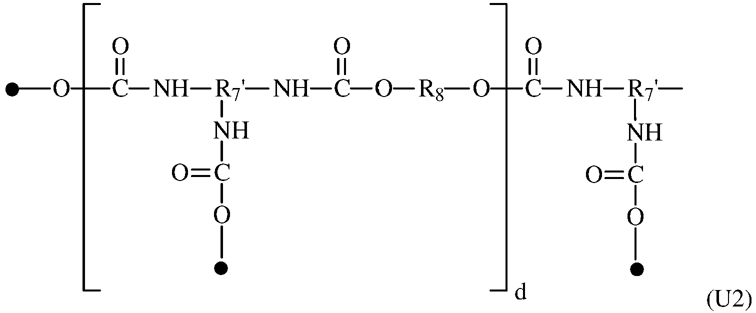 wherein:
   - each R₇ is independently the residue of a diisocyanate;
   - each R₇' is independently the residue of a triisocyanate;
   - each R₈ is independently the residue of a diol;
   - each d is independently 0 or an integer from 1 to 10;
- the symbol • represents a point of attachment to a segment a);
- the symbol § represents the point of attachment to segment b).

In Formula (U1), each R₇ is independently the residue of a diisocyanate (without the NCO groups). In particular, each R₇ may independently be selected from one of Formulae (42) to (51): 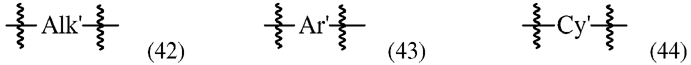 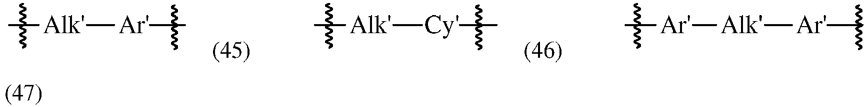 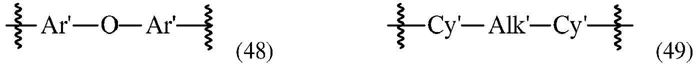 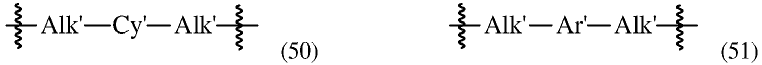 wherein :
- each Alk' is independently a linear or branched alkylene, in particular methylene, 1,2-ethylene, 1,2- or 1,3-propylene, 1,2-, 1,3- or 1,4-butylene, 1,5-pentylene, 1,6-hexylene, 2,2,4- or 2,4-,4-trimethylhexylene, 1,8-octylene, 1,9-nonylene, 1,10-decylene, 1,12-dodecylene, 1,18-octadecylene;
- each Ar' is independently an optionally substituted arylene, in particular an optionally substituted arylene selected from phenylene, tolylene, biphenylene, naphthylene, anthracenylene, more particularly an arylene optionally substituted with one or more groups selected from alkyl, cycloalkyl, aryl and a halogen atom.
- each Cy' is independently an optionally substituted cycloalkylene, in particular an optionally substituted cyclohexylene, more particularly a cycloalkylene optionally substituted with one or more groups selected from alkyl, cycloalkyl, aryl and a halogen atom.

In Formula (U2), each R₇' may independently correspond to the residue of a triisocyanate (without the -NCO groups). In particular, each R₇' may independently be selected from one of Formulae (52) to (58): 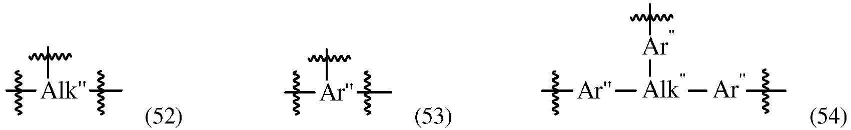 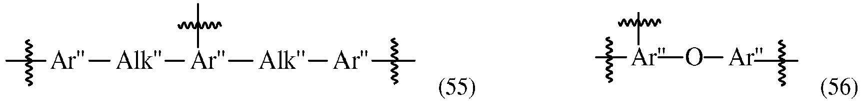 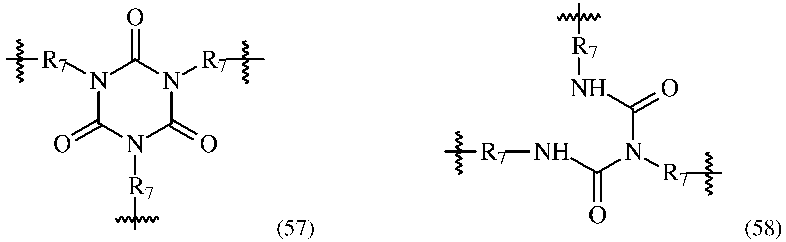 wherein
- each Alk" is independently a linear or branched alkylene, in particular methylene, methanetriyl, undecane-1,6,11 -triyl;
- each Ar" is independently an optionally substituted arylene, in particular an optionally substituted arylene selected from phenylene, tolylene and biphenylene, more particularly an arylene optionally substituted with one or more groups selected from alkyl, cycloalkyl, aryl and a halogen atom;
- each R₇ is independently as defined above for Formula (U1), in particular 1,6-hexamethylene.

In a preferred embodiment, U may be selected from:
- a moiety of Formula (U1) wherein each R₇ is independently selected from one of Formulae (42), (44), (46), (49) or (50) as defined above :
   wherein
   - each Alk' is independently a linear or branched alkylene, in particular methylene, 1,2-ethylene, 1,2- or 1,3-propylene, 1,2-, 1,3- or 1,4-butylene, 1,5-pentylene, 1,6-hexylene, 2,2,4- or 2,4,4-trimethylhexylene, 1,8-octylene, 1,9-nonylene, 1,10-decylene, 1,12-dodecylene, 1,18-octadecylene;
   - each Cy' is independently an optionally substituted cycloalkylene, in particular an optionally substituted cyclohexylene, more particularly a cycloalkylene optionally substituted with one or more groups selected from alkyl, cycloalkyl, aryl and a halogen atom;
- a moiety of (U2) wherein R'₇ corresponds to Formula (57) as defined above wherein each R₇ is independently a linear or branched alkylene, in particular 1,6-hexylene;
and mixtures thereof.

In Formula (U1) and (U2), each R₈ is independently the residue of a diol (without the OH groups). In particular, each R₈ may independently correspond to a divalent linker selected from one of Formulae (1) to (5) as defined above for R₃.

More particularly, each R₈ may independently be the residue of a polymeric diol or the residue of a non-polymeric diol.

As used herein, the term "polymeric diol" means a polymer bearing two isocyanate-reactive hydroxyl groups per molecule. As used herein, the term "non-polymeric diol" means a non-polymeric compound bearing two isocyanate-reactive hydroxyl groups per molecule. In the context of the present invention, the term "polymer" means a compound containing five or more repeating units per molecule and the term "nonpolymeric compound" means a compound containing up to four repeating units per molecule (and thus both monomeric compounds and oligomeric compounds containing 2 to 4 repeating units per molecule). For instance, ethylene glycol, diethylene glycol, triethylene glycol and tetraethylene glycol are all examples of non-polymeric diols, whereas polyethylene glycol containing five or more oxyalkylene repeating units is an example of a polymeric diol.

The molecular weight of the residue of a polymeric diol may be varied as may be needed or desired in order to achieve particular properties in the dual curable oligomer. The number average molecular weight of the residue of the polymeric diol may be at least 300, at least 350, or at least 400 g/mol. The number average molecular weight of the residue of the polymeric diol may be less than 5000, less than 4500, or less than 4000 g/mol. For example, the polymeric diol may have a number average molecular weight of from 300 to 5000 g/mol, from 350 to 4500 g/mol or from 400 to 4000 g/mol.

The polymer portion of the polymeric polyol may be comprised of a plurality of repeating units such as oxyalkylene units, ester units, carbonate units, acrylic units, alkylene units or combinations thereof.

In one embodiment, each R₈ may independently be the residue of a polymeric diol selected from the residue of a polyether diol, the residue of a polyester diol, the residue of a polycarbonate diol, the residue of a polyorganosiloxane diol (e.g., the residue of a polydimethylsiloxane diol), the residue of a polydiene diol including fully or partially hydrogenated polydiene diols (e.g., the residue of a polybutadiene diol).

In particular, each R₈ may independently be the residue of a polyether diol or a polyester diol. More particularly, each R₈ may independently be the residue of a polyether diol selected from a polyethylene glycol, a poly(1,2-propylene glycol), a poly(1,3-propylene glycol), a poly(1,4-butylene glycol) and combinations thereof, or the residue of a polyester diol selected from a poly(caprolactone), a poly(lactide), a poly(alkylene glycol adipate) and a poly(alkylene glycol succinate).

In another embodiment, each R₈ may independently be the residue of a non-polymeric polyol selected from a non-polymeric aliphatic diol and a non-polymeric aromatic diol.

Examples of suitable non-polymeric aliphatic diols are as defined above for Al_{OH}.

The total amount of segment c) in the dual curable oligomer of the invention may represent from 3 to 60 wt.%, in particular from 4 to 40 wt.%, more particularly from 5 to 20 wt.%, of the total weight of the dual curable oligomer.

### Structure of the dual curable oligomer

The dual curable oligomer of the present invention may have the structure of Formula (I): 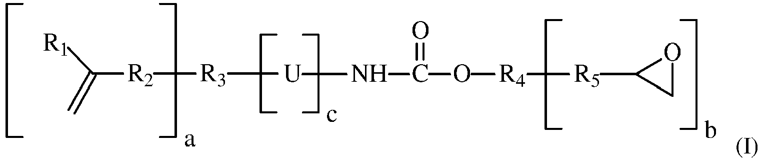 wherein a, b, c, R₁, R₂, R₃, R₄, R₅ and U are as defined above.

Preferably, each R₂ is ^{∗}-C(=O)-O- and the dual curable oligomer of the present invention has the structure of Formula (II): 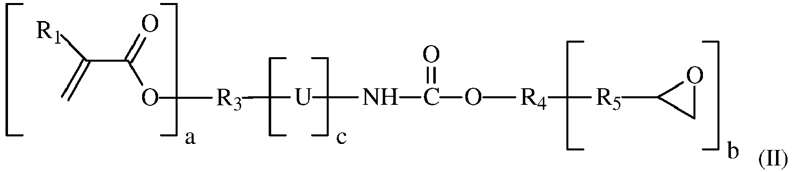 wherein a, b, c, R₁, R₃, R₄, R₅ and U are as defined above.

In one embodiment, c is 0 and the dual curable oligomer has the structure of Formula (III): 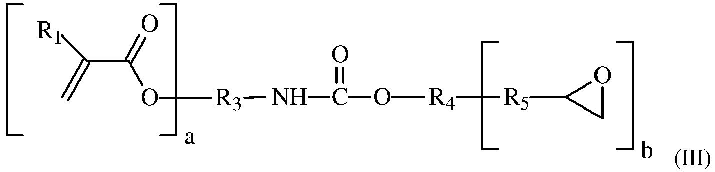 wherein a, b, R₁, R₃, R₄ and R₅ are as defined above.

In particular, the dual curable oligomer may have the structure of Formula (IIIa), (IIIb), (IIIc) or (IIId): 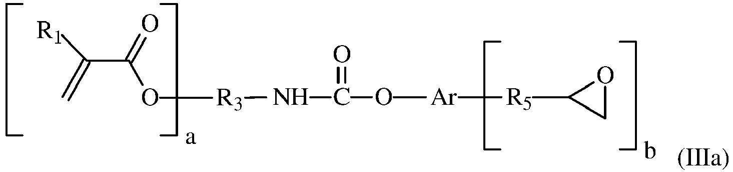 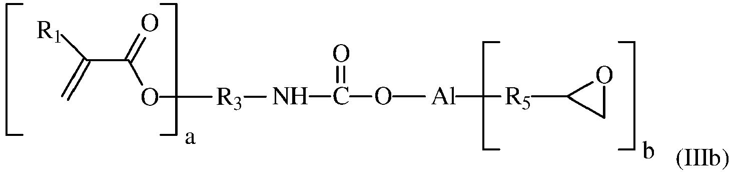 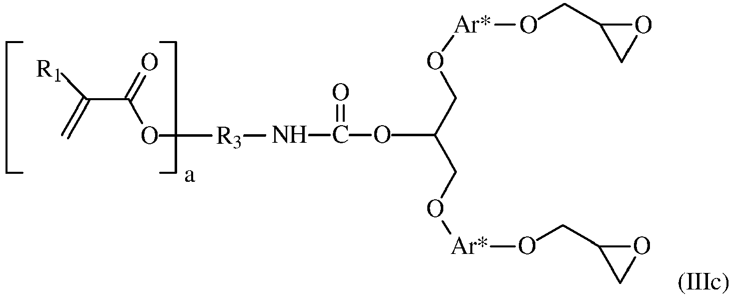 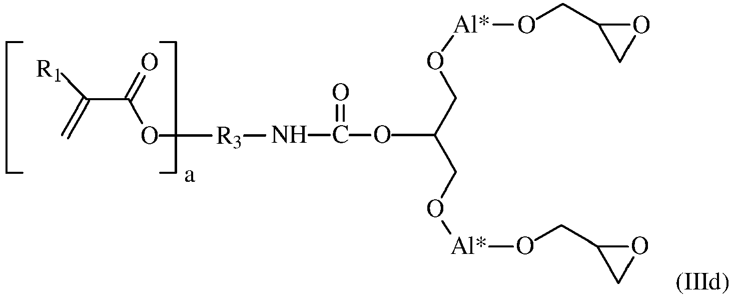 wherein a, b, R₁, R₃, R₅, Ar, Al, Ar^{∗} and Al^{∗} are as defined above.

More particularly, the dual curable oligomer may have the structure of Formula (IIIe): 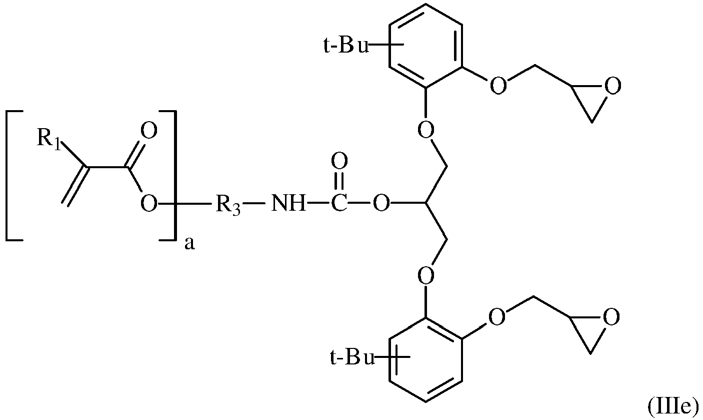 wherein a, R₁, R₃ and t-Bu are as defined above.

In another embodiment, c is 1, U is according to Formula (U1) or (U2) and the dual curable oligomer of the present invention has the structure of Formula (IV) or (V): 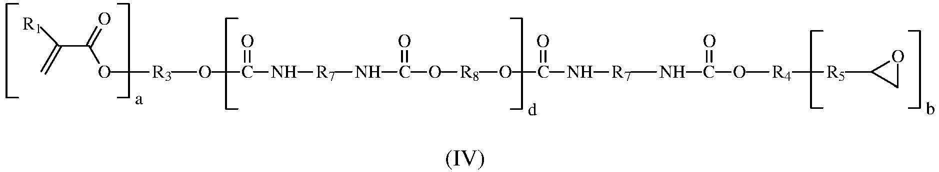 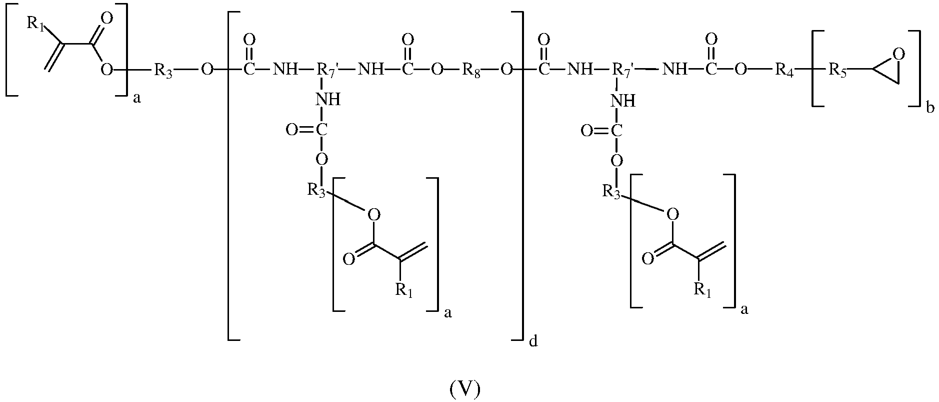 wherein a, b, d, R₁, R₃, R₄, R₅, R₇ and R₈ are as defined above.

In particular, the dual curable oligomer may have the structure of Formula (IVa), (IVb), (IVc) or (IVd): 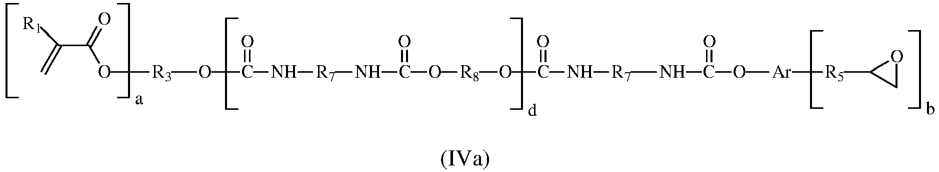 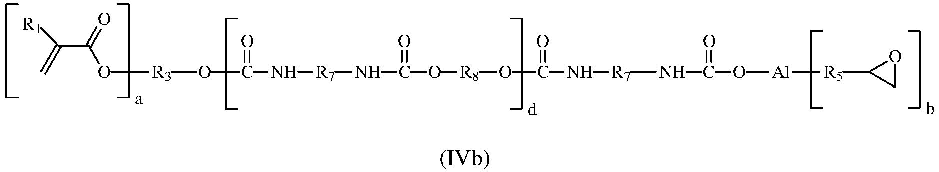 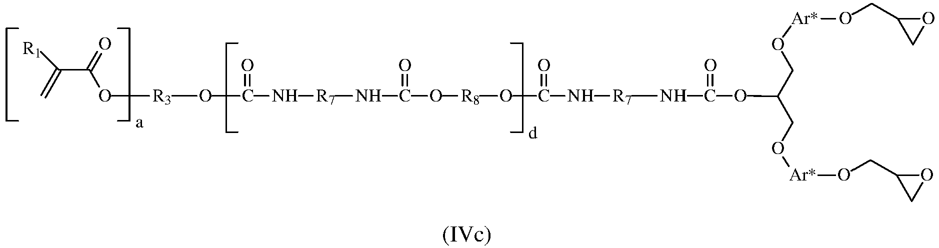 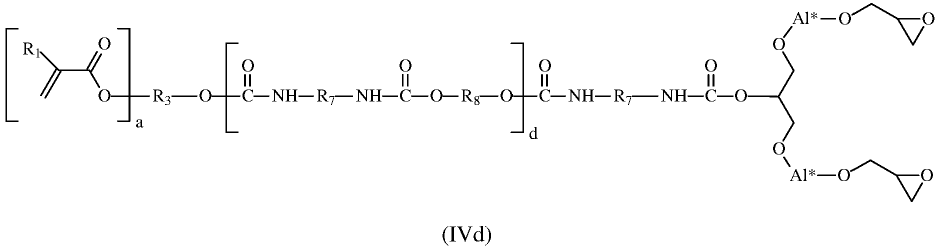 wherein a, b, d, R₁, R₃, R₅, R₇, R₈, Ar, Al, Ar^{∗} and Al^{∗} are as defined above.

More particularly, the dual curable oligomer may have the structure of Formula (IVe): 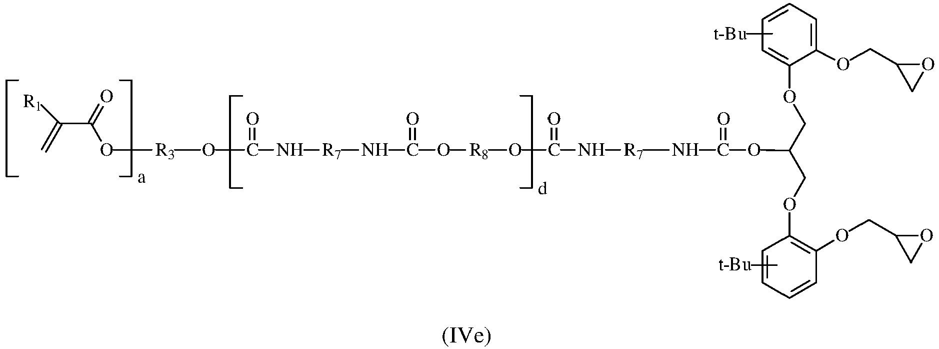 wherein a, d, R₁, R₃, R₇, R₈ and t-Bu are as defined above.

Segments a), b) and c), as well as radicals R₁ to R₈, are more precisely defined below, in connection with the method for preparing such oligomers, in particular with regard to the raw materials used to prepare such oligomers. All the elements described in connection with such raw materials apply to the dual curable oligomers of the present invention.

### Method for preparing the dual curable oligomer

The method for preparing the dual curable oligomer of the present invention comprises the step of:
- reacting an ethylenically unsaturated monoisocyanate component and an epoxy monoalcohol component; or
- reacting an ethylenically unsaturated monoalcohol component, a polyisocyanate component, an epoxy monoalcohol component and optionally a diol component.

The ethylenically unsaturated monoisocyanate component comprises at least one compound bearing at least one ethylenic unsaturation and a single NCO group or blocked NCO group. The epoxy monoalcohol component comprises at least one compound bearing at least one epoxy group and a single hydroxy group, preferably a single secondary hydroxy group. The ethylenically unsaturated monoalcohol component comprises at least one compound bearing at least one ethylenic unsaturation and a single OH group. The polyisocyanate component comprises at least one compound bearing at least two NCO groups or blocked NCO groups. The diol component comprises at least one compound bearing two hydroxy groups.

In one embodiment, the method may comprise the step of reacting an ethylenically unsaturated monoisocyanate component comprising at least one compound having the structure of Formula (A) with an epoxy monoalcohol component comprising at least one compound having the structure of Formula (B): 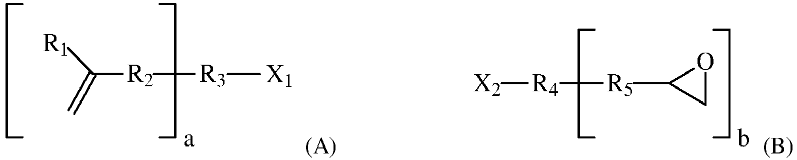 wherein:
- a, b, R₁, R₂, R₃ R₄, and R₅ are as defined above for segments a) and b);
- X₁ is a NCO group or a blocked NCO group;
- X₂ is a hydroxy group, preferably a secondary hydroxy group.

Such method provides a dual curable oligomer having the structure of Formula (III) as defined above, in particular the structure of Formula (IIIa), (IIIb), (IIIc) or (IIId) as defined above, more particularly the structure of Formula (IIIe) as defined above.

The amount of (A) and (B) can vary depending on the desired properties of the curable compositions. For example, the equivalent mole ratio [OH group of (B)]/[NCO group of (A)] may range between 1/2 and 2/1, or between 1/1.5 and 1.5/1, or between 1/1.1 and 1.1/1, or between 1.05/1 and 1.05/1, or be about 1/1.

In another embodiment, the method may comprise the step of reacting an ethylenically unsaturated monoalcohol component comprising at least one compound having the structure of Formula (D), a polyisocyanate component comprising at least one compound having the structure of Formula (E1) or (E2), an epoxy monoalcohol component comprising at least one compound having the structure of Formula (B) and optionally a diol component comprising at least one compound having the structure of Formula (F): 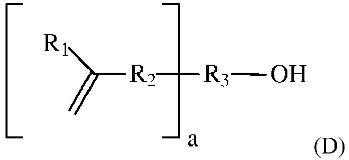 X₃-R₇-X₃ (E1) 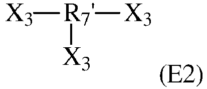 HO-R₈-OH (F) 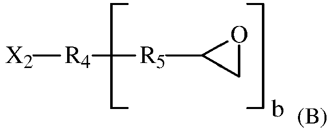 wherein:
- a, b, R₁, R₂, R₃ R₄, R₅, R₇, R₇' and R₈ are as defined above for segments a), b) and c);
- each X₃ is independently a NCO group or a blocked NCO group;
- X₂ is a hydroxy group, preferably a secondary hydroxy group.

Such method provides a dual curable oligomer having the structure of Formula (IV) or (V) as defined above, in particular the structure of Formula (IVa), (IVb), (IVc) or (IVd) as defined above, more particularly the structure of Formula (IVe) as defined above.

The amount of (D), (E1), (E2), (F) and (B) can vary depending on the desired properties of the curable compositions. For example, the equivalent mole ratio [OH group of (D) + OH group of (B) + OH group of (F)]/[NCO group of (E1) or (E2)] may range between 1/2 and 2/1, or between 1/1.5 and 1.5/1, or between 1/1.1 and 1.1/1 or between 1.05/1 and 1.05/1, or be about 1/1.

The methods may include mixing all reactants and ingredients, at essentially the same time, in a "one-shot" process, or a stepwise addition of the reactants, in the presence of, or without the addition of, the other ingredients and optional additives. The reaction can take place in bulk, or in solution, with, or without, the addition of a urethanization catalyst that promotes the reaction of isocyanates with alcohols.

The reaction may be carried out in organic solvents, but is preferably carried out in the presence of an amount of solvent of less than 5 wt.% or even preferably in the absence of organic solvent, for example by melt-extrusion, at a temperature of from 60°C to 250°C, for example from 65° C to 200°C or from 70° C to 150°C. When such solvent is used, it is generally used in an amount which is less than 5 wt.%, based on the total weight of the components involved in the reaction. For example, the amount of solvent used is less than 4 wt.%, less than 3 wt.%, less than 2 wt.%, less than 1 wt.%, less than 0.5 wt.%. A solvent may for example be used at the start of the reaction when the reactants are in a solid form (e.g., a powder form) to facilitate the homogenous mixing of the components. The solvent may be herein called equivalently a diluent. If a solvent is used, it is preferably a low viscosity/high boiling point liquid. The solvent may preferably comprise epoxy functional groups and/or allyl/vinyl/acrylate groups.

### Epoxy monoalcohol component

The epoxy monoalcohol component comprises or consists of at least one epoxy monoalcohol. The epoxy monoalcohol component may comprise or consist of a mixture of epoxy monoalcohols.

An epoxy monoalcohol is a compound bearing at least one epoxy group and a single hydroxy group, preferably a single secondary hydroxy group. The epoxy monoalcohol may comprise 1, 2, 3 or 4 epoxy groups, in particular 2 or 3 epoxy groups, more particularly 2 epoxy groups. Each epoxy group may be independently selected from a glycidyl ether group, a glycidyl ester group and an epoxy group which is not part of a glycidyl ether group or a glycidyl ester group. The epoxy monoalcohol may comprise a mixture of glycidyl ether groups and glycidyl ester groups.

In particular, the epoxy monoalcohol component may comprise at least one compound having the structure of Formula (B): 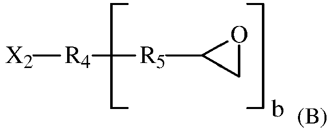 wherein:
- b, R₄ and R₅ are as defined above for segment b);
- X₂ is a hydroxy group, preferably a secondary hydroxyl group.

All the preferred embodiments for R₄, R₅ and b described above for segment b) equally apply to the compound of Formula (B).

In particular, the epoxy monoalcohol component may comprise at least one compound having the structure of Formula (B2a), (B3a), (B4a) or (B5a): 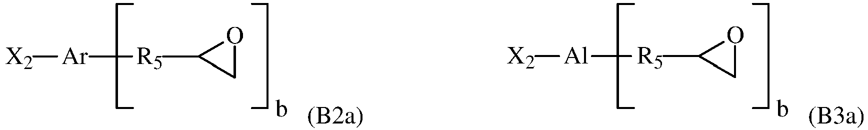 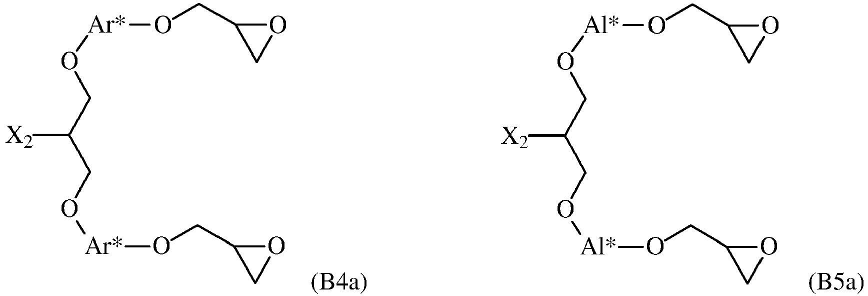 wherein:
- R₅, X₂ and b are as defined above;
- Ar, Al, Ar^{∗} and Al^{∗} are as defined above for segment b) of Formulae (B2), (B3), (B4) or (B5).

All the preferred embodiments for Ar, Al, Ar^{∗} and Al^{∗} described above for segment b) equally apply to the compounds of formulas (B2a), (B3a), (B4a) and (B5a).

Even more particularly, the epoxy monoalcohol component may comprise at least one compound selected from glycidol, ethylene glycol monoglycidyl ether, 1,2- or 1,3-propylene glycol monoglycidyl ether, 1,2-, 1,3- or 1,4-butanediol monoglycidyl ether, 1,5-pentanediol monoglycidyl ether, 1,6-hexanediol monoglycidyl ether, 1,8-octanediol monoglycidyl ether, 1,9-nonanediol monoglycidyl ether, 1,10-decanediol monoglycidyl ether, 1,12-dodecanediol monoglycidyl ether, 2-methyl-1,3-propanediol monoglycidyl ether, neopentyl glycol monoglycidyl ether, 2,2-diethyl-1,3-propanediol monoglycidyl ether, 3-methyl-1,5-pentanediol monoglycidyl ether, 3,3-dimethyl-1,5-pentanediol monoglycidyl ether, 2,4-diethyl-1,5-pentanediol monoglycidyl ether, 3,3-butylethyl-1,5-pentanediol monoglycidyl ether, glycerol diglycidyl ether, diglycerol triglycidyl ether, trimethylolmethane diglycidyl ether, trimethylolethane diglycidyl ether, trimethylolpropane diglycidyl ether, di(trimethylolpropane) triglycidyl ether, pentaerythritol triglycidyl ether, monoglycidyl cyclohexanedicarboxylate, 1,2-, 1,3- or 1,4-cyclohexane monoglycidyl ether, cyclohexane-1,2, 1,3 or 1,4-dimethanol monoglycidyl ether tricyclodecane dimethanol monoglycidyl ether, isosorbide monoglycidyl ether, pyrocatechol monoglycidyl ether, resorcinol monoglycidyl ether, cardol monoglycidyl ether, phloroglucinol diglycidyl ether, pyrogallol diglycidyl ether, tris(hydroxyphenyl)methane diglycidyl ether, tris(hydroxyphenyl)ethane diglycidyl ether, an epoxidized diglyceride, a diglycidyl isocyanurate, a bisphenol monoglycidyl ether (wherein the bisphenol is as defined above), a hydrogenated bisphenol monoglycidyl ether, a tert-butyl catechol dimer diglycidyl ether of Formula (B6a), a bisphenol dimer diglycidyl ether of Formula (B7a), and combinations thereof 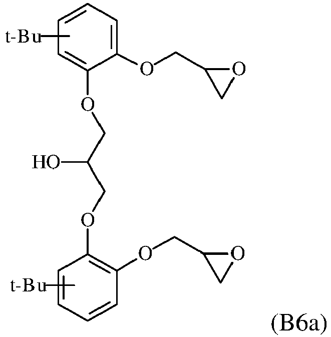 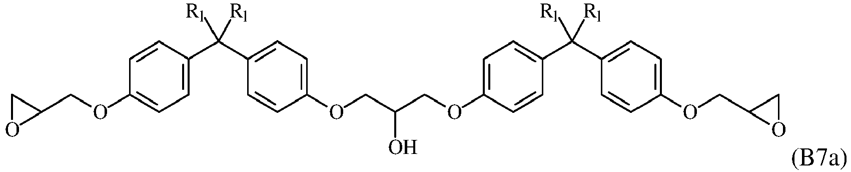 wherein t-Bu and R₁ are as defined above in Formulae (B6) and (B7).

Preferably, the epoxy monoalcohol component comprises a compound according to Formula (B6a). Such a product is available as EPICLON^{®} HP-820 from DIC Corporation.

### Ethylenically unsaturated monoisocyanate component

The ethylenically unsaturated monoisocyanate component comprises or consists of at least one ethylenically unsaturated monoisocyanate. The ethylenically unsaturated monoisocyanate component may comprise or consist of a mixture of ethylenically unsaturated monoisocyanates.

An ethylenically unsaturated monoisocyanate is a compound bearing at least one ethylenic unsaturation and a single NCO group or blocked NCO group. An ethylenically unsaturated monoisocyanate may comprise at least one ethylenic unsaturation which is part of a functional group selected from an acrylate functional group, a methacrylate functional group, an acrylamide functional group, a methacrylamide functional group, a vinyl group, a vinyl ether group, an allyl group, and an allyl ether group.

In particular, an ethylenically unsaturated monoisocyanate may comprise at least one (meth)acrylate group, for example 1, 2, 3, 4, 5 or 6 (meth)acrylate groups. An ethylenically unsaturated monoisocyanate may comprise a mixture of acrylate functional groups and methacrylate functional groups.

The ethylenically unsaturated monoisocyanate component may comprise at least one compound having the structure of Formula (A): 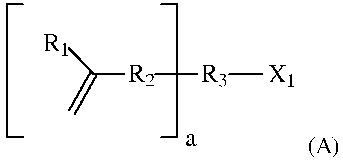 wherein:
- a, R₁, R₂ and R₃ are as defined above for segment a)
- X₁ is an NCO group or a blocked NCO group.

In particular, the ethylenically unsaturated monoisocyanate component may comprise at least one compound having the structure of Formula (A2a): 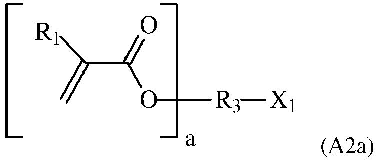 wherein:
- a, R₁ and R₃ are as defined above for segment a);
- X₁ is an NCO group or a blocked NCO group.

In such embodiments, the ethylenically unsaturated monoisocyanate component comprises at least one compound bearing at least one acrylate functional group and/or at least one methacrylate functional group.

All the preferred embodiments for a, R₁, R₂ and R₃ described above for segment a) equally apply to the compound of Formula (A) and (A2a).

In Formulae (A) or (A2a), X₁ is an NCO group or a blocked NCO group. The chemical structure of the blocked NCO group typically impacts the temperature at which the manufacturing of the oligomer is efficiently conducted, as well as the volatile content and properties of the resin. It also typically impacts the cure rate of the resin. In particular, a blocked NCO group may be a moiety -NH-C(O)-OR₁₀ or -NH-C(O)-N(R'₁₀)₂, wherein R₁₀ and R'₁₀ are each independently a (hetero)hydrocarbyl group or two R'₁₀ groups may with the nitrogen atom to which they are attached form a ring, for example an optionally substituted pyrazole.

In particular, R₁₀ in the blocked NCO group includes one or several of the following moieties: phenol, nonyl phenol, a methylethylketoxime (-N=C(Me)Et), hydroxy, ε-caprolactam, amide, imidazole, and/or pyrazole.

Preferably, the ethylenically unsaturated monoisocyanate component comprises at least one compound selected from 2-isocyanatoethyl methacrylate (MOI), 2-isocyanatoethyl acrylate (AOI, AOI-VM), 2-(O-[1'-methylpropylideneamino]carboxyamino)ethyl methacrylate (MOI-BM), 2-[(3,5-dimethylpyrazolyl)carboxyamino]ethyl methacrylate (MOI-BP), 1,1-(bisacryloyloxymethyl) ethyl isocyanate (BEI), 2-[2-(Methacryloyloxy)ethyloxy]ethyl isocyanate (MOI-EG), and mixtures thereof.

### Ethylenically unsaturated monoalcohol component

The ethylenically unsaturated monoalcohol component comprises or consists of at least one ethylenically unsaturated monoalcohol. The ethylenically unsaturated monoalcohol component may comprise or consist of a mixture of ethylenically unsaturated monoalcohols.

An ethylenically unsaturated monoalcohol is a compound bearing at least one ethylenic unsaturation and a single OH group. An ethylenically unsaturated monoalcohol may comprise at least one ethylenic unsaturation which is part of a functional group selected from an acrylate functional group, a methacrylate functional group, an acrylamide functional group, a methacrylamide functional group, a vinyl group, a vinyl ether group, an allyl group, and an allyl ether group.

In particular, an ethylenically unsaturated monoalcohol may comprise at least one (meth)acrylate group, for example 1, 2, 3, 4, 5 or 6 (meth)acrylate groups. An ethylenically unsaturated monoisocyanate may comprise a mixture of acrylate functional groups and methacrylate functional groups.

The ethylenically unsaturated monoalcohol component may comprise at least one compound having the structure of Formula (D): 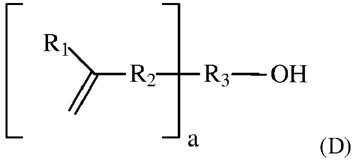 wherein a, R₁, R₂ and R₃ are as defined above for segment a).

In particular, the ethylenically unsaturated monoalcohol component may comprise at least one compound having the structure of Formula (D1a): 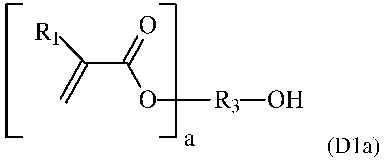 wherein:
- a, R₁ and R₃ are as defined above for segment a).

In such embodiments, the ethylenically unsaturated monoalcohol comprises at least one acrylate functional group and/or at least one methacrylate functional group.

All the preferred embodiments for a, R₁, R₂ and R₃ described above for segment a) equally apply to the compound of Formulae (D) and (D1a).

Preferably, the ethylenically unsaturated monoalcohol component comprises at least one compound selected from a hydroxyalkyl (meth)acrylate (for example 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, neopentyl glycol mono(meth)acrylate or 1,6-hexanediol mono(meth)acrylate), 2-hydroxy-3-phenoxypropyl (meth)acrylate, 3-chloro-2-hydroxypropyl (meth)acrylate, tris(2-hydroxyethyl)isocyanurate di(meth)acrylate, di-, tri-, tetra- or polyethylene glycol mono(meth)acrylate, di-, tri-, tetra- or poly(1,2-propylene glycol) mono(meth)acrylate, di-, tri-, tetra- or poly(1,3-propylene glycol) mono(meth)acrylate, di-, tri-, tetra- or poly(1,4-butylene glycol) mono(meth)acrylate, glycerin di(meth)acrylate, 2-hydroxy-1-acryloxy-3-(meth)acryloxypropane, trimethylolpropane di(meth)acrylate, di(trimethylolpropane) tri(meth)acrylate, trimethylolethane di(meth)acrylate, pentaerythritol tri(meth)acrylate, dipentaerythritol penta(meth)acrylate, as well as the alkoxylated (e.g., ethoxylated and/or propoxylated) derivatives thereof and the (poly)caprolactone derivatives thereof obtained by ring-opening polymerization of ε-caprolactone initiated with one of the aforementioned hydroxyl-functionalized (meth)acrylate compounds (i.e. a (poly)caprolactone (meth)acrylate such as (poly)caprolactone 2-hydroxyethyl (meth)acrylate according to the following Formula: CH₂=CR₁₁-C(=O)-O-CH₂-CH₂-[O-(C=O)-(CH₂)₅]ₜ-OH wherein Rn is H or methyl and t is 1 to 20), and combinations thereof.

In a preferred embodiment, the ethylenically unsaturated monoalcohol component comprises pentaerythritol triacrylate.

### Polyisocyanate component

The polyisocyanate component comprises or consists of at least one polyisocyanate. The polyisocyanate component may comprise or consist of a mixture of polyisocyanates.

A polyisocyanate is a compound bearing at least two NCO groups or blocked NCO groups. A blocked NCO group may be as defined above for the ethylenically unsaturated monoisocyanate.

The polyisocyanate component may comprise a polyisocyanate bearing 2 or 3 NCO groups, preferably 2 NCO groups.

In particular, the polyisocyanate component may comprise a diisocyanate having the structure of Formula (E1) and/or a triisocyanate having the structure of Formula (E3):

X₃-R₇-X₃ (E1)

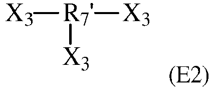

wherein:
- R₇ and R₇' are as defined above for segment c)
- X₃ is a NCO group or a blocked NCO group.

All the preferred embodiments for R₇ and R₇' described above for segment c) equally apply to the compounds of Formulae (E1) and (E2).

Suitable examples of diisocyanates according to Formula (E1) include 2,4- and 2,6-toluene diisocyanate (TDI), isophorone diisocyanate (IPDI - corresponding to 3-isocyanatomethyl-3,5,5-trimethylcyclohexylisocyanate), methylene diisocyanate, ethylene diisocyanate, 1,2- or 1,3-propylene diisocyanate, 1,2-, 1,3 or 1,4-butylene diisocyanate, 1,5-pentamethylene diisocyanate (PDI), 1,6-hexamethylene diisocyanate (HDI), 2,2,4- and 2,4,4-trimethylhexamethylene diisocyanate (TMDI), 1,10-decylene diisocyanate, 1,12-dodecylene diisocyanate, 1,18-octadecylene diisocyanate, 2,2'-, 2,4'- and 4,4'-diphenylmethane diisocyanate (MDI), 2,2'-, 2,4'- and 4,4'-dicyclohexylmethane diisocyanate (H12MDI), benzidine diisocyanate, 3,3'-dimethyl-4,4'-biphenyl diisocyanate, dianisidine diisocyanate, 3,3'-dimethyl-4,4'-diphenylmethane diisocyanate, 1,3- and 1,4-phenylene diisocyanate, 1,4- and 1,5-naphtalene diisocyanate (NDI), 1,4- and 9,10-anthracene diisocyanate, 1,3- and 1,4-cyclohexane diisocyanate, 1-methyl-2,4-diisocyanatocyclohexane, 1-methyl-2,6-diisocyanatocyclohexane, 1,3 and 1,4-bis(isocyanatomethyl)cyclohexane, m-tetramethylxylylene diisocyanate, m-xylylene diisocyanate, 4-methoxy-1,3-phenylene diisocyanate, 4-ethoxy-1,3-phenylene diisocyanate, 5,6-dimethyl-1,3-phenylene diisocyanate, 2,4'- or 4,4'-diisocyanate diphenyl ether, lysine diisocyanate, dimer acid diisocyanate, dimers of the aforementioned diisocyanates (in particular uretdione or allophanate dimers), as well as polyurea or polyurethane prepolymers functionalized with isocyanate functional groups, and combinations thereof.

Suitable examples of triisocyanates according to Formula (E2) include 1,6,11-undecane triisocyanate, triphenylmethane triisocyanate, 2,4,6-tolylene triisocyanate, 2,4,4'-triisocyanate diphenyl ether, trimers of the diisocyanates detailed above for Formula (E1) (in particular isocyanurate or biuret trimers), polymeric derivatives of the diisocyanates detailed above for Formula (E1), and combinations thereof.

As used herein, an isocyanurate trimer of a diisocyanate of Formula O=C=N-R₇-N=C=O corresponds to the following formula: 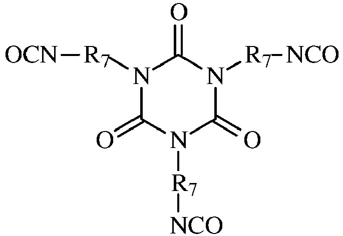 wherein R₇ is as defined above.

As used herein, a biuret trimer of a diisocyanate of formula O=C=N-R₇-N=C=O corresponds to the following formula: 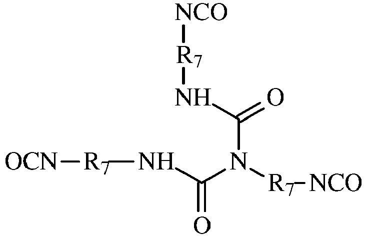 wherein R₇ is as defined above.

Preferably, the polyisocyanate component comprises a diisocyanate, preferably isophorone diisocyanate.

### Optional diol component

The optional diol component comprises or consists of at least one diol. The diol component may comprise or consist of a mixture of diols.

### A diol bears two OH groups.

In particular, the diol component may comprise a diol having the structure of Formula (F):

HO-R₈-OH (F)

wherein R₈ is as defined above for segment c).

All the preferred embodiments for R₈ described above for segment c) equally apply to the compound of Formula (F).

In particular, the diol component may comprise at least one polymeric diol or at least one non-polymeric diol.

The diol component may comprise at least one polymeric diol. Alternatively, the diol component may be substantially free of a polymeric diol.

The molecular weight of the polymeric diol may be varied as may be needed or desired in order to achieve particular properties in the dual curable oligomer. The number average molecular weight of the polymeric diol may be at least 330, at least 350, or at least 400 g/mol. The number average molecular weight of the polymeric diol may be less than 5000, less than 4500, or less than 4000 g/mol. For example, the polymeric diol may have a number average molecular weight of from 330 to 5000 g/mol, from 350 to 4500 g/mol or from 400 to 4000 g/mol.

The polymer portion of the polymeric diol may be comprised of a plurality of repeating units such as oxyalkylene units, ester units, carbonate units, acrylic units, alkylene units or the like or combinations thereof.

In particular, the diol component may comprise at least one polymeric diol selected from a polyether diol, a polyester diol, a polycarbonate diol, a polyorganosiloxane diol (e.g., a polydimethylsiloxane diol), a polydiene diol including fully or partially hydrogenated polydiene diols (e.g., a polybutadiene diol).

More particularly, the diol component may comprise at least one polyether diol or at least one polyester diol.

More particularly still, the diol component may comprise at least one polyether diol selected from a polyethylene glycol, a poly(1,2-propylene glycol), a poly(1,3-propylene glycol), and a poly(1,4-butylene glycol), or at least one polyester diol selected from a poly(caprolactone), a poly(lactide), a poly(alkylene glycol adipate) and a poly(alkylene glycol succinate).

The diol component may comprise at least one non-polymeric diol. Alternatively, the diol component may be substantially free of a non-polymeric diol.

In particular, the diol component may comprise at least one non-polymeric aliphatic diol.

More particularly, the diol component may comprise at least one non-polymeric aliphatic diol as defined above for Al_{OH}.

### Catalysts

The method for preparing the dual curable oligomer may be carried out in the presence of at least one catalyst.

Any of the catalysts known in the art to catalyze the reaction of an isocyanate with hydroxyl group, can be employed herein. Such catalysts include organic and inorganic acids salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines.

Representative organotin catalysts are stannous octoate, stannous oleate, dibutyltin dioctoate, dibutyltin dilaurate, and the like.

Suitable non-tin catalysts include, for example, one or more non-tin catalysts selected from the group consisting of carboxylate complexes of bismuth (such as bismuth octoate or bismuth neodecanoate); acetylacetonate complexes of zirconium; acetylacetonate complexes of hafnium; acetylacetonate complexes of titanium; beta-diketiminate complexes of zirconium; beta-diketiminate complexes of hafnium; beta-diketiminate complexes of titanium; amidinate complexes of zirconium; amidinate complexes of hafnium; amidinate complexes of titanium; carboxylate complexes of zinc; tertiary amines; imidazoles; N-heterocyclic carbenes; tetraalkylammonium (pseudo)halides; phosphines; and combinations thereof.

In some embodiments, the amount of catalyst used varies within the range of 0.01 wt.% to 2.0 wt.%, for example 0.02 wt.% to 1.0 wt.% or 0.3 wt.% to 0.8 wt.%, based on the total weight of the reactants (i.e., isocyanates and alcohols).

### Stabilizers

The method for preparing the dual curable oligomer may be carried out in the presence of at least one stabilizer, such as an antioxidant, a light blocker/absorber or a polymerization inhibitor. Alternatively, the method may not require the presence of a stabilizer.

Stabilizers may be used during the preparation of the curable composition, to protect against unwanted reactions during processing of the ethylenically unsaturated components of the curable composition. A stabilizer may be a compound or substance which retards or prevents reaction or curing of polymerizable functional groups present in a composition in the absence of radiation. However, it will be advantageous to select an amount and type of stabilizer such that the composition remains capable of being cured when exposed to radiation (that is, the stabilizer does not prevent radiation curing of the composition). The stabilizer may, in particular be a free radical stabilizer (i.e., a stabilizer which functions by inhibiting free radical reactions).

Any of the stabilizers known in the art related to (meth)acrylate-functionalized compounds may be utilized in the present invention. Quinones represent a particularly preferred type of inhibitor which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable inhibitor which can be utilized. Other inhibitors known in the art such as hydroquinone (HQ), 4-tert- butylcatechol (TBC), 3,5-di-tertiobutyl-4-hydroxytoluene (BHT), phenothiazine (PTZ), pyrogallol, phosphite compounds, triphenyl antimony and tin(II) salts.

The concentration of stabilizer to be used in the method of the invention varies depending upon the particular inhibitor or combination of inhibitor selected for use and also on the degree of inhibition desired and the susceptibility of components in the curable compositions towards degradation in the absence of inhibitor. In some embodiments of the invention, the reaction mixture during each stage of the method employed to make the curable composition contains at least some stabilizer, e.g., at least 10 ppm stabilizer, at least 100 ppm or at least 1000 ppm. The total amount of stabilizer used during the reaction may be less than 5 wt.%, less than 4 wt.%, less than 3 wt.%, less than 2 wt.%, based on the total weight of components in the reaction.

### Curable compositions

The curable composition of the invention comprises at least one dual curable oligomer as described herein.

The composition of the invention may comprise from 5 wt.% to 99.9 wt.% of one or more dual curable oligomers, for example from 10 wt.% to 99.5 wt.%, from 20 wt.% to 99 wt.%, from 30 wt.% to 98 wt.%, from 50 wt.% to 97 wt.%, or from 60 wt.% to 95 wt.%, based on the total weight of the curable composition.

The composition may comprise several distinct oligomers, for example two or more. In some embodiments, the composition comprises a mixture of oligomers having distinct segments a). In such embodiments, the composition may comprise a mixture of oligomers in which a first oligomer (O1) is such that segment a) comprises an α,β-unsaturated ester moiety such as an acrylate functional group or a methacrylate functional group (-O-C(O)-C(CH₃)=CH₂), and a second oligomer (O2) is such that segment a) comprises a vinyl group (-CH=CH₂), a vinyl ether group (-O-CH=CH₂), an allyl group (-CH₂-CH=CH₂) or an allyl ether group (-O-CH₂-CH=CH₂). The mole ratio O1:O2 may vary between 10:1 and 1:10, for example between 5:1 and 1:5, between 3:1 and 1:3 or between 2:1 and 1:2.

The curable composition described herein presents improved performance in terms of shelf-life stability.

The curable composition of the invention may further comprise one or more of the following:
a. a polymerizable component comprising one or more ethylenically unsaturated compounds and/or one or more cationically polymerizable compounds other than the dual curable oligomer;
b. an inhibitor;
c. an initiator selected from a free radical initiator, a cationic initiator, and combinations thereof;
d. an epoxy crosslinking agent;
e. an additive selected from the group consisting of antioxidants, ultraviolet absorbers, photostabilizers, foam inhibitors, flow or leveling agents, colorants, pigments, dispersants (wetting agents), slip additives, fillers, thixotropic agents, matting agents, waxes, any additive conventionally utilized in coating, sealant, adhesive, ink or molding compositions, and combinations thereof.

### Polymerizable component

The curable composition of the invention may comprise a polymerizable component.

A polymerizable component comprises or consists of one or more ethylenically unsaturated compounds and/or one or more cationically polymerizable compounds.

The polymerizable component is distinct from the dual curable oligomer of the invention.

The polymerizable component may comprise one or more ethylenically unsaturated compounds. In particular, the polymerizable component may comprise one or more ethylenically unsaturated compounds selected from a (meth)acrylate-functionalized monomer, a (meth)acrylate-functionalized oligomer and mixtures thereof. In particular, the polymerizable component may comprise one or more (meth)acrylate functionalized monomers.

As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group.

The polymerizable component may comprise at least one (meth)acrylate-functionalized monomer. The polymerizable component may comprise a mixture of (meth)acrylate-functionalized monomers.

A (meth)acrylate-functionalized monomer may have a molecular weight of less than 600 g/mol, in particular from 100 to 550 g/mol, more particularly 200 to 500 g/mol.

A (meth)acrylate-functionalized monomer may have 1 to 6 (meth)acrylate groups, in particular 1 to 3 (meth)acrylate groups.

The polymerizable component may comprise a mixture of (meth)acrylate-functionalized monomers having different functionalities. For example, the polymerizable component may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule (referred to herein as "poly(meth)acrylate-functionalized compounds").

In particular, the polymerizable component may comprise a mono(meth)acrylate-functionalized monomer. The mono(meth)acrylate-functionalized monomer may advantageously function as a reactive diluent and reduce the viscosity of the composition.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in component B): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

The polymerizable component may comprise a poly(meth)acrylate-functionalized monomer.

A poly(meth)acrylate-functionalized monomer may have from 2 to 6 (meth)acrylate groups, in particular from 2 to 6 acrylate groups.

Examples of suitable poly(meth)acrylate-functionalized monomers include acrylate and methacrylate esters of polyols. Examples of suitable polyols are as listed above for Ar_{OH} and Al_{OH}. Such polyols may be fully or partially esterified (with (meth)acrylic acid, (meth)acrylic anhydride, (meth)acryloyl chloride or the like), provided they contain at least two (meth)acrylate functional groups per molecule.

Exemplary poly(meth)acrylate-functionalized monomers may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

In a preferred embodiment, the polymerizable component comprises at least one poly(meth)acrylate-functionalized monomer selected from glycerol tri(meth)acrylate; diglycerol tetra(meth)acrylate, triglycerol penta(meth)acrylate, tetraglycerol hexa(meth)acrylate, trimethylolethane tri(meth)acrylate; trimethylolpropane tri(meth)acrylate; pentaerythritol tetra(meth)acrylate, di(trimethylolpropane) tetraacrylate, sorbitol penta(meth)acrylate; di(pentaerythritol) hexa(meth)acrylate; tris (2-hydroxyethyl) isocyanurate tri(meth)acrylate, as well as the alkoxylated (e.g., ethoxylated and/or propoxylated) derivatives thereof, and combinations thereof.

The polymerizable component may comprise from 0 to 100 wt.%, in particular from 5 to 90 wt.%, more particularly from 10 to 80 wt.%, even more particularly from 15 to 75 wt.%, more particularly still from 20 to 70 wt.% of (meth)acrylate-functionalized monomer, based on the total weight of the polymerizable component. In particular, the polymerizable component may comprise from 50 to 100 wt.% or from 55 to 99.5 wt.% or 60 to 99 wt.% or 65 to 98.5 wt.% or 70 to 98 wt.% of (meth)acrylate-functionalized monomer, based on the total weight of the polymerizable component.

The polymerizable component may comprise a (meth)acrylate-functionalized oligomer. The polymerizable component may comprise a mixture of (meth)acrylate-functionalized oligomers.

A (meth)acrylate-functionalized oligomer may be selected in order to enhance the flexibility, strength and/or modulus, among other attributes, of a cured polymer prepared by curing the curable composition of the invention.

A (meth)acrylate functionalized oligomer may have 1 to 18 (meth)acrylate groups, in particular 2 to 6 (meth)acrylate groups, more particularly 2 to 6 acrylate groups.

A (meth)acrylate functionalized oligomer may have a number average molecular weight equal or more than 600 g/mol, in particular 800 to 15,000 g/mol, more particularly 1,000 to 5,000 g/mol.

In particular, the polymerizable component may comprise a (meth)acrylate-functionalized oligomer selected from the group consisting of epoxy (meth)acrylates, polyester (meth)acrylates, polyether (meth)acrylates, urethane (meth)acrylates, (meth)acrylated poly(meth)acrylates and mixtures thereof.

Non-limiting examples of epoxy (meth)acrylates are the reaction products of an epoxide (such as glycidyl ethers, glycidyl esters, cycloaliphatic epoxides or epoxides obtained by epoxidation of mono- and/or polyunsaturated compounds) with a (meth)acrylating agent (such as (meth)acrylic acid, (meth)acrylic anhydride, (meth)acryloyl chloride or combinations thereof). The epoxide may be an epoxide EPOX selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a poly(ethylene glycol) diglycidyl ether, a poly(propylene glycol) diglycidyl ether, a poly(trimethylene glycol) diglycidyl ether, a poly(tetramethylene glycol) diglycidyl ether, a poly(ethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, diglycidyl phthalate, diglycidyl terephthalate, diglycidyl isophthalate, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain (C6-C22) dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, an epoxidized vegetable oil (such as epoxidized soybean oil and epoxidized linseed oil), epoxybutylstearic acid, epoxyoctylstearic acid, epoxidized polybutadiene, triglycidyl isocyanurate and the like.

Non-limiting examples of polyester (meth)acrylates are the reaction products of a hydroxyl group-terminated polyester polyol with a (meth)acrylating agent (such as (meth)acrylic acid, (meth)acrylic anhydride, (meth)acryloyl chloride or combinations thereof). The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of a polyhydroxyl functional component (in particular a diol) and a polycarboxylic acid functional compound (in particular, a dicarboxylic acid or anhydride). To prepare the polyester (meth)acrylates, the hydroxyl groups of the polyester polyol are then partially or fully esterified by reacting with the (meth)acrylating agent. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Non-limiting examples of polyether (meth)acrylates are the condensation reaction products of a polyetherol which is a polyether polyol with a (meth)acrylating agent (such as (meth)acrylic acid, (meth)acrylic anhydride, (meth)acryloyl chloride or combinations thereof). Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Non-limiting examples of urethane (meth)acrylates are the condensation reaction products of at least one polyisocyanate (e.g., diisocyanate, triisocyanate), at least one polyol (such as a polyether polyol or a polyester polyol) and a hydroxyl-functionalized (meth)acrylate (such as 2-hydroxyethyl (meth)acrylate or 3-hydroxypropyl (meth)acrylate) to provide terminal (meth)acrylate groups. For example, the urethane (meth)acrylate may contain two, three, four or more (meth)acrylate groups per molecule. The order of addition of the components to prepare the urethane (meth)acrylate is well known in the art. For example, the hydroxyl-functionalized (meth)acrylate may be first reacted with the polyisocyanate to obtain an isocyanate-functionalized (meth)acrylate, which is then reacted with the polyol. In yet another embodiment, the polyisocyanate may be first reacted with the polyol to obtain an isocyanate-functionalized polyol, which is thereafter reacted with a hydroxyl-functionalized (meth)acrylate. Alternatively, all the components may be combined and reacted at the same time.

Non-limiting examples of (meth)acrylated poly(meth)acrylates are substances having an oligomeric (meth)acrylic backbone which is functionalized with one or (meth)acrylate groups (which may be at a terminus of the oligomer or pendant to the acrylic backbone). The (meth)acrylic backbone may be a homopolymer, random copolymer or block copolymer comprised of repeating units of (meth)acrylic monomers. The (meth)acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. (Meth)acrylated poly(meth)acrylates may be prepared using any procedures known in the art, such as by oligomerizing (meth)acrylic monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized poly(meth)acrylate, which is then reacted with one or more (meth)acrylate-containing reactants to introduce the desired (meth)acrylate functional groups.

The polymerizable component may comprise from 0 to 100 wt.%, in particular from 10 to 95 wt.%, more particularly from 20 to 90 wt.%, even more particularly from 25 to 85 wt.%, more particularly still from 30 to 80 wt.% of (meth)acrylate-functionalized oligomer, based on the total weight of the polymerizable component. In particular, the polymerizable component may comprise from 0 to 50 wt.%, from 0.1 to 45 wt.%, from 0.2 to 40 wt.%, from 0.3 to 35 wt.% or 0.4 to 30 wt.% of (meth)acrylate-functionalized oligomer, based on the total weight of the polymerizable component.

The polymerizable component may comprise one or more ethylenically unsaturated compounds other than a (meth)acrylate-functionalized monomer or oligomer. Examples of such ethylenically unsaturated compounds include:
- polyvinylic and/or polyallylic monomers (in particular divinyl benzene, 1,4-butanediol divinyl ether, tri(ethylene glycol) divinyl ether, diallyl ether, glycerol diallyl ether, glycerol triallyl ether, trimethylolpropane diallyl ether, trimethylolpropane triallyl ether, pentaerythritol triallyl ether, pentaerythritol tetraallyl ether, diallyl phthalate, triallyl isocyanurate, 2,4,6-triallyloxy-1,3,5-triazine, glyoxal bis(diallyl acetal) and mixtures thereof);
- vinyl esters of carboxylic acids (in particular vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof);
- vinyl ethers (in particular vinyl methyl ether, vinyl ethyl ether, vinyl n-butyl ether, vinyl isobutyl ether and mixtures thereof, ethylene glycol divinyl ether, triethylene glycol divinyl ether and trimethylolpropane trivinyl ether);
- cycloaliphatic vinyl monomers (in particular vinylcyclohexane);
- olefins (in particular ethylene, propene, 1-butene, isobutylene, diisobutylene, 1-nonene, 1-decene and mixtures thereof);
- conjugated dienes (in particular butadiene, isoprene, pentadiene, chlorodiene and mixtures thereof);
- vinyl aromatic monomers (in particular styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof);
- mono- or dicarboxylic acid monomers, cyclic anhydride monomers and salts thereof (in particular 3-butenoic acid, crotonic acid, vinyl acetic acid, fumaric acid, maleic acid, maleic anhydride, tetrahydrophthalic acid, tetrahydrophthalic anhydride, itaconic acid, mesaconic acid, citraconic acid, glutaconic acid, muconic acid and mixtures thereof);
- unsaturated polymers such as polybutadiene;
- as well as the alkoxylated (e.g., ethoxylated and/or propoxylated) derivatives thereof; and mixtures thereof.

The polymerizable component may comprise one or more cationically-polymerizable compound.

The term "cationically-polymerizable compound" means a compound comprising a polymerizing functional group which polymerizes via a cationic mechanism, for example a heterocyclic group or a carbon-carbon double bond substituted with an electrodonating group. In a cationic polymerization mechanism, a cationic initiator forms a Brønsted or Lewis acid species that binds to the cationically-polymerizable compound which then becomes reactive and leads to chain growth by reaction with another cationically-polymerizable compound.

The cationically-polymerizable compound may be selected from an epoxide, an oxetane, an oxolane, a cyclic acetal, a cyclic lactone, a thiirane, a thiethane, a spiro orthoester, a derivative thereof, and mixtures thereof, and is preferably chosen among an epoxide, an oxetane and mixtures thereof.

The polymerizable component may comprise from 0 to 100 wt.%, in particular from 5 to 90 wt.%, more particularly from 10 to 80 wt.%, even more particularly from 15 to 75 wt.%, more particularly still from 20 to 70 wt.% of cationically-polymerizable compound, based on the total weight of the polymerizable component. In particular, the polymerizable component may comprise from 0 to 50 wt.%, from 0.1 to 40 wt.%, from 0.2 to 30 wt.% or from 0.3 to 20 wt.% of cationically-polymerizable compound, based on the total weight of the polymerizable component.

In a preferred embodiment, the polymerizable component comprises an epoxide.

Exemplary epoxides suitable for use include mono-epoxides, di-epoxides, and poly-epoxides (compounds containing three or more epoxy groups per molecule).

In one embodiment, the epoxide may bear two or three glycidyl ether groups. The epoxide may be an aromatic epoxy or an aliphatic epoxy.

The aromatic epoxy may be an aromatic glycidyl ether. As used herein, the term "aromatic glycidyl ether" means a compound comprising at least two glycidyl ether groups connected to one another by an aromatic linker. Such a compound may be represented by Formula (G): 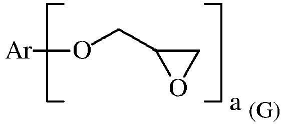 wherein:
- Ar is as defined above for segment b);
- a is at least 2, preferably 2 to 10, more preferably 2 to 6.

The aliphatic epoxy may be an aliphatic glycidyl ether. As used herein, the term "aliphatic glycidyl ether" means a compound comprising at least two glycidyl ether groups connected to one another by an aliphatic linker. Such a compound may be represented by Formula (H): 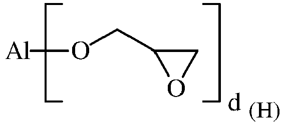 wherein
- Al is as defined above for segment b);
- d is at least 2, preferably 2 to 10, more preferably 2 to 6.

In another embodiment, the epoxide may be a cycloaliphatic epoxide, i.e. a compound having an epoxide ring that is fused with a cyclohexyl ring.

In another embodiment, the epoxide may be an epoxidized vegetable oil. As used herein the term "epoxidized vegetable oil" means an unsaturated vegetable oil wherein at least part of the carbon-carbon double bonds has been converted into epoxides.

Specific examples of suitable epoxides are listed above in EPOX for the epoxy (meth)acrylates that may be used in the polymerizable component.

The polymerizable component may comprise an oxetane compound.

Suitable illustrative oxetanes include oxetane itself and substituted derivatives thereof, provided the substituents do not interfere with the desired reaction/polymerization/curing of the oxetane. The substituent(s) may be, for example, alkyl groups, hydroxyalkyl groups, halo, haloalkyl groups, aryl groups, aralkyl groups and the like. The oxetane may be a mono-oxetane (a compound containing a single oxetane ring), a di-oxetane (a compound containing two oxetane rings), a tri-oxetane (a compound containing three oxetane rings), or an oxetane compound containing four or more oxetane rings. Examples of suitable oxetanes include, but are not limited to, oxetane, , 3-ethyl-3-hydroxymethyl oxetane, 1,4-bis[(3-ethyl-3-oxetanylmethoxy)methyl]benzene, 3-ethyl-3-phenoxymethyl oxetane, 3-ethyl-3-{[(3-ethyloxetan-3-yl)methoxy]methyl}oxetane, 3,3-bis (chloromethyl oxetane), 3-ethyl-3-[(phenylmethoxy)methyl]-oxetane, , 4,4'-bis(3-ethyl-3-oxetanyl)methoxymethyl]biphenyl, 3,3-bis (iodomethyl) oxetane, 3,3-bis(methoxymethyl) oxetane, 3,3-bis(phenoxymethyl) oxetane, 3-methyl-3-chloromethyl oxetane, 3,3-bis(acetoxymethyl) oxetane, 3,3-bis (fluoromethyl) oxetane, 3,3-bis(bromomethyl) oxetane, 3,3-dimethyl oxetane, , 3-ethyl-3-[[(2-ethylhexyl)oxy]methyl]oxetane, bis[(3-ethyloxetan-3-yl)methoxy](dimethyl)silane, trimethylolpropane tris(3-ethyl-3-oxetanylmethyl)ether and the like and combinations thereof.

Examples of compounds having two or more oxetane rings in the compound, which may be used include: 3,7-bis(3-oxetanyl)-5-oxa-nonane, 3,3'-(1,3-(2-methylenyl)propanediylbis(oxymethylene))bis-(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl)ether, dicyclopentenyl bis(3-ethyl-3 oxetanylmethyl)ether, triethylene glycol bis(3-ethyl-3-oxetanylmethyl)ether, tetraethylene glycol bis(3-ethyl-3-oxetanylmethyl)ether, tricyclodecanediyldimethylene(3-ethyl-3-oxetanylmethyl)ether, trimethylolpropane tris(3-ethyl-3-oxetanylmethyl)ether, 1,4-bis(3-ethyl-3 oxetanylmethoxy)butane, 1,6-bis(3-ethyl-3-oxetanylmethoxy)hexane, pentaerythritol tris(3-ethyl-3-oxetanylmethyl)ether, pentaerythritol tetrakis(3-ethyl-3-oxetanylmethyl)ether, polyethylene glycol bis(3-ethyl-3-oxetanylmethyl)ether, dipentaerythritol hexakis(3-ethyl-3-oxetanylmethyl)ether, dipentaerythritol pentakis(3-ethyl-3-oxetanylmethyl)ether, dipentaerythritol tetrakis(3-ethyl-3-oxetanylmethyl)ether, caprolactone-modified dipentaerythritol hexakis(3-ethyl-3-oxetanylmethyl)ether, caprolactone-modified dipentaerythritol pentakis(3-ethyl-3-oxetanylmethyl)ether, ditrimethylolpropane tetrakis(3-ethyl-3-oxetanylmethyl)ether, EO-modified Bisphenol A bis(3-ethyl-3-oxetanylmethyl)ether, PO-modified Bisphenol A bis(3-ethyl-3-oxetanylmethyl)ether, EO-modified hydrogenated Bisphenol A bis(3-ethyl-3-oxetanylmethyl)ether, PO-modified hydrogenated Bisphenol A bis(3-ethyl-3-oxetanylmethyl)ether, EO-modified Bisphenol F (3-ethyl-3-oxetanylmethyl)ether, and the like and combinations thereof.

Additional examples of suitable oxetanes are described in the following patent documents, the disclosures of each of which are incorporated herein by reference in their entireties for all purposes: U.S. Pat. Publication No. 2010/0222512 A1, U.S. Pat. No. 3,835,003, U.S. Pat. No. 5,750,590, U.S. Pat. No. 5,674,922, U.S. Pat. No. 5,981,616, U.S. Pat. No. 6,469,108, U.S. Pat. No. 6,015,914, and U.S. Pat. No 8377623. Suitable oxetanes are available from commercial sources, such as the oxetanes sold by the Toagosei Corporation under the tradenames OXT-221, OXT-121, OXT-101, OXT-212, OXT-211, CHOX, OX-SC, and PNOX-1009.

### Inhibitor

In some embodiments, the curable composition of the invention comprises at least one dual curable oligomer as described herein, and at least one inhibitor. According to these embodiments, the composition may comprise from 10 ppm to 5 wt.% of one or more inhibitors, for example from 20 ppm to 4 wt.%, from 50 ppm to 3 wt.%, from 100 ppm to 1 wt.%, or from 120 ppm to 0.1 wt.%, based on the total weight of the curable composition.

Inhibitors may be introduced in the curable composition in order to provide adequate storage stability and shelf life. As described above, an inhibitor may typically retard or prevent reaction or curing of polymerizable functional groups present in a composition, notably in the absence of radiation.

As described above, any of the inhibitors known in the art related to ethylenically unsaturated compounds may be utilized in the composition of the invention.

### Initiator

The curable composition may comprise an initiator selected from a free radical initiator, a cationic initiator and combinations thereof. The curable composition may comprise a mixture of a free radical initiator and a cationic initiator.

Initiators are generally divided into two classes, depending on their mode of action: free radical initiators and cationic initiators.

Free radical initiators encompass both photoinitiators and thermal initiators.

Photoinitiators are compounds that that can generate free radicals upon exposure to light of an appropriate wavelength and/or intensity. Photoinitiators can adopt two different modes of action, and are classified by mode of action as Norrish Type I and Norrish Type II photoinitiators. As used herein, the term "activity" with reference to Norrish Type I and Norrish Type II activity is intended to relate to Norrish photoinitiation and analogous reactions. For instance, a photoinitiator having Norrish Type I activity within the scope of this invention would be a photoinitiator characterized by a cleavage reaction into two radical fragments of the original photoinitiator on exposure to light. For an initiator having Norrish Type II activity, exposure to light causes the abstraction of an atom, such as hydrogen, to generate the radical.

Thermal initiators are compounds that can generate free radicals upon exposure to heat and/or in the presence of a reducing agent.

Cationic initiators are often salts, for instance iodonium and sulfonium salts. When these salts are activated (i.e., by irradiation with actinic radiation such as light), they undergo homolytic bond cleavage forming radicals that react with a proton donor to give a Brønsted or Lewis acid. The generated acid then initiates the polymerization.

The curable composition may comprise a free radical initiator which is a photoinitiator, in particular a photoinitiator having Norrish type I activity and/or Norrish type II activity, more particularly a free radical initiator having Norrish type I activity.

Non-limiting types of photoinitiators suitable for use in the curable compositions of the present invention include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1- [4-(methylthio) phenyl] -2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the photoinitiator may comprise a photoinitiator selected from a benzophenone such as SpeedCure^{®} BP (benzophenone), SpeedCure^{®} 7005 (polymeric benzophenone), SpeedCure^{®} 7006 (polymeric benzophenone), SpeedCure^{®} EMK (4,4'-bis(diethylamino)benzophenone) or SpeedCure^{®} BMS (4-benzoyl-4'-methyldiphenyl sulphide); a thioxanthone such as SpeedCure^{®} 7010 (polymeric thioxanthone), SpeedCure^{®} ITX (isopropyl thioxanthone), SpeedCure^{®} DETX (2,4-diethylthioxanthone) or SpeedCure^{®} CPTX (1-chloro-4-propoxythioxanthone); an α-hydroxy acetophenone; an acylphosphine oxide such as SpeedCure^{®} BPO (phenyl bis(2,4,6-trimethylbenzoyl)-phosphine oxide), SpeedCure^{®} TPO (2,4,6-trimethylbenzoyldiphenylphosphine oxide) or SpeedCure^{®} TPO-L (ethyl (2,4,6-trimethylbenzoyl)phenyl phosphinate); a phenylglyoxylate such as SpeedCure^{®} MBF (methylbenzoylformate); and mixtures thereof.

The curable composition may comprise a free radical initiator which is a thermal initiator.

Thermal initiators are well known in the art and include, for example, peroxides (i.e., a compound comprising an oxygen-oxygen single bond), especially inorganic persulfate compounds such as ammonium persulfate, potassium persulfate and sodium persulfate; hydrogen peroxide; organic peroxides such as cumene hydroperoxide, t-butyl hydroperoxide, acetyl peroxide, benzoyl peroxide, lauroyl peroxide; peracids such as peracetic acid and perbenzoic acid; redox initiators wherein a reducing agent such as a ferrous compound promotes the decomposition of a peroxide; as well as other free radical producing materials such as an azo-initiator (i.e., a compound comprising an nitrogen-nitrogen double bond), for example 2,2'-azobisisobutyronitrile, 4,4'-azobis(4-cyanovaleric acid) or 2,2'-azobis(2-methylbutyronitrile); and combinations thereof.

The curable composition may comprise a cationic photoinitiator.

In particular, the cationic photoinitiator may be selected from onium salts with anions of weak nucleophilicity, such as halonium salts or sulfonium salts (e.g., triarylsulfonium salts such as triarylsulfonium hexafluoroantimonate salts); sulfoxonium salts; diazonium salts; metallocene salts; and mixtures thereof.

Halonium salts are of particular interest. A halonium salt is an ionic compound comprising a halonium cation (i.e. a halogen atom carrying a positive charge). The halonium cation may be represented by the general structure R-X^{+ -}R', where X is a halogen, preferably iodine, and R and R' are any group, preferably an aryl. The halonium cation may be cyclic or an open chain molecular structure. Halonium cations comprising a fluorine, chlorine, bromine, and iodine atom are respectively called fluoronium, chloronium, bromonium, and iodonium. The counter-ion of the salt may be any type of anion such as Cl⁻, Br⁻; I⁻, fluoroalkyl-SO3⁻, ArylSO₃-, SbF₆⁻, SbF₅OH⁻, AsF₆, PF₆⁻, BF₄⁻or B(CeF5)₄⁻.

The cationic initiator may be a iodonium salt. Preferred iodonium salts include diaryliodonium salts such as diphenyliodonium chloride, diphenyliodonium hexafluorophosphate, diphenyliodonium hexafluoroantimonate, diphenyliodonium tetrafluoroborate, di(4-methylphenyl)iodonium tetrafluoroborate; phenyl-4-methylphenyliodonium tetrafluoroborate; di(4-heptylphenyl)iodonium tetrafluoroborate; di(3-nitrophenyl)iodonium hexafluorophosphate; di(4-chlorophenyl)iodonium hexafluorophosphate; di(naphthyl)iodonium tetrafluoroborate; di(4-trifluoromethylphenyl)iodonium tetrafluoroborate; di(4-methylphenyl) iodonium hexafluorophosphate; diphenyliodonium, hexafluoroarsenate; di(4-phenoxyphenyl)iodonium tetrafluoroborate; phenyl-2-thienyliodonium hexafluorophosphate; 3,5-dimethylpyrazolyl-4-phenyliodonium hexafluorophosphate; 2,2'- diphenyliodonium tetrafluoroborate; di(2,4-dichlorophenyl) iodonium hexafluorophosphate; di(4-bromophenyl)iodonium hexafluorophosphate; di(4-methoxyphenyl)iodonium hexafluorophosphate; di(3-carboxyphenyl)iodonium hexafluorophosphate; di(3-methoxycarbonylphenyl)iodonium hexafluorophosphate; di(3-methoxysulfonylphenyl)iodonium hexafluorophosphate; di(4-acetamidophenyl)iodonium hexafluorophosphate; di(2-benzothienyl)iodonium hexafluorophosphate; and diphenyliodonium hexafluoroantimonate. Particularly preferred iodonium salts are diaryliodonium hexafluorophosphate, diaryliodonium hexafluoroantimonate, 4-octyloxyphenyl phenyliodonium hexafluoroantimonate, 4-(2-hydroxytetradecyloxyphenyl)phenyliodonium hexafluoroantimonate, and 4-(1-methylethyl)phenyl 4-methylphenyliodonium tetrakis(pentafluorophenyl)borate.

The cationic initiator may be a sulfonium salt. Preferred sulfonium salts include Cyracure^{®} UVI-6974 and UVI-6976 (which are a mixture of S,S,S,S'-Tetraphenylthiobis(4,1-phenylene)disulfonium dihexafluoroantimonate and diphenyl(4-phenylthiophenyl)sulfonium hexafluoroantimonate), Cyracure^{®} UVI-6970, UVI-6960, UVI-6990 (DOW Corp.), CD1010, CD-1011, CD-1012 (Sartomer Corp.), Adekaoptomer SP150, SP-151, SP-170, SP-171 (Asahi Denka Kogyo Co., Ltd.), Irgacure^{®} 261, CI-2481, CI-2624, CI-2639, CI2064 (Nippon Soda Co, Ltd.), and DTS-102, DTS-103, NAT-103, NDS-103, TPS-103, MDS-103, MPI-103, BBI-103 (Midori Chemical Co, Ltd.). Most preferred are UVI-6974, CD-1010, UVI-6976, Adekaoptomer SP-170, SP-171, CD-1012, and MPI-103 and KI78 (hexafluoroantimony sulfonium salt from Asahi Denka), a mixture of S,S,S,S'-Tetraphenylthiobis(4,1-phenylene)disulfonium dihexafluoroantimonate and diphenyl(4-phenylthiophenyl)sulfonium hexafluoroantimonate, 4-[4-(3- chlorobenzoyl)phenylthio]phenylbis(4-fluorophenyl)sulfonium hexafluoroantimonate, 4-[4-(3- chlorobenzoyl)phenylthio]phenylbis(4-fluorophenyl)sulfonium tetrakis(pentafluorophenyl)borate, 4-[4-(3-chlorobenzoyl)phenylthio]phenylbis(4-fluorophenyl)sulfonium tetrakis(3,5-difluoro-4-methyloxyphenyl)borate, 4-[4-(3-chlorobenzoyl)phenylthio]phenylbis(4-fluorophenyl)sulfonium tetrakis(2,3,5,6-tetrafluoro-4-methyloxyphenyl)borate, tris(4-(4-acetylphenyl)thiophenyl)sulfonium tetrakis(pentafluorophenyl)borate (Irgacure^{®} PAG 290 from BASF), tris(4-(4-acetylphenyl)thiophenyl)sulfonium tris[(trifluoromethyl)sulfonyl]methide (Irgacure^{®} GSID 26-1 from BASF), tris(4-(4-acetylphenyl)thiophenyl)sulfonium hexafluorophosphate (Irgacure^{®} 270 from BASF), and HS-1 available from San-Apro Ltd, bis[4- diphenylsulfoniumphenyl] sulfide bishexafluoroantimonate; thiophenoxyphenylsulfonium hexafluoroantimonate (available as Chivacure 1176 from Chitec), 4-[4-(2-chlorobenzoyl)phenylthio]phenylbis(4-fluorophenyl)sulfonium hexafluoroantimonate (as SP-172 from Adeka), SP-300 from Adeka, and aromatic sulfonium salts with anions of (PF₆₋ₘ(CₙF₂ₙ₊₁)ₘ)⁻ where m is an integer from 1 to 5, and n is an integer from 1 to 4 (available as CPI-200K or CPI-200S, which are monovalent sulfonium salts from San-Apro Ltd., TK-1 available from San-Apro Ltd., or HS-1 available from San-Apro Ltd.).

The amount of initiator may be varied as may be appropriate depending on the initiator(s) selected, the amounts and types of polymerizable species present in the curable composition, the radiation source and the radiation conditions used, among other factors. Typically, however, the total amount of initiator may be from 0 to 10 wt.%, in particular from 0.1 to 9 wt.%, more particularly from 0.5 to 8 wt.%, even more particularly from 1 to 6 wt.%, based on the total weight of the curable composition. For example, the total amount of initiator may be from 0 to 5 wt.%, from 0.02 to 3 wt.%, from 0.05 to 2 wt.%, from 0.1 to 1.5 wt.% or from 0.2 to 1 wt.% based on the total weight of the curable composition. In another example, the amount of photoinitiator other than b) may be from 1 to 5 wt.%, from 1.5 to 5 wt.%, from 2 to 5 wt.%, from 2.5 to 5 wt.% or from 3 to 5 wt.%, based on the total weight of the curable composition.

### Epoxy crosslinking agent

The curable composition may comprise an epoxy crosslinking agent.

An epoxy crosslinking agent is a component which reacts with the epoxy functions of the dual cure oligomer and creates a three-dimensional crosslinked system. When the curable composition comprises an epoxy crosslinking agent, the composition is preferably a two-component composition (or 2K composition) wherein the dual curable oligomer is kept separate from the epoxy crosslinking agent during storage and the end user mixes both components shortly before use.

An epoxy crosslinking agent may be a compound comprising one or more functional groups selected from an amine, a carboxylic acid, an anhydride, or a thiol. Specific examples of epoxy crosslinking agents which can be used in the compositions of the present invention are formaldehyde crosslinking agents and polyamine crosslinking agents. Formaldehyde crosslinking agents include phenol-formaldehyde, resorcinol-formaldehyde, catechol-formaldehyde, hydroquinone-formaldehyde, cresol-formaldehyde, phloroglucinol-formaldehyde, pyrogallol-formaldehyde, melamine-formaldehyde, urea-formaldehyde, and blends or derivatives thereof. Polyamine crosslinking agents include aliphatic or alicyclic polyamines, such as ethylenediamine (EDA), diethylenetriamine (DETA), triethylenetetramine (TETA), tetraethylenepentamine (TEPA), polyoxypropylenediamine, polyoxypropylenetriamine, isophorone diamine, menthane diamine, bis (4-amino-3-methyldicyclohexyl)methane and the like.

### Additives (e.g., fillers, elastomers)

The curable compositions of the present invention may optionally contain one or more additives selected from the group consisting of antioxidants, ultraviolet absorbers, photostabilizers, foam inhibitors, flow or leveling agents, colorants, pigments, dispersants (wetting agents), slip additives, fillers, elastomers, thixotropic agents, matting agents, waxes, any additive conventionally utilized in coating, sealant, adhesive, ink or molding compositions, and combinations thereof.

In some embodiments, the curable compositions of the invention comprise one or more fillers. Examples of fillers include glass particles, quartz, graphite powder, carbon black and aluminum oxide powder.

In some embodiments, the curable compositions of the invention comprise one or more elastomers. Examples of elastomers include RTV rubber and silicone rubber.

In some embodiments, the curable compositions of the invention are solvent-free. In such embodiments, they notably contain no organic solvent.

According to certain embodiments, the curable compositions have a viscosity at 25°C ranging from 100 mPa.s to 500,000 mPa.s, for example from 1,000 mPa.s to 300,000 mPa.s. A viscosity of less than 100 mPa.s may be unsuitable for the applications of the present invention, as they present insufficient adhesiveness. A viscosity of more than 500,000 mPa.s may be unsuitable as well, as the application of the compositions on the substrate surface may be difficult. The viscosity of the compositions may be measured on a rotary viscometer.

### End-use applications

The curable compositions of the invention are useful as adhesives, inks, masks for printing, coloring systems, 3D printing resins, sealants, coatings, among other potential applications.

Cured compositions prepared from curable compositions as described herein may be used, for example, in laminated or adhered articles (wherein a first component of the article is laminated or adhered to a second component by means of the cured composition), three-dimensional articles (wherein the three-dimensional article may consist essentially of or consist of the cured composition), coated articles (wherein a substrate is coated with one or more layers of the cured composition), or printed articles (wherein graphics or the like are imprinted on a substrate, such as a paper, plastic or metal substrate, using the cured composition).

Cured compositions may be especially useful as, among others, adhesives for electric or electronic components (including microelectronics components), adhesive for gyroscopes, printed circuit board (PCB) solder masking, integrated circuit (IC) packaging, liquid crystal rapid sealings, optical/display device assembling, and water-based dual curable coatings.

The curable compositions described herein are especially useful as UV/EB curable resins, that is, compositions intended for use as adhesives for electric or electronic components, in navigation systems and in devices used to measure orientation, such as gyroscopes. When operating, such components and articles may be submitted to environmental stresses which may adversely affect their properties and compromise their functions. Temperature and vibrations are examples of such environmental factors which may deprive components of their functions when in-use. Due to their intrinsic properties, the curable compositions of the present invention are especially useful to provide a uniform temperature environment and minimize the effects of the vibrations on the articles and components.

### Method of making a cured composition

The method of making a cured composition of the invention comprises curing the curable composition as described herein. The cured composition presents mechanical properties which are well-suited to withstand environmental stresses such as high temperature and vibrations.

Curing may be accelerated or facilitated by supplying energy to the composition, such as by exposing the composition to a radiation source, such as visible or UV light, infrared radiation, and/or electron beam radiation and/or by heating the composition. The cured composition is the reaction product obtained from curing the curable composition described herein.

In some embodiments, the method of making a cured composition comprises exposing the curable composition to ultraviolet light (UV) radiation, electron beam (EB) radiation and/or heat.

The curable compositions of the present invention are particularly well suited to being cured using LED (Light Emitting Diode) curing, e.g., UV LED curing, using radiation from a UV LED device, as well as heat, e.g., temperatures ranging from 30 to 200 °C.

In particular, thermal curing may take place at a temperature ranging from 60°C to 200°C. The temperatures selected for thermal curing may notably depend on the type of curing agents which may be used in the compositions to be cured. In some embodiments, the thermal curing is carried out at a temperature ranging from 50°C to 100°C, for example ranging from 60°C to 95°C. In some other embodiments, the thermal curing is carried out at a temperature ranging from 100°C to 150°C, for example ranging from 110°C to 145°C. In some other embodiments yet, the thermal curing is carried out at a temperature ranging from 150°C to 200°C, for example ranging from 155°C to 195°C.

In particular, the curable compositions of the invention are well-suited for use in applications requiring a fast curing.

In some preferred embodiments, the method of making a cured composition comprises exposing the curable composition to UV/EB radiation and heat. The oligomers of the present invention notably present the unique property of not only polymerizing under UV radiation when combined with a photoinitiator or when treated with a beam of high energy electrons, but also under heat. This makes the oligomer of the invention most suited for applications requiring a fast curing.

In some embodiments, the method of making a cured composition according to the present invention comprises two successive steps:
- a step consisting in activating one of the two segments of the dual curing oligomer in response to a first curing source; and
- a step consisting in activating the other segments of the dual curing oligomer in response to a second curing source.
In such embodiments, the first curing source is preferably a radiation source, such as visible or UV light, infrared radiation, and/or electron beam radiation, to activate the segments bearing the unsaturation, wherein an effective amount of radiation (i.e., a radiation of sufficient intensity and duration) is applied to cause at least a partial curing of the composition. The second curing source is preferably a heat source to activate the epoxy segments of the dual curing oligomers. In these embodiments, the first curing step may be implemented to set/stabilize the shape of the composition being cured, while the second curing step may reinforce the mechanical properties of the composition.

The composition of the invention may be applied to a substrate surface, then cured by exposure to a first source of curing (for example a dose of radiation), followed by exposure to a second source of curing (for example heat); alternatively, the composition of the invention may be applied to a substrate surface and simultaneously cured by exposure to a first source of curing (for example a dose of radiation), then exposed to a second source of curing (for example heat).

A plurality of layers of a composition may also be applied to a substrate surface; the plurality of layers may be simultaneously cured or each layer may be successively cured before application of an additional layer of the composition.

In some embodiments, the method of making a cured composition according to the present invention comprises the successive steps of:
a) applying the curable composition onto a substrate surface;
b) curing the composition by exposing the surface to an effective amount of radiation (e.g., electron beam radiation, UV radiation, visible light) for a time sufficient to cause an at least partial curing (e.g., at least 50 % or at least 60 % curing) of the composition; and
c) curing the composition by heating the surface for a time sufficient to complete the curing of step b).

In these embodiments, step b) may be implemented simultaneously than step a).

### ASPECTS OF THE INVENTION

The invention may be according to the following aspects.

Aspect 1. A dual curable oligomer, comprising:
a) a segment comprising at least one ethylenic unsaturation;
b) a segment comprising at least one epoxy group;
c) a segment comprising at least one urethane bond;
wherein segments a) and b) are connected to one another by segment c).

Aspect 2. The oligomer of aspect 1, wherein segment a) has the structure of Formula (A1) or (A2): 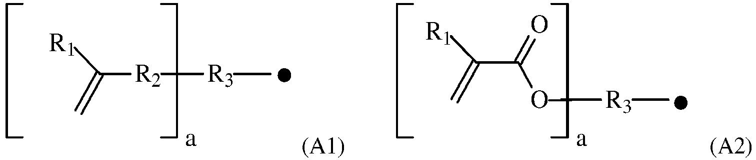 wherein:
- a is at least 1;
- each R₁ is independently H or CH₃;
- each R₂ is independently selected from direct bond, *-C(=O)-O-, *-C(=O)-NH-, -O- and ^{∗}-CH₂-O-, the ^{∗} representing the point of attachment to the carbon-carbon double bond;
- R₃ is a (a+1)valent linker; and
- the symbol • represents the point of attachment to segment c).

Aspect 3. The oligomer of aspect 1 or 2, wherein in segment of Formulae (A1) or (A2), a is equal to 1, 2, 3, 4, 5 or 6; preferably 1, 2 or 3.

Aspect 4. The oligomer of any one of aspects 1-3, wherein in segment of Formulae (A1) or (A2), R₃ is a (a+1)valent linker.

Aspect 5. The oligomer of any one of aspects 1-4, wherein R₃ is a (a+1)valent linker selected from an aliphatic, aromatic or araliphatic hydrocarbon linker, a polyether linker, a polyester linker, a polycarbonate linker, a polyorganosiloxane linker, a polydiene linker, an isocyanurate linker, and combinations thereof.

Aspect 6. The oligomer of any one of aspects 1-5, wherein R₃ is a (a+1)valent linker selected from an alkylene, an alkoxylated alkylene, a polycaprolactone linker and combinations thereof.

Aspect 7. The oligomer of any one of aspects 1-6, wherein R₃ is a divalent linker of any one of the following Formulae (1) to (5):

-(CR₂₂R'₂₂)ₘ- (1)

-[(CR₂₃R'₂₃)ₙ-O]ₒ-(CR₂₃R'₂₃)ₙ- (2)

-[(CR₂₄R'₂₄)ₚ-O]_{q}-(CR₂₅R'₂₅)ᵣ-[O-(CR₂₆R'₂₆)_{p'}]_{q'}- (3)

-[(CR₂₇R'₂₇)ₛ-C(=O)O]ₜ-(CR₂₈R'₂₈)ᵤ-^{∗} (4)

-[(CR₂₉R'₂₉)ᵥ-O-C(=O)-(CR₃₀R'₃₀)_{w}-C(=O)-O]ₓ-(CR₂₉R'₂₉)ᵥ- (5)

wherein:
- R₂₂, R'₂₂, R₂₅, R'₂₅, R₂₉, R'₂₉, R₃₀ and R'₃₀ are independently H or alkyl;
- R₂₃, R'₂₃, R₂₄, R'₂₄, R₂₆, R'₂₆, R₂₇, R'₂₇, R₂₈ and R'₂₈ are independently H or methyl;
- m is 2 to 50;
- n, p and p' are independently 2 to 4;
- o is 1 to 20;
- q and q' are independently 0 to 20 with the proviso that at least one of q and q' is not 0;
- r is 2 to 20;
- s is 3 to 12;
- t is 1 to 20;
- u is 2 to 8;
- v is 2 to 20;
- w is 2 to 30;
- x is 1 to 20;
- the symbol * represents the point of attachment to the (meth)acrylate group.

Aspect 8. The oligomer of any one of aspects 1-7, wherein R₃ is a divalent linker selected from an alkylene such as 1,2-ethylene, 1,2- or 1,3-propylene, 1,2-, 1,3- or 1,4-butylene, 1,5-pentylene, 1,6-hexylene, 1,8-octylene, 1,9-nonylene, 1,10-decylene, 1,12-dodecylene, 1,18-octadecylene, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes; an esterified derivative of the aforementioned alkylenes; a residue of a di-, tri-, tetra- or polyoxyalkylene (without the OH groups) such as a residue of di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol); and a residue of a polyester polyol (without the OH groups).

Aspect 9. The oligomer of any one of aspects 1-6, wherein R₃ is a trivalent linker according to any one of Formulae (11), (12), (13), (19) and (20), or a tetravalent linker according to any one of Formulae (14) and (15): 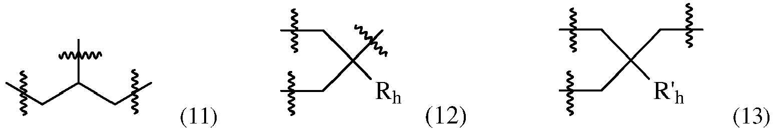 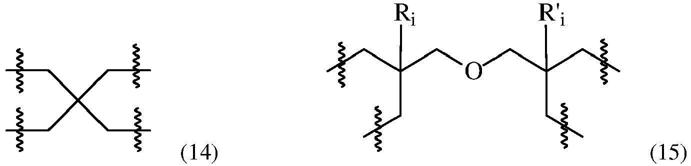 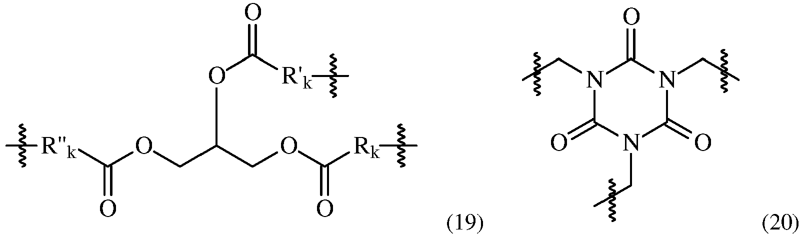 wherein:
each Rₕ, R'ₕ, Rᵢ and R'ᵢ is independently H or alkyl; and
Rₖ, R'ₖ and R"ₖ are independently alkylene.

Aspect 10. The oligomer of any one of aspects 1-6, wherein R₃ has any one of Formulae (A3) to (A5):

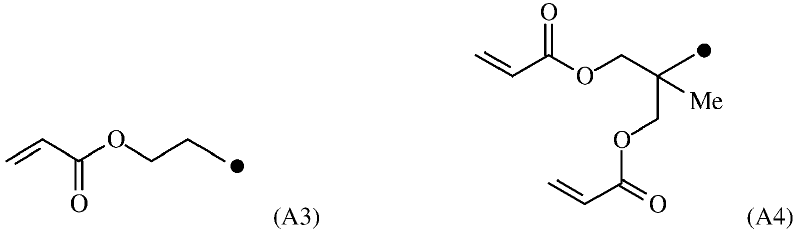

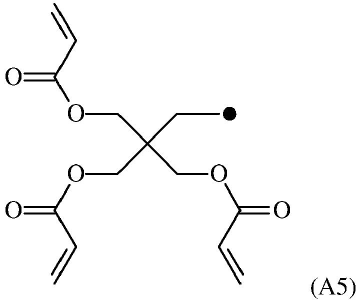

Aspect 11. The oligomer of any one of aspects 1-10, wherein the total amount of segment a) in the dual curable oligomer of the invention represents from 5 to 60 wt.%, in particular from 10 to 50 wt. %, more particularly from 15 to 40 wt. %, of the total weight of the dual curable oligomer.

Aspect 12. The oligomer of any one of aspects 1-11, wherein segment b) is selected from a glycidyl ether group, a glycidyl ester group and an epoxy group which is not part of a glycidyl ether group or a glycidyl ester group.

Aspect 13. The oligomer of any one of aspects 1-12, wherein segment b) has the structure of Formula (B1): 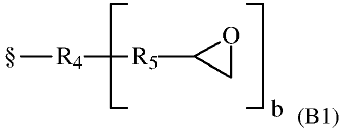 wherein:
- b is at least 1;
- R₄ is a (b+1)valent linker;
- each R₅ is independently selected from direct bond, -O-CH₂-# and -C(=O)-O-CH₂-#, preferably -O-CH₂-#;
- the symbol # represents the point of attachment to the epoxide ring; and
- the symbol § represents the point of attachment to segment c).

Aspect 14. The oligomer of aspect 13, wherein b is equal to 1, 2, 3, 4; preferably 2 or 3; even more preferably b is 2.

Aspect 15. The oligomer of aspect 13 or 14, wherein R₄ is a (b+1)valent linker.

Aspect 16. The oligomer of any one of aspects 13-15, wherein R₄ may be a (b+1)valent linker selected from the group consisting of alkylene, heteroatom-containing alkylene, cycloalkylene, heterocycloalkylene, arylene, heteroarylene, and combinations thereof, preferably selected from alkylene, heteroatom-containing alkylene, cycloalkylene, arylene and combinations thereof.

Aspect 17. The oligomer of any one of aspects 13-16, wherein each R₅ is independently selected from direct bond, -O-CH₂-# and -C(=O)-O-CH₂-#.

Aspect 18. The oligomer of any one of aspects 1-17, wherein segment b) has the structure of any one of Formulae (B2), (B3), (B4) and (B5): 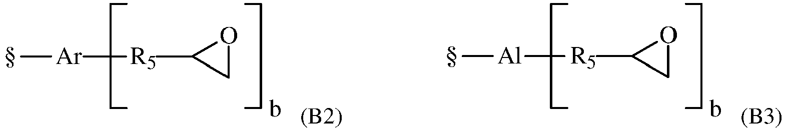 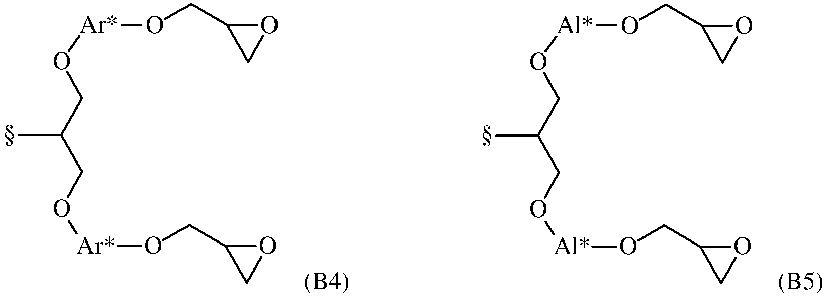 wherein:
- R₅, b and symbol § are as defined above;
- Ar is a (b+1)valent aromatic linker;
- Al is a (b+1)valent aliphatic linker;
- Ar* is a divalent aromatic linker; and
- Al* is a divalent aliphatic linker.

Aspect 19. The oligomer of aspect 18, wherein, in Formula (B2), Ar is an aromatic linker comprising at least one arylene moiety, more particularly at least one optionally substituted phenylene moiety, even more particularly a phenylene moiety which is optionally substituted with one or more groups selected from alkyl, cycloalkyl, aryl and a halogen atom.

Aspect 20. The oligomer of aspect 18 or 19, wherein, in Formula (B2), Ar has one of Formulae (6) to (15): 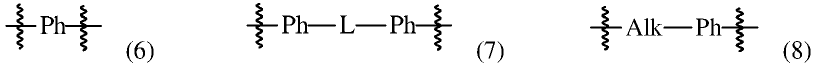 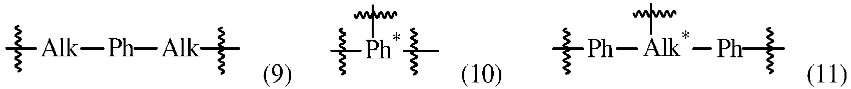 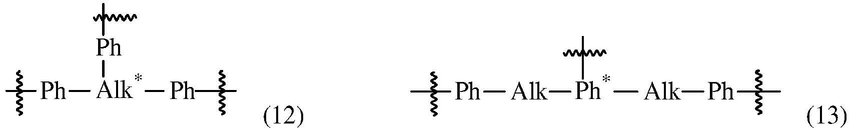 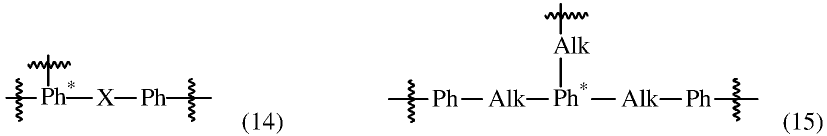 wherein:
- each Ph is independently an optionally substituted divalent phenylene, preferably a divalent phenylene which is optionally substituted with one or more groups selected from alkyl, cycloalkyl, aryl and a halogen atom;
- each Ph* is independently an optionally substituted trivalent phenylene, preferably a trivalent phenylene which is optionally substituted with one or more groups selected from alkyl, cycloalkyl, aryl and a halogen atom;
- each Alk is independently a divalent alkylene or heteroatom-containing alkylene;
- each Alk* is independently a trivalent alkylene or heteroatom-containing alkylene;
- L is selected from direct bond, -O-, -S-, -SO-, -SO₂-, -C(=O)-, C(=CCl₂)-, Alk, -CR'₁R'₂-, -C(=O)-O-Alk-O-C(=O)-, -CR'₃R'₄-Ph-CR'₅R'₆- and combinations thereof;
   wherein:
   - Alk and Ph are as defined above;
   - R'₁ and R'₂ are independently selected from H, alkyl, cycloalkyl, aryl, haloalkyl and perfluoroalkyl, or R'₁ and R'2, with the carbon atoms to which they are attached, may form a ring;
   - R'₃, R'₄, R'₅ and R'₆ are independently selected from H, alkyl, cycloalkyl, aryl, haloalkyl and perfluoroalkyl.

Aspect 21. The oligomer of any one of aspects 18-20, wherein, in Formula (B2), Ar has one of Formulae (16) to (21): 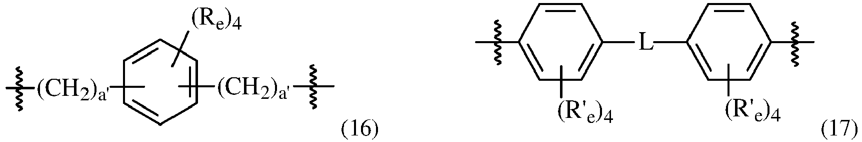 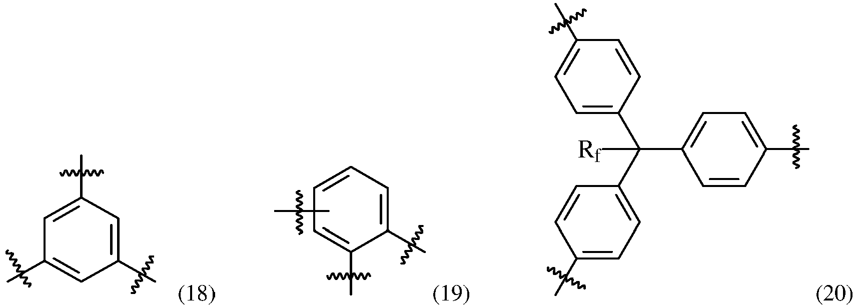 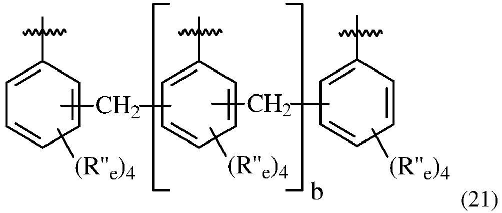 wherein :
- L is as defined above;
- Rₑ, R'ₑ and R"ₑ are independently selected from H, alkyl, cycloalkyl, aryl, alkaryl, aralkyl, alkoxy, -C(=O)O-Alkyl and a halogen atom;
- R_{f} is H or methyl;
- each a' and c' is independently 0 or 1;
- b' is 1 or 2.

Aspect 22. The oligomer of aspect 18, wherein, in Formula (B3), Al is an aliphatic linker selected from alkylene, heteroatom-containing alkylene, cycloalkylene, heterocycloalkylene, and combinations thereof.

Aspect 23. The oligomer of any of aspect 18 or 22, wherein, in Formula (B3), Al is represented by one of Formulae (22) to (29): 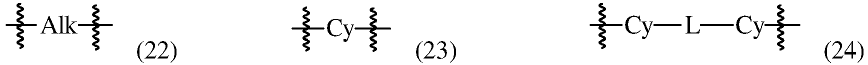 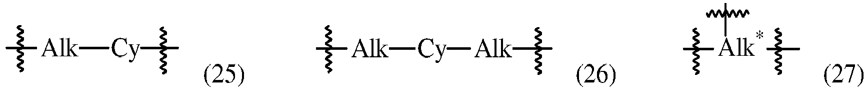 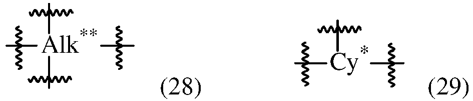 wherein
- L is as defined above for linker Ar;
- each Cy is independently an optionally substituted divalent cycloalkylene or heterocycloalkylene, preferably a divalent cycloalkylene or heterocycloalkylene which is optionally substituted with one or more groups selected from alkyl, cycloalkyl, aryl and a halogen atom;
- each Cy* is independently an optionally substituted trivalent cycloalkylene or heterocycloalkylene, preferably a trivalent cycloalkylene or heterocycloalkylene which is optionally substituted with one or more groups selected from alkyl, cycloalkyl, aryl and a halogen atom;
- each Alk is independently a divalent alkylene or heteroatom-containing alkylene;
- each Alk* is independently a trivalent alkylene or heteroatom-containing alkylene;
- each Alk** is independently a tetravalent alkylene or heteroatom-containing alkylene.

Aspect 24. The oligomer of any of aspect 18 or 22, wherein, in Formula (B3), Al is represented by one of Formulae (30) to (41): 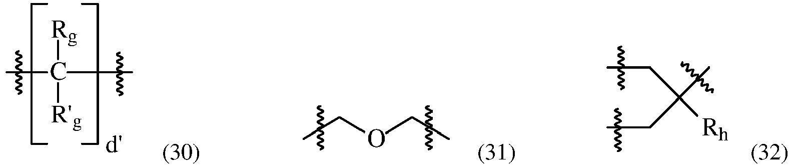 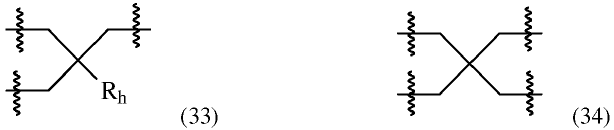 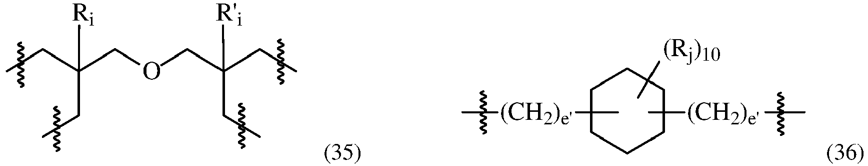 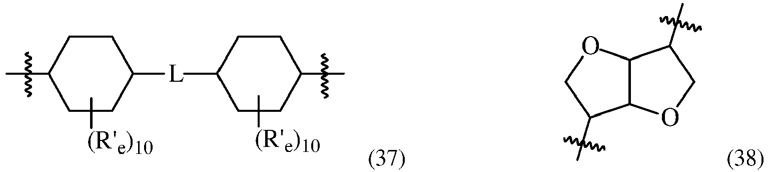 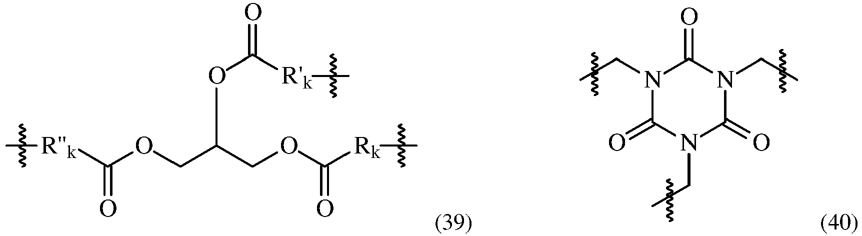 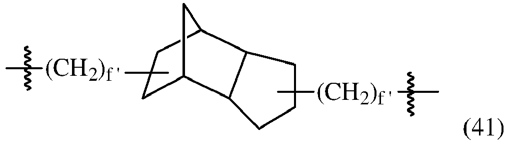 wherein
- L is as defined above for linker Ar;
- R'ₑ is as defined above for formula (17);
- each R_{g}, R'_{g}, Rₕ, Rᵢ and R'ᵢ is independently H or alkyl;
- each Rⱼ is independently H, alkyl, cycloalkyl, aryl, alkaryl, aralkyl, alkoxy, -C(=O)O-Alkyl and a halogen atom;
- Rₖ, R'ₖ and R"ₖ are independently alkylene;
- d' is 1 to 12;
- each e' and f' is independently 0 or 1.

Aspect 25. The oligomer of aspect 18, wherein, in Formula (B4), Ar* is an aromatic divalent linker comprising at least one arylene moiety, more particularly at least one optionally substituted phenylene moiety, even more particularly at least one phenylene moiety optionally substituted with one or more groups selected from alkyl, cycloalkyl, aryl and a halogen atom.

Aspect 26. The oligomer of any of aspect 18 or 25, wherein, in Formula (B4), Ar* corresponds to one of Formulae (6) to (9), (16) or (17) as defined above.

Aspect 27. The oligomer of aspect 18, wherein, in Formula (B4), Al* is an aliphatic divalent linker selected from alkylene, heteroatom-containing alkylene, cycloalkylene, heterocycloalkylene, and combinations thereof.

Aspect 28. The oligomer of aspect 18 or 27, wherein, in Formula (B4), Al* is represented by one of Formulae (1), (2), (3), (4), (5), (22)-(26), (30), (31), (36), (37), (38) or (41) as defined above.

Aspect 29. The oligomer of any one of aspects 1-28, wherein segment b) has the structure of Formula (B6) or (B7), preferably (B7): 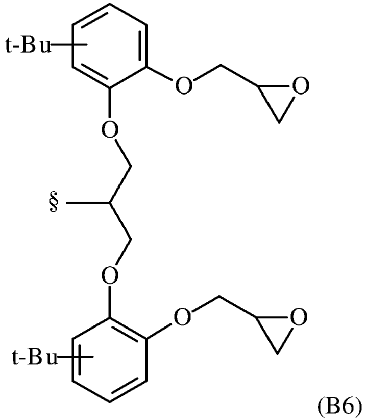 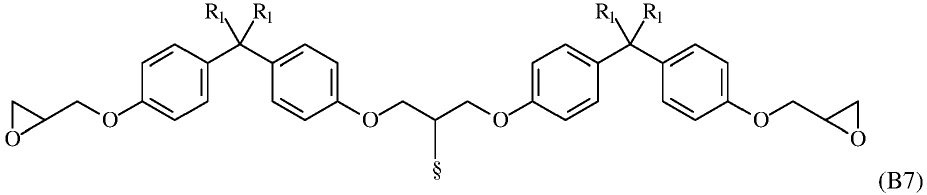 wherein:
- t-Bu is tert-butyl;
- R₁ is H or methyl;
- the symbol § represents the point of attachment to segment c).

Aspect 30. The oligomer of any one of aspects 1-29, wherein the total amount of segment b) in the dual curable oligomer of the invention represents from 20 to 90 wt.%, in particular from 30 to 85 wt. %, more particularly from 40 to 80 wt. %, of the total weight of the dual curable oligomer.

Aspect 31. The oligomer of any one of aspects 1-30, wherein segment c) has the structure of Formula (C1): 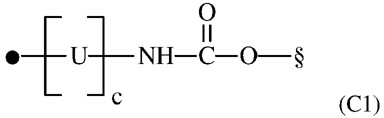 wherein:
- c is 0 or 1;
- U corresponds to Formula (U1) or (U2): 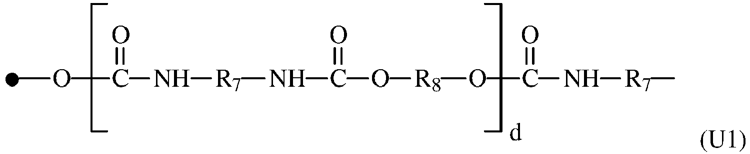 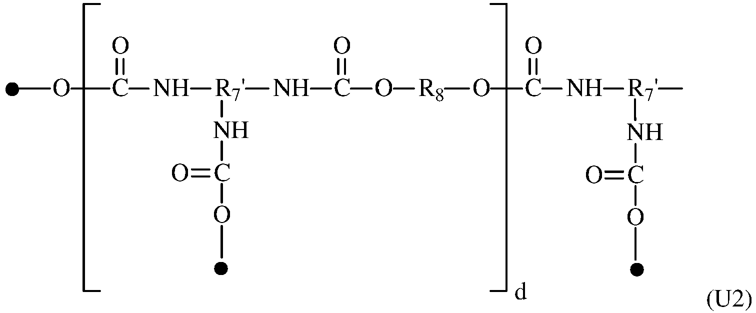 wherein:
   - each R₇ is independently the residue of a diisocyanate;
   - each R₇' is independently the residue of a triisocyanate;
   - each R₈ is independently the residue of a diol;
   - each d is independently 0 or an integer from 1 to 10;
   - the symbol • represents a point of attachment to a segment a);
   - the symbol § represents the point of attachment to segment b).

Aspect 32. The oligomer of aspect 31, wherein, in Formula (U1), each R₇ is independently selected from one of Formulae (42) to (51): 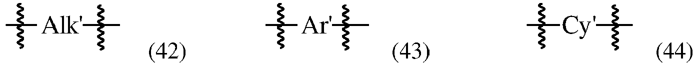 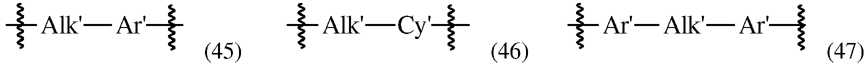 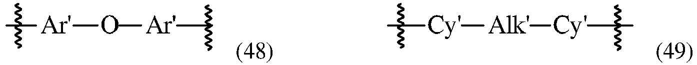 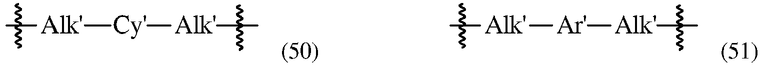 wherein :
- each Alk' is independently a linear or branched alkylene, in particular methylene, 1,2-ethylene, 1,2- or 1,3-propylene, 1,2-, 1,3- or 1,4-butylene, 1,5-pentylene, 1,6-hexylene, 2,2,4- or 2,4-,4-trimethylhexylene, 1,8-octylene, 1,9-nonylene, 1,10-decylene, 1,12-dodecylene, 1,18-octadecylene;
- each Ar' is independently an optionally substituted arylene, in particular an optionally substituted arylene selected from phenylene, tolylene, biphenylene, naphthylene, anthracenylene, more particularly an arylene optionally substituted with one or more groups selected from alkyl, cycloalkyl, aryl and a halogen atom.
- each Cy' is independently an optionally substituted cycloalkylene, in particular an optionally substituted cyclohexylene, more particularly a cycloalkylene optionally substituted with one or more groups selected from alkyl, cycloalkyl, aryl and a halogen atom.

Aspect 33. The oligomer of aspect 31, wherein, in Formula (U2), each R₇' is independently be selected from one of Formulae (52) to (58): 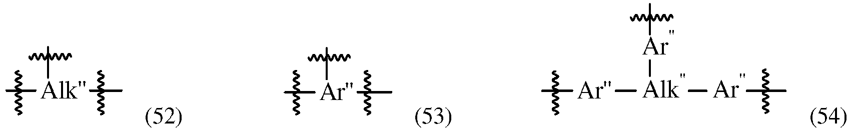 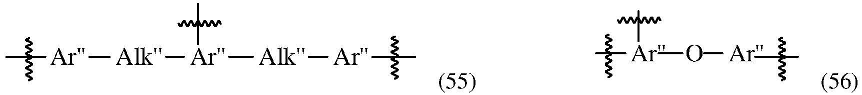 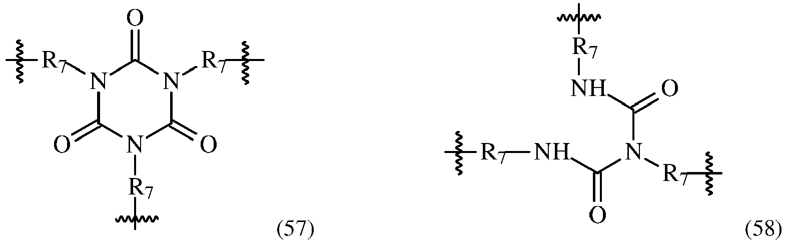 wherein
- each Alk" is independently a linear or branched alkylene, in particular methylene, methanetriyl, undecane-1,6,11 -triyl;
- each Ar" is independently an optionally substituted arylene, in particular an optionally substituted arylene selected from phenylene, tolylene and biphenylene, more particularly an arylene optionally substituted with one or more groups selected from alkyl, cycloalkyl, aryl and a halogen atom;
- each R₇ is independently as defined above for Formula (U1), in particular 1,6-hexamethylene.

Aspect 34. The oligomer of aspect 31, wherein U is selected from:
- a moiety of Formula (U1) wherein each R₇ is independently selected from one of Formulae (42), (44), (46), (49) or (50) as defined above :
   wherein
   - each Alk' is independently a linear or branched alkylene, in particular methylene, 1,2-ethylene, 1,2- or 1,3-propylene, 1,2-, 1,3- or 1,4-butylene, 1,5-pentylene, 1,6-hexylene, 2,2,4- or 2,4,4-trimethylhexylene, 1,8-octylene, 1,9-nonylene, 1,10-decylene, 1,12-dodecylene, 1,18-octadecylene;
   - each Cy' is independently an optionally substituted cycloalkylene, in particular an optionally substituted cyclohexylene, more particularly a cycloalkylene optionally substituted with one or more groups selected from alkyl, cycloalkyl, aryl and a halogen atom;
- a moiety of Formula (U2) wherein R'₇ corresponds to Formula (57) as defined above wherein each R₇ is independently a linear or branched alkylene, in particular 1,6-hexylene;
and mixtures thereof.

Aspect 35. The oligomer of aspect 31, wherein each R₈ independently corresponds to a divalent linker selected from one of Formulae (1) to (5) as defined above for R₃.

Aspect 36. The oligomer of any one of aspects 1-35, wherein the total amount of segment c) in the dual curable oligomer represents from 3 to 60 wt.%, in particular from 4 to 40 wt.%, more particularly from 5 to 20 wt. %, of the total weight of the dual curable oligomer.

Aspect 37. The oligomer of any one of aspects 1-36, having the structure of Formulae (I)-(III): 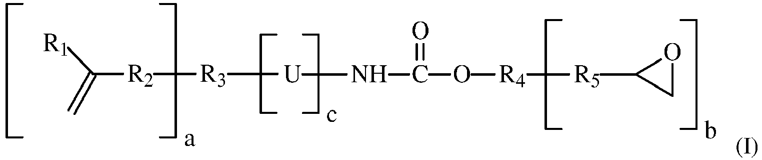 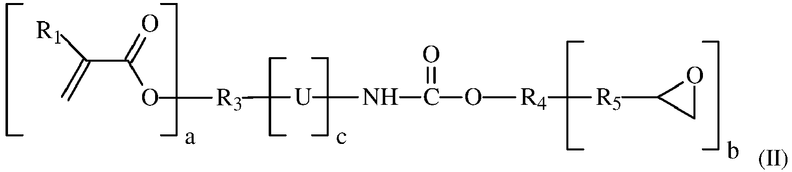 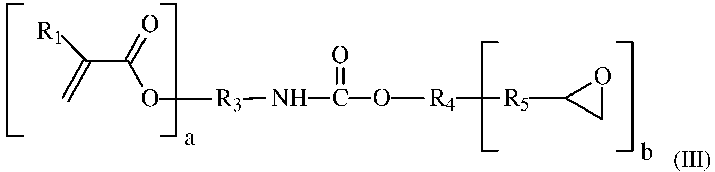 wherein a, b, c, R₁, R₂, R₃, R₄, R₅ and U are as defined above.

Aspect 38. The oligomer of any one of aspects 1-37, having the structure of Formulae (IIIa), (IIIb), (IIIc) or (IIId): 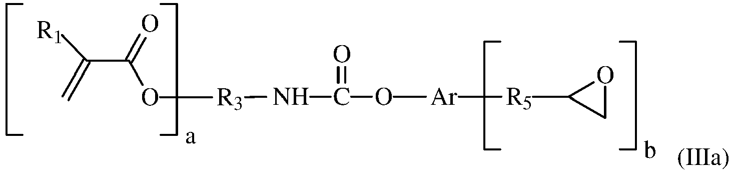 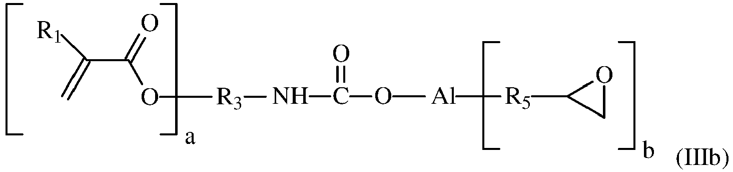 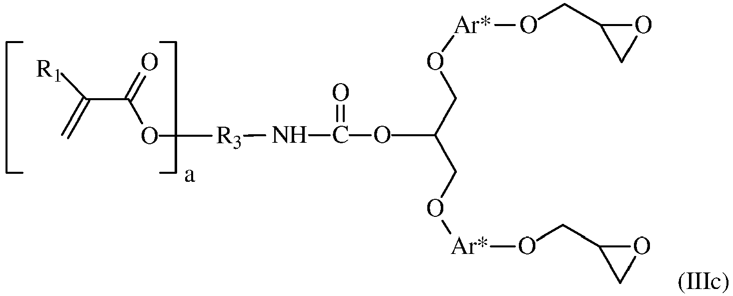 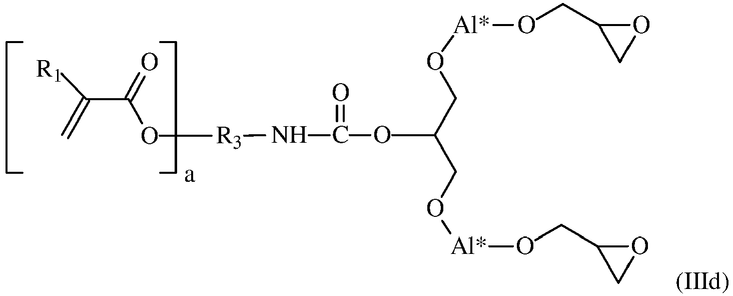 wherein a, b, R₁, R₃, R₅, Ar, Al, Ar* and Al* are as defined above.

Aspect 39. The oligomer of any one of aspects 1-38, having the structure of Formula (IIIe): 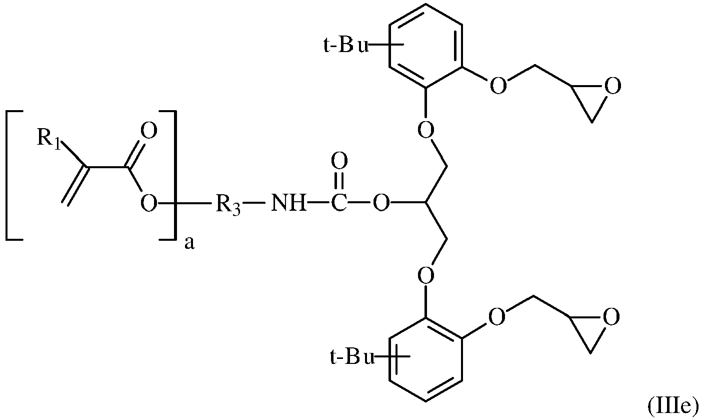 wherein a, R₁, R₃ and t-Bu are as defined above.

Aspect 40. The oligomer of any one of aspects 1-37, having the structure of Formulae (IV) or (V): 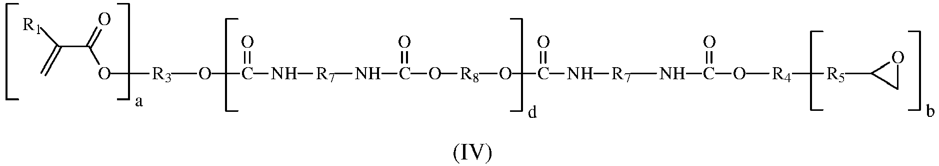 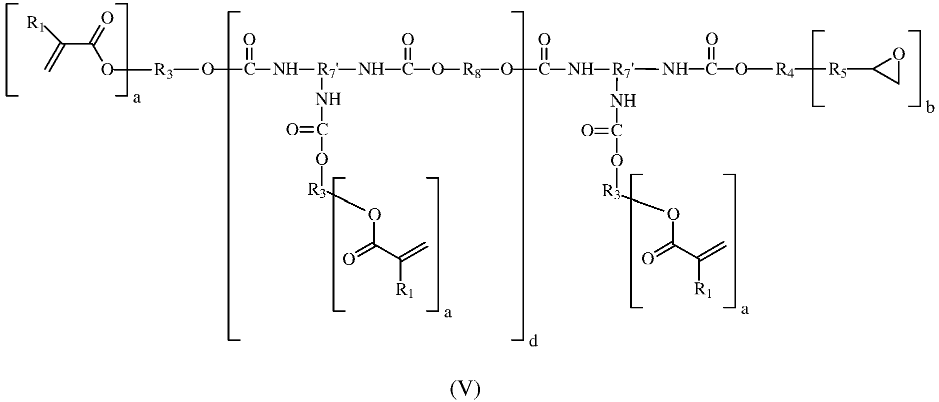 wherein a, b, d, R₁, R₃, R₄, R₅, R₇ and R₈ are as defined above.

Aspect 41. The oligomer of any one of aspects 1-37, having the structure of Formula (IVa), (IVb), (IVc) or (IVd): 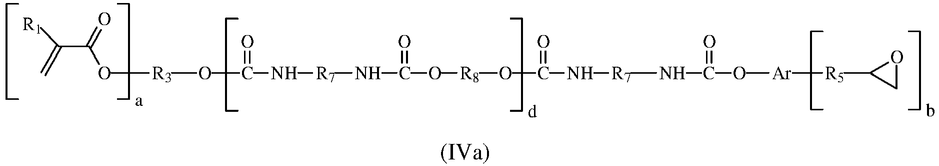 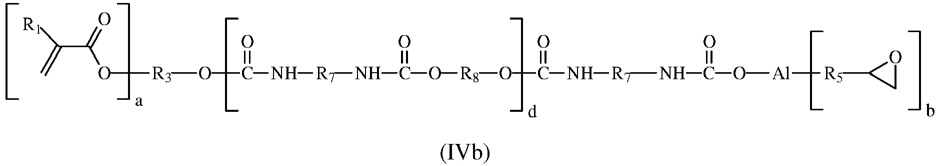 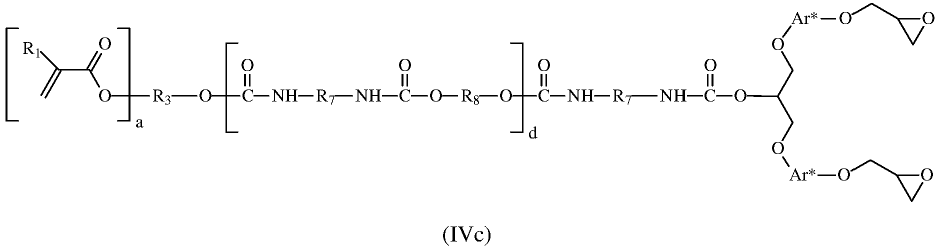 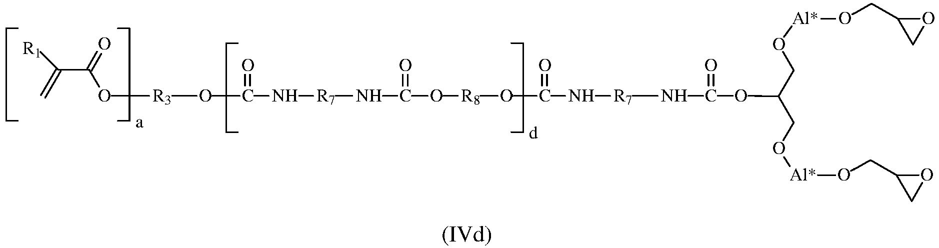 wherein a, b, d, R₁, R₃, R₅, R₇, R₈, Ar, Al, Ar^{∗} and Al^{∗} are as defined above.

Aspect 42. The oligomer of any one of aspects 1-37, the dual curable oligomer structure of Formula (IVe): 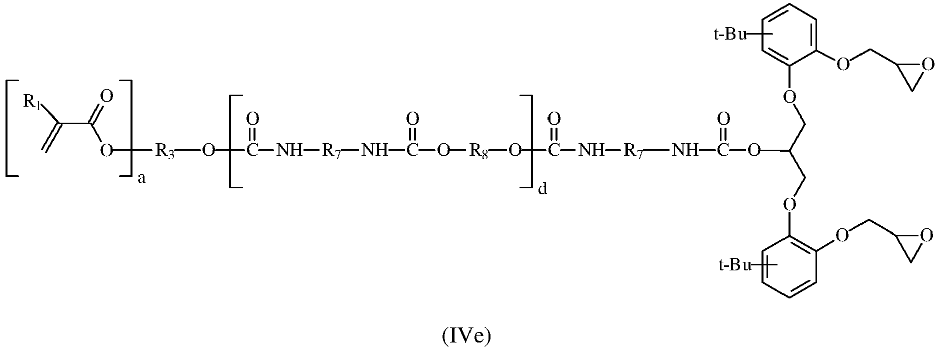 wherein a, d, R₁, R₃, R₇, R₈ and t-Bu are as defined above.

Aspect 43. A method for preparing the dual curable oligomer of any one of aspects 1-42, comprising the step of reacting an ethylenically unsaturated monoisocyanate component and an epoxy monoalcohol component.

Aspect 44. A method for preparing the dual curable oligomer of any one of aspects 1-42, comprising the step of reacting an ethylenically unsaturated monoalcohol component, a polyisocyanate component, an epoxy monoalcohol component and optionally a diol component.

Aspect 45. The method of aspect 43 or 44, wherein:
- the ethylenically unsaturated monoisocyanate component comprises at least one compound bearing at least one ethylenic unsaturation and a single NCO group or blocked NCO group;
- the epoxy monoalcohol component comprises at least one compound bearing at least one epoxy group and a single hydroxy group, preferably a single secondary hydroxy group;
- the ethylenically unsaturated monoalcohol component comprises at least one compound bearing at least one ethylenic unsaturation and a single OH group;
- the polyisocyanate component comprises at least one compound bearing at least two NCO groups or blocked NCO groups; and/or
- the diol component comprises at least one compound bearing two hydroxy groups.

Aspect 46. The method of aspect 43, comprising the step of reacting an ethylenically unsaturated monoisocyanate component comprising at least one compound having the structure of Formula (A) with an epoxy monoalcohol component comprising at least one compound having the structure of Formula (B): 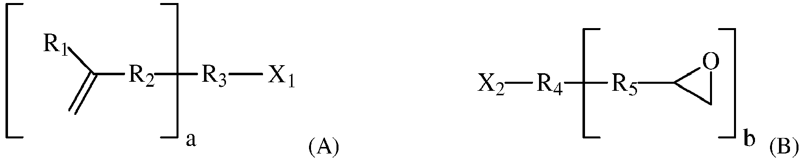 wherein:
- a, b, R₁, R₂, R₃ R₄, and R₅ are as defined above for segments a) and b);
- X₁ is an NCO group or a blocked NCO group;
- X₂ is a hydroxy group, preferably a secondary hydroxy group.

Aspect 47. The method of aspect 46, wherein the amount of (A) and (B) is such that the equivalent mole ratio [OH group of (B)]/[NCO group of (A)] ranges between 1/2 and 2/1, or between 1/1.5 and 1.5/1, or between 1/1.1 and 1.1/1, or between 1.05/1 and 1.05/1, or be about 1/1.

Aspect 48. The method of aspect 44, comprising the step of reacting an ethylenically unsaturated monoalcohol component comprising at least one compound having the structure of formula (D), a polyisocyanate component comprising at least one compound having the structure of formula (E1) or (E2), an epoxy monoalcohol component comprising at least one compound having the structure of Formula (B) and optionally a diol component comprising at least one compound having the structure of formula (F): 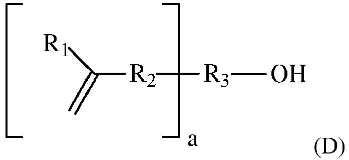 X₃-R₇-X₃ (E1) 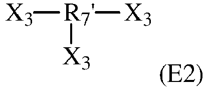 HO-R₈-OH (F) 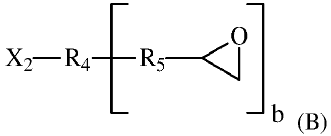 wherein:
- a, b, R₁, R₂, R₃ R₄, R₅, R₇, R₇' and R₈ are as defined above for segments a), b) and c);
- each X₃ is independently an NCO group or a blocked NCO group;
- X₂ is a hydroxy group, preferably a secondary hydroxy group.

Aspect 49. The method of aspect 48, wherein the amount of (D), (E1), (E2), (F) and (B) is such that the equivalent mole ratio [OH group of (D) + OH group of (B) + OH group of (F)]/[NCO group of (E1) or (E2)] ranges between 1/2 and 2/1, or between 1/1.5 and 1.5/1, or between 1/1.1 and 1.1/1 or between 1.05/1 and 1.05/1, or be about 1/1.

Aspect 50. The method of any one of aspects 43-49, including mixing all reactants and ingredients, at essentially the same time, in a "one-shot" process.

Aspect 51. The method of any one of aspects 43-49, including a stepwise addition of the reactants, in the presence of, or without the addition of, the other ingredients and optional additives.

Aspect 52. The method of any one of aspects 43-51, which is carried out in the presence of a amount of solvent of less than 5 wt.%, or even preferably in the absence of organic solvent, for example by melt-extrusion, at a temperature of from 60°C to 250°C, for example from 65° C to 200°C or from 70° C to 150°C.

Aspect 53. The method of any one of aspects 43, 45-46, wherein the epoxy monoalcohol component comprises at least one compound having the structure of Formula (B2a), (B3a), (B4a) or (B5a): 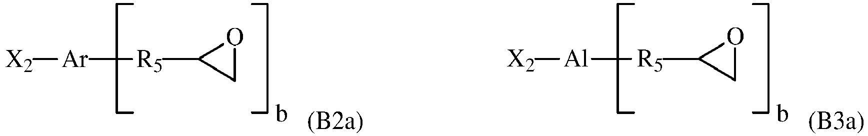 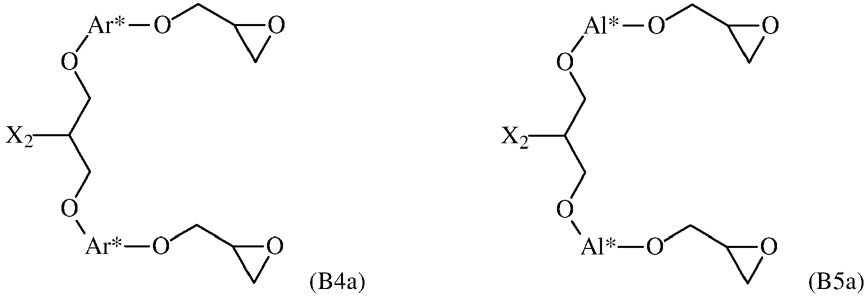 wherein:
- R₅, X₂ and b are as defined above;
- Ar, Al, Ar* and Al* are as defined above for segment b) of formula (B2), (B3), (B4) or (B5).

Aspect 54. The method of any one of aspects 43, 45-46, 53, wherein the ethylenically unsaturated monoisocyanate component comprises at least one compound selected from 2-isocyanatoethyl methacrylate (MOI), 2-isocyanatoethyl acrylate (AOI, AOI-VM), 2-(O-[1'-methylpropylideneamino]carboxyamino)ethyl methacrylate (MOI-BM), 2-[(3,5-dimethylpyrazolyl)carboxyamino]ethyl methacrylate (MOI-BP), 1,1-(bisacryloyloxymethyl) ethyl isocyanate (BEI), 2-[2-(methacryloyloxy)ethyloxy]ethyl isocyanate (MOI-EG), and mixtures thereof.

Aspect 55. The method of aspect 44 or 45, wherein the ethylenically unsaturated monoalcohol component comprises at least one compound having the structure of Formula (D1a): 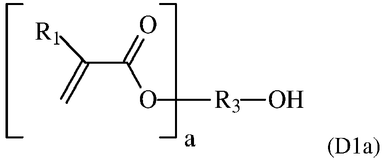 wherein:
- a, R1 and R3 are as defined above for segment a).

Aspect 56. The method of any one of aspects 44-45 and 55, wherein the ethylenically unsaturated monoalcohol component comprises at least one compound selected from a hydroxyalkyl (meth)acrylate (for example 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, neopentyl glycol mono(meth)acrylate or 1,6-hexanediol mono(meth)acrylate), 2-hydroxy-3-phenoxypropyl (meth)acrylate, 3-chloro-2-hydroxypropyl (meth)acrylate, tris(2-hydroxyethyl)isocyanurate di(meth)acrylate, di-, tri-, tetra- or polyethylene glycol mono(meth)acrylate, di-, tri-, tetra- or poly(1,2-propylene glycol) mono(meth)acrylate, di-, tri-, tetra- or poly(1,3-propylene glycol) mono(meth)acrylate, di-, tri-, tetra- or poly(1,4-butylene glycol) mono(meth)acrylate, glycerin di(meth)acrylate, 2-hydroxy-1-acryloxy-3-(meth)acryloxypropane, trimethylolpropane di(meth)acrylate, di(trimethylolpropane) tri(meth)acrylate, trimethylolethane di(meth)acrylate, pentaerythritol tri(meth)acrylate, dipentaerythritol penta(meth)acrylate, as well as the alkoxylated (e.g., ethoxylated and/or propoxylated) derivatives thereof and the (poly)caprolactone derivatives thereof obtained by ring-opening polymerization of ε-caprolactone initiated with one of the aforementioned hydroxyl-functionalized (meth)acrylate compounds (i.e. a (poly)caprolactone (meth)acrylate such as (poly)caprolactone 2-hydroxyethyl (meth)acrylate according to the following formula: CH₂=CR₁₁-C(=O)-O-CH₂-CH₂-[O-(C=O)-(CH₂)₅]ₜ-OH wherein R₁₁ is H or methyl and t is 1 to 20), and combinations thereof.

Aspect 57. The method of any one of aspects 44-45, 55 and 56, wherein the polyisocyanate component comprises a diisocyanate having the structure of Formula (E1) and/or a triisocyanate having the structure of Formula (E3):

X₃-R₇- X₃ (E1)

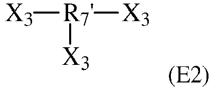

wherein:
- R₇ and R₇' are as defined above for segment c)
- X₃ is a NCO group or a blocked NCO group.

Aspect 58. The method of aspect 57, wherein the diisocyanates (E1) is selected in the group consisted of 2,4- and 2,6-toluene diisocyanate (TDI), isophorone diisocyanate (IPDI - corresponding to 3-isocyanatomethyl-3,5,5-trimethylcyclohexylisocyanate), methylene diisocyanate, ethylene diisocyanate, 1,2- or 1,3-propylene diisocyanate, 1,2-, 1,3 or 1,4-butylene diisocyanate, 1,5-pentamethylene diisocyanate (PDI), 1,6-hexamethylene diisocyanate (HDI), 2,2,4- and 2,4,4-trimethylhexamethylene diisocyanate (TMDI), 1,10-decylene diisocyanate, 1,12-dodecylene diisocyanate, 1,18-octadecylene diisocyanate, 2,2'-, 2,4'- and 4,4'-diphenylmethane diisocyanate (MDI), 2,2'-, 2,4'- and 4,4'-dicyclohexylmethane diisocyanate (H12MDI), benzidine diisocyanate, 3,3'-dimethyl-4,4'-biphenyl diisocyanate, dianisidine diisocyanate, 3,3'-dimethyl-4,4'-diphenylmethane diisocyanate, 1,3- and 1,4-phenylene diisocyanate, 1,4- and 1,5-naphtalene diisocyanate (NDI), 1,4- and 9,10-anthracene diisocyanate, 1,3- and 1,4-cyclohexane diisocyanate, 1-methyl-2,4-diisocyanatocyclohexane, 1-methyl-2,6-diisocyanatocyclohexane, 1,3 and 1,4-bis(isocyanatomethyl)cyclohexane, m-tetramethylxylylene diisocyanate, m-xylylene diisocyanate, 4-methoxy-1,3-phenylene diisocyanate, 4-ethoxy-1,3-phenylene diisocyanate, 5,6-dimethyl-1,3-phenylene diisocyanate, 2,4'- or 4,4'-diisocyanate diphenyl ether, lysine diisocyanate, dimer acid diisocyanate, dimers of the aforementioned diisocyanates (in particular uretdione or allophanate dimers), as well as polyurea or polyurethane prepolymers functionalized with isocyanate functional groups, and combinations thereof.

Aspect 59. The method of aspect 57, wherein the triisocyanates (E2) is selected in the group consisted of 1,6,11-undecane triisocyanate, triphenylmethane triisocyanate, 2,4,6-tolylene triisocyanate, 2,4,4'-triisocyanate diphenyl ether, trimers of the diisocyanates detailed above for formula (E1) (in particular isocyanurate or biuret trimers), polymeric derivatives of the diisocyanates detailed above for formula (E1), and combinations thereof.

Aspect 60. The method of any one of aspects 44-45, 55-56 and 58, wherein the diisocyanate is isophorone diisocyanate.

Aspect 61. The method of any one of aspects 48-53 and 55-60, wherein the diol component is comprised of a plurality of repeating units such as oxyalkylene units, ester units, carbonate units, acrylic units, alkylene units or the like or combinations thereof.

Aspect 62. The method of any one of aspects 43-61, which is carried out in the presence of at least one catalyst.

Aspect 63. The method of claim 62, wherein the catalyst is selected in the group consisting of organic and inorganic acids salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines.

Aspect 64. The method of any one of aspects 43-63, which is carried out in the presence of at least one stabilizer, such as an antioxidant, a light blocker/absorber or a polymerization inhibitor.

Aspect 65. A curable composition comprising at least one dual curable oligomer according to any one of aspects 1-42.

Aspect 66. The curable composition of aspect 65, comprising from 5 wt.% to 99.9 wt.% of one or more dual curable oligomers, for example from 10 wt.% to 99.5 wt.%, from 20 wt.% to 99 wt.%, from 30 wt.% to 98 wt. %, from 50 wt. % to 97 wt. %, or from 60 wt.% to 95 wt.%, based on the total weight of the curable composition.

Aspect 67. The curable composition of aspect 65 or 66, further comprising one or more of the following:
a. a polymerizable component comprising one or more ethylenically unsaturated compounds and/or one or more cationically polymerizable compounds other than the dual curable oligomer;
b. an inhibitor;
c. an initiator selected from a free radical initiator, a cationic initiator and combinations thereof;
d. an epoxy crosslinking agent;
e. an additive selected from the group consisting of antioxidants, ultraviolet absorbers, photostabilizers, foam inhibitors, flow or leveling agents, colorants, pigments, dispersants (wetting agents), slip additives, fillers, thixotropic agents, matting agents, waxes, any additive conventionally utilized in coating, sealant, adhesive, ink or molding compositions, and combinations thereof.

Aspect 68. The curable composition of aspect 67, wherein the polymerizable component comprises one or more ethylenically unsaturated compounds selected from a (meth)acrylate-functionalized monomer, a (meth)acrylate-functionalized oligomer and mixtures thereof.

Aspect 69. The curable composition of aspect 67 or 68, comprising from 10 ppm to 5 wt.% of one or more inhibitors, from 20 ppm to 4 wt.%, from 50 ppm to 3 wt.%, from 100 ppm to 1 wt.%, or from 120 ppm to 0.1 wt.%, based on the total weight of the curable composition.

Aspect 70. The curable composition of any one of aspects 67-69, comprising an initiator selected from a free radical initiator, a cationic initiator and combinations thereof.

Aspect 71. The curable composition of any one of aspects 67-70, wherein the epoxy crosslinking agent is a compound comprising one or more functional groups selected from an amine, a carboxylic acid, an anhydride, or a thiol.

Aspect 72. Use of the curable composition of any one of aspects 65-71 as an adhesive, an ink, a mask for printing, a coloring system, a 3D printing resin, a sealant or a coating.

Aspect 73. Method of using the curable composition of any one of aspects 65-71 as an adhesive, an ink, a mask for printing, a coloring system, a 3D printing resin, a sealant or a coating.

Aspect 74. Use of the curable composition of any one of aspects 65-71, as UV/EB curable resins, in particular for use as adhesives for electric or electronic components, in navigation systems and in devices used to measure orientation, such as gyroscopes.

Aspect 75. Method of using the curable composition of any one of aspects 65-71, as UV/EB curable resins, in particular for use as adhesives for electric or electronic components, in navigation systems and in devices used to measure orientation, such as gyroscopes.

Aspect 76. Method of making a cured composition, comprising curing the curable composition of any one of aspects 65-71.

Aspect 77. The method of aspect 76, comprising exposing the curable composition to UV/EB radiation and heat.

Aspect 78. A cured composition obtained by curing the curable composition of any one of aspects 65-71.

Although the foregoing invention has been described in some detail by way of illustration and example for purposes of clarity of understanding, one of skill in the art will appreciate that certain changes and modifications may be practiced within the scope of the appended claims. In addition, each reference provided herein is incorporated by reference in its entirety to the same extent as if each reference was individually incorporated by reference. Where a conflict exists between the instant application and a reference provided herein, the instant application shall dominate.

### EXAMPLES

The following examples illustrate the invention without limiting it.

### Raw materials

| Abbreviations or Trade Name | Full Name and Supplying Information |
|---|---|
| YL980 | Bisphenol A epoxy, from Mitsubishi |
| MeHQ | p-hydroxyanisole, from Merck |
| TPP | Triphenylphosphine, from Merck |
| AA | Acrylic acid, from Merck |
| EPICLON^{®} HP-820 | Liquid epoxy monoalcohol, from DIC |
| BHT | Butylated hydroxy toluene, from Sartomer Corporation |
| DBTDL | Dibutyltin dilaurate, from Sartomer Corporation |
| AOI-VM | 2-isocyanatoethyl prop-2-enoate, from Showa Electric |
| Karenz BEI | 1,1-(bisacryloyloxymethyl) ethyl isocyanate, from Showa Electric |
| IPDI | Isophorone diisocyanate, from Evonik |
| SR444D NS | Pentaerythritol triacrylate, from Sartomer Corporation |
| TPO | Photoinitiator 2,4,6-trimethylbenzoyldiphenyl phosphine oxide, from Merck |
| 2E4MZ | 2-ethyl-4-methyl imidazole, from Merck |
| ADH | Adipic dihydrazide, from Merck |
| SR506 | Isobornyl acrylate, from Sartomer |
| Table 1 | |

### Methods used to measure the properties of the dual curable oligomers

### Viscosity

The viscosity of the oligomers was measured using a Brookfield RVDV-II+ Pro instrument at a temperature of 60°C using a #28 spindle and a rotational speed of 20 rpm. Moreover, the viscosity of the oligomers was measured with a Brookfield RVDV-II+ Pro instrument at a temperature of 25°C using a #28 spindle and a rotational speed of 10 rpm.

### Epoxy Equivalent Weight (EEW)

The EEW was measured in accordance with ASTM D1763-1981.

### Refractive index

The refractive index of the oligomers was measured using a RX-7000 α from AT AGO at a temperature of 25°C.

### Tensile strength. Modulus, Elongation at Break

These mechanical properties were measured in accordance with ASTM D638.

### Synthesis of the oligomers

### Comparative oligomer (reference)

Bisphenol A epoxy (77 g) and Me-HQ (0.14 g) were added to a 4-neck round bottom flask and stirred. Dry air was injected in the flask, and the flask was then heated to 80 °C. TPP (0.36 g) was added to the flask. AA (22 g) was introduced into the flask at the same time than TPP, and at a constant rate for 240 minutes. The flask was heated at 110°C, and kept at this temperature for 60 minutes after starting the addition of AA until reaching an acid value below 1 mg KOH/g and an epoxy value below 60 mgKOH/g. The comparative epoxy-acrylate oligomer obtained has a structure of formula: 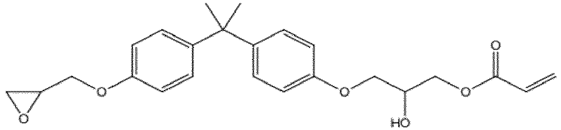
Viscosity (60°C): around 2390 mpa.s
EEW: 1020 g/eq

### Oligomer A (invention)

EPICLON^{®} HP-820 (310 g), BHT (0.80 g) and DBTDL (0.3 g) were added to a 4-neck round bottom flask and stirred. Dry air was injected in the flask. AOI-VM (99 g) was added to the flask and the flask was then heated to 80 °C. The temperature was kept at 80°C, for 60 minutes after starting the addition of AOI-VM. Oligomer A has a structure of formula: 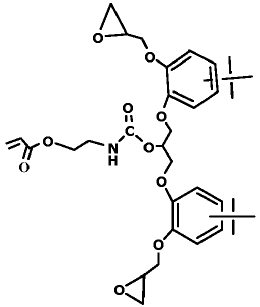
Viscosity (25°C): around 7,000 mPa.s
EEW: 295 g/eq

### Oligomer B (invention)

EPICLON^{®} HP-820 (310 g), BHT (0.80 g) and DBTDL (0.3 g) were added to a 4-neck round bottom flask and stirred. Dry air was injected in the flask. Karenz BEI (168 g) was added to the flask and the flask was then heated to 80 °C. The temperature was kept at 80°C for 60 minutes, after starting the addition of Karenz BEI. Oligomer B has a structure of formula: 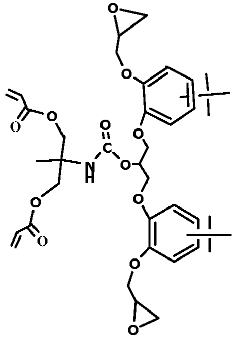
Viscosity (60°C): around 16,000 mPa.s
EEW: 305 g/eq

### Oligomer C (invention)

IPDI (74 g), BHT (0.80 g) and DBTDL (0.3 g) were added to a 4-neck round bottom flask and stirred. Dry air was injected in the flask. SR444D NS (173 g) was added to the flask while mixing continuously for 30 minutes. Then EPICLON^{®} HP-820 (212 g) was added to the flask. The flask was then slowly heated to 80 °C. The temperature was kept at 80°C for 60 minutes, after starting the addition of EPICLON^{®} HP-820. Oligomer C has a structure of Formula: 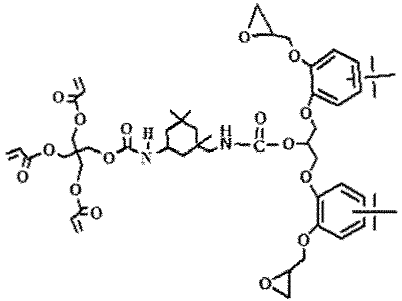
Viscosity (25°C): around 3,800 mpa.s
EEW: 488 g/eq

The results of viscosity, refractive index and EEW measurements for the exemplified oligomers are recapped in Table 2 below.

**Table 2**

| | Reference | Oligomer A | Oligomer B | Oligomer C |
|---|---|---|---|---|
| Viscosity (25°C), mPa.s | / | 7000 | 2882 | 54000 |
| Viscosity (60°C), mPa.s | 2390 | / | 16000 | 3800 |
| Refractive Index (25°C) | 1.5633 | 1.5205 | 1.5180 | 1.5156 |
| EEW, g/ep | 1020 | 295 | 305 | 488 |

### Tests conducted on the compositions comprising the oligomers (comparative and inventive)

### Storage stability

The storage stability tests were performed by placing the oligomer to be tested, alone or mixed with ADH (as a curing agent), at 65°C for 48 hours (thermal test), and measuring their viscosity (cps@60C).

Results are presented in Table 3 below.

**Table 3**

| | | **Reference** | **Oligomer C** | **80 wt.% Ref +20 wt.% ADH** | **80 wt.% Olig. C +20 wt.% ADH** |
|---|---|---|---|---|---|
| **Viscosity (cps@60C)** | **Initial** | 2,390 | 3,800 | 4,960 | 6,820 |
| | **After storage 48h, 65°C** | 2,450 | 3,820 | > 700,000 (gel) | 6,950 |

After storage at 65°C for 48h, there is no significant viscosity change for both the reference and oligomer C when not mixed with ADH.

However, when the reference oligomer (comparative) is mixed with 20 wt.% of ADH, the composition becomes gelled after 48h at 65°C. In contrast, oligomer C (inventive) showed minor viscosity change (+/- 10%), which makes it more performant for longer pot life and well-suited for consuming electric(s), coating, sealing, packaging process, especially those process require viscosity stability during processing base on its precious dispensing, or patterning dimension control requirement.

### Mechanical performance

The mechanical performance tests were performed on compositions comprising the oligomer to be tested mixed with SR506, photoinitiators and/or curing agents, as detailed in Tables 4, 5 and 6 below.

**Tests UV** + **Thermal cure:** 80 wt.% of oligomers were mixed with 20 wt. % of SR506. To this mixture were added 3 wt.% of TPO and 1 wt.% of 2E4MZ (based on the total weight of oligomers + SR506).

**Table 4**

| **UV + Thermal Cure** | | |
|---|---|---|
| **Composition:** 80 wt.% oligomer + 20 wt.% SR506 - then 3 wt.% TPO + 1 wt.% of 2E4MZ | | |
| | Oligomer C | Reference oligomer |
| Tensile strength (Mpa) | 77.42 | 73.39 |
| Tensile modulus | 2843 | 4027 |
| Elongation at break (%) | 2.83 | 1.86 |

**Tests UV cure:** 80 wt.% of oligomers were mixed with 20 wt. % of SR506. To this mixture was added 3 wt.% of TPO (based on the total weight of oligomers + SR506).

**Table 5**

| **UV Cure** | | |
|---|---|---|
| **Composition:** 80 wt.% oligomer + 20 wt.% SR506 - then 3 wt.% TPO | | |
| | Oligomer C | Reference oligomer |
| Tensile strength (Mpa) | 17.54 | 62.9 |
| Tensile modulus | 1163 | 2722 |
| Elongation at break (%) | 1.52 | 2.32 |

**Tests Thermal cure:** 80 wt.% of oligomers were mixed with 20 wt.% of SR506. To this mixture was added 1 wt.% of 2E4MZ (based on the total weight of oligomers + SR506).

**Table 6**

| **Thermal Cure** | | |
|---|---|---|
| **Composition:** 80 wt.% oligomer + 20 wt.% SR506 - then 1 wt.% of 2E4MZ | | |
| | Oligomer C | Reference oligomer |
| Tensile strength (Mpa) | 20.05 | 43.33 |
| Tensile modulus | 6,525 | 2,037 |
| Elongation at break (%) | 0.296 | 2.095 |

As demonstrated above, oligomer C presents both photo and thermal reactivities which makes it well-suited for dual curing. In particular, the combination of the ethylenic unsaturation and the epoxy groups provides synergistic performance properties to oligomer C, or any oligomer incorporating such combined functionalities. The measurement of mechanical properties confirms that oligomer C is flexible, not a rigid hard material, due to the presence of flexible segments within its structure. Oligomer C not only presents an excellent photo and thermal reactivity when exposed to UV and/or thermal curing, but also presents excellent storage stability. It is well-suited to be mixed with curing agents as one pot formulation.

## Claims

1. A dual curable oligomer, comprising:
a) a segment comprising at least one ethylenic unsaturation;
b) a segment comprising at least one epoxy group;
c) a segment comprising at least one urethane bond;
wherein segments a) and b) are connected to one another by segment c).

2. The oligomer of claim 1, wherein segment a) has the structure of Formula (A1) or (A2): 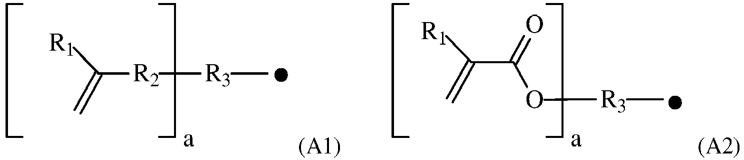 wherein:
- a is at least 1;
- each R₁ is independently H or CH₃;
- each R₂ is independently selected from direct bond, *-C(=O)-O-, *-C(=O)-NH-, -O- and ^{∗}-CH₂-O-, the * representing the point of attachment to the carbon-carbon double bond;
- R₃ is a (a+1)valent linker; and
- the symbol • represents the point of attachment to segment c).

3. The oligomer of claim 1 or 2, wherein segment b) has the structure of Formula (B1): 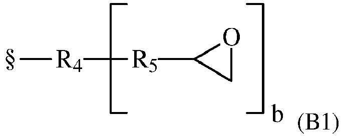 wherein:
- b is at least 1;
- R₄ is a (b+1)valent linker;
- each R₅ is independently selected from direct bond, -O-CH₂-# and -C(=O)-O-CH₂-#, preferably -O-CH₂-#;
- the symbol # represents the point of attachment to the epoxide ring; and
- the symbol § represents the point of attachment to segment c).

4. The oligomer of any one of claims 1 to 3, wherein segment b) has the structure of any one of Formula (B2), (B3), (B4) or (B5): 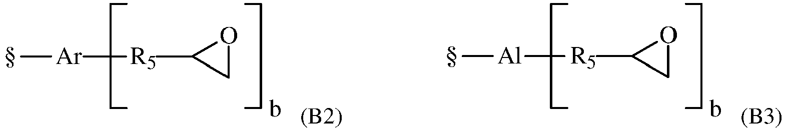 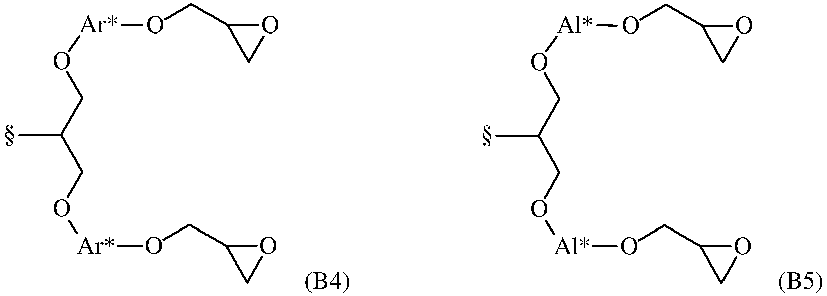 wherein:
- R₅, b and symbol § are as defined in claim 3;
- Ar is a (b+1)valent aromatic linker;
- Al is a (b+1)valent aliphatic linker;
- Ar* is a divalent aromatic linker; and
- Al* is a divalent aliphatic linker.

5. The oligomer of any one of claims 1 to 4, wherein segment c) has the structure of Formula (C1): 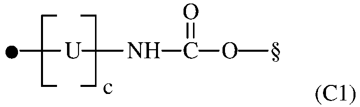 wherein:
- c is 0 or 1;
- U corresponds to Formula (U1) or (U2): 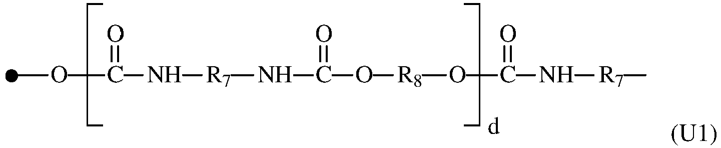 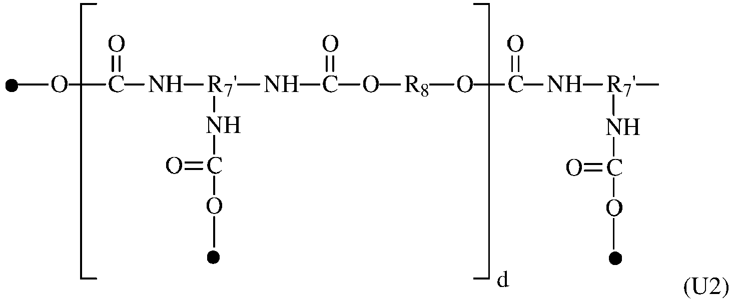 wherein:
- each R₇ is independently the residue of a diisocyanate;
- each R₇' is independently the residue of a triisocyanate;
- each R₈ is independently the residue of a diol;
- each d is independently 0 or an integer from 1 to 10;
- the symbol • represents a point of attachment to a segment a);
- the symbol § represents the point of attachment to segment b).

6. The oligomer of any one of claims 1 to 5, wherein it has the structure of any one of Formula (I), (II) or (III): 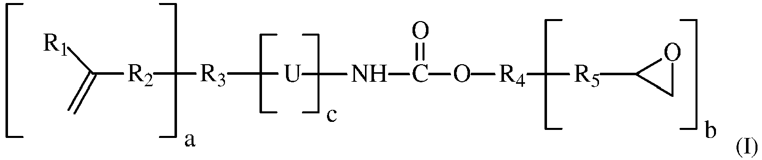 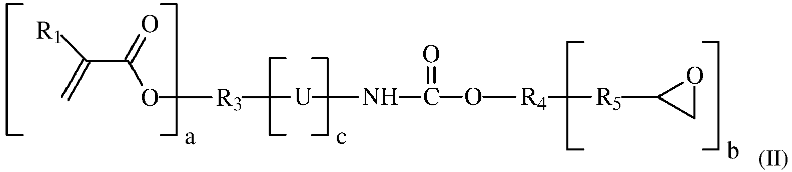 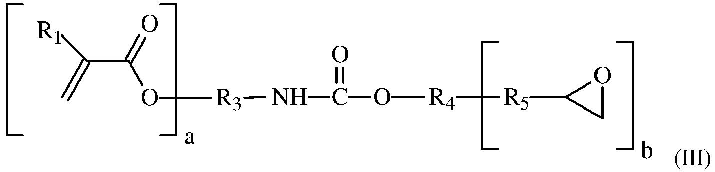 wherein a, b, c, R₁, R₂, R₃, R₄, R₅ and U are as defined in any one of claims 2 to 5.

7. The oligomer of claim 6, wherein it has the structure of any one of Formula (IIIa), (IIIb), (IIIc) or (IIId): 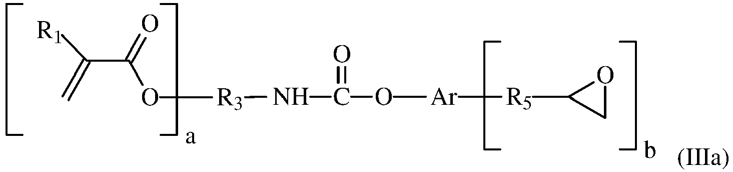 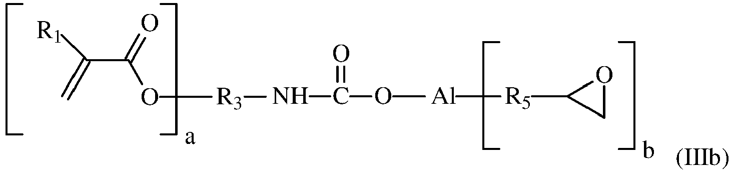 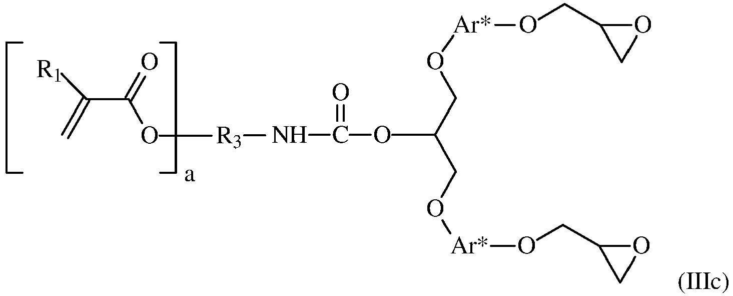 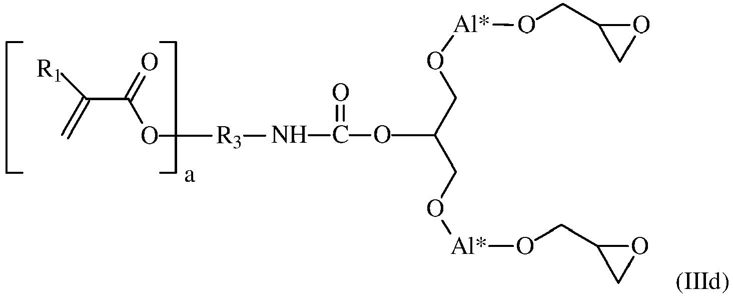 wherein a, b, R₁, R₃, R₅, Ar, Al, Ar^{∗} and Al^{∗} are as defined in any one of claims 2 to 5.

8. The oligomer of claim 6, wherein it has the structure of Formula (IV) or (V): 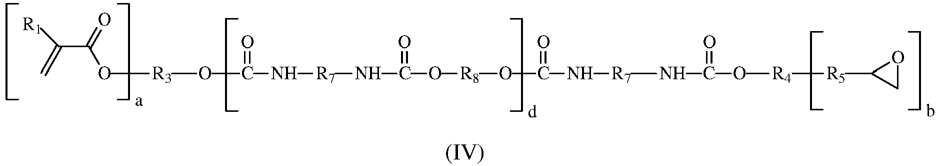 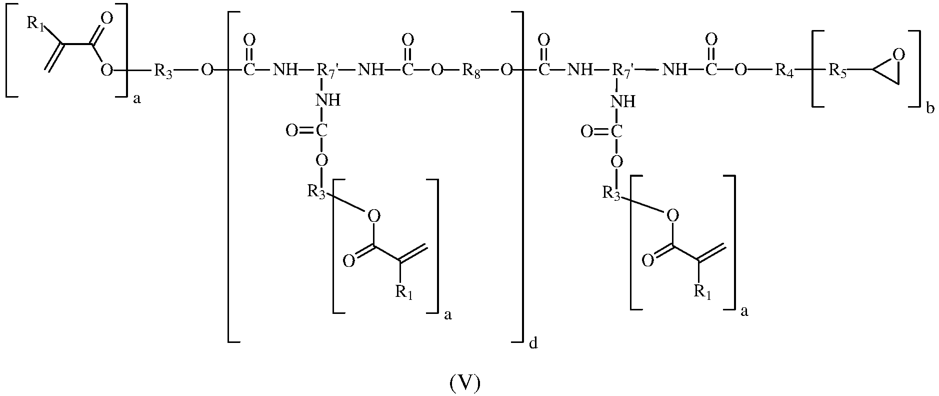 wherein a, b, d, R₁, R₃, R₄, R₅, R₇ and R₈ are as defined in any one of claims 2 to 5.

9. The oligomer of claim 8, wherein it has the structure of any one of Formula (IVa), (IVb), (IVc) or (IVd): 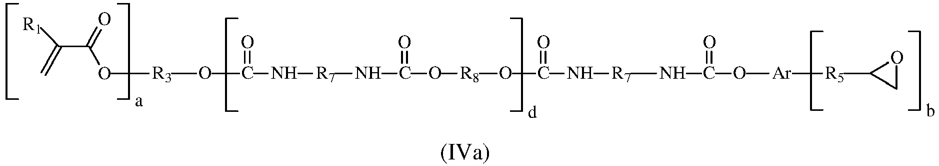 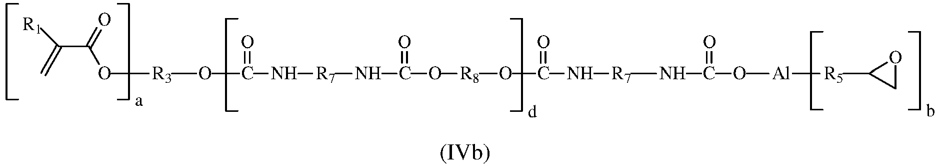 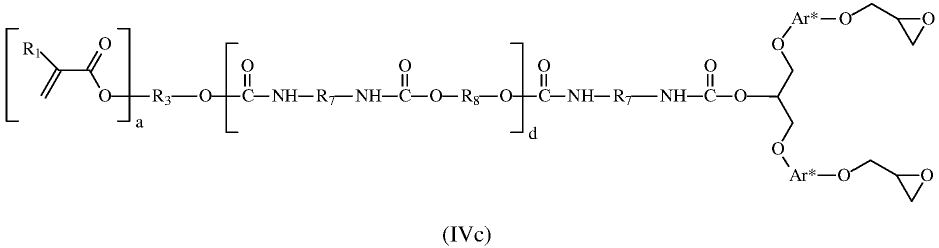 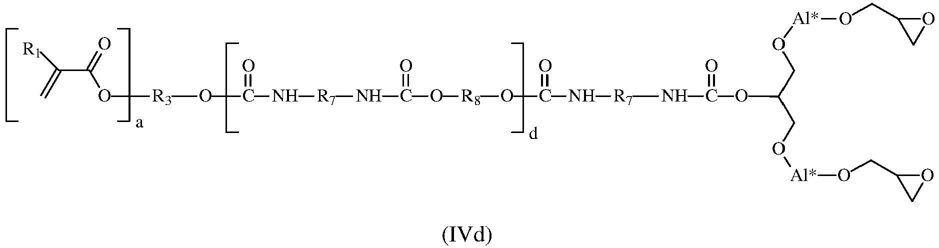 wherein a, b, d, R₁, R₃, R₅, R₇, R₈, Ar, Al, Ar^{∗} and Al^{∗} are as defined in any one of claims 2 to 5.

10. The oligomer of claim 8, wherein it has the structure of Formula (IVe): 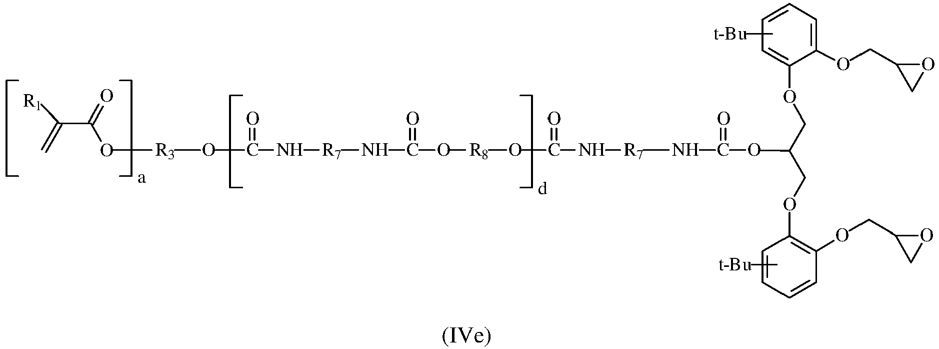 wherein a, d, R₁, R₃, R₇, R₈ are as defined in any one of claims 2 to 5 and t-Bu is tert-butyl.

11. A method for preparing the dual curable oligomer of any one of claims 1-10, comprising the step of:
- reacting an ethylenically unsaturated monoisocyanate component and an epoxy monoalcohol component; or
- reacting an ethylenically unsaturated monoalcohol component, a polyisocyanate component, an epoxy monoalcohol component and optionally a diol component.

12. The method of claim 11, comprising the step of reacting an ethylenically unsaturated monoisocyanate component comprising at least one compound having the structure of Formula (A) with an epoxy monoalcohol component comprising at least one compound having the structure of Formula (B): 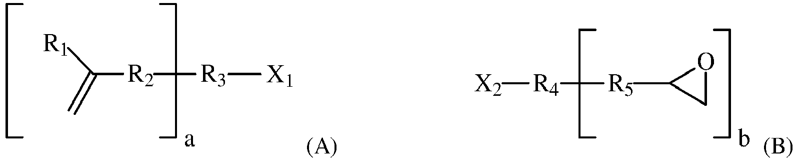 wherein:
- a, b, R₁, R₂, R₃ R₄, and R₅ are as defined in any one of claims 2 to 5;
- X₁ is an NCO group or a blocked NCO group;
- X₂ is a hydroxy group, preferably a secondary hydroxy group.

13. The method of claim 11, comprising the step of reacting an ethylenically unsaturated monoalcohol component comprising at least one compound having the structure of formula (D), a polyisocyanate component comprising at least one compound having the structure of formula (E1) or (E2), an epoxy monoalcohol component comprising at least one compound having the structure of Formula (B) and optionally a diol component comprising at least one compound having the structure of formula (F): 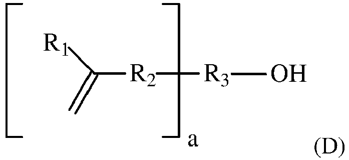 X₃-R₇-X₃ (E1) 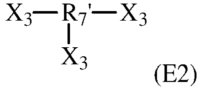 HO-R₈-OH (F) 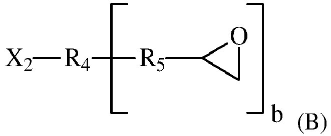 wherein:
- a, b, R₁, R₂, R₃ R₄, R₅, R₇, R₇' and R₈ are as defined in any one of claims 2 to 5;
- each X₃ is independently an NCO group or a blocked NCO group;
- X₂ is a hydroxy group, preferably a secondary hydroxy group.

14. A curable composition comprising at least one dual curable oligomer according to any one of claims 1-10.

15. Use of the curable composition of claim 14 as an adhesive, an ink, a mask for printing, a coloring system, a 3D printing resin, a sealant or a coating.
